# EUROPEAN PATENT APPLICATION

(11) **EP 4 845 211 A1**
(43) Date of publication of application: **25.11.2026**
(21) Application number: 25751381.2
(22) Date of filing: 26.01.2025
(51) Int. Cl.: H04W 28/02

(54) **COMMUNICATION METHOD AND COMMUNICATION APPARATUS**

(30) Priority: 07.02.2024 CN 202410175999
(71) Applicant: Huawei Technologies Co., Ltd., Shenzhen, Guangdong 518129 (CN)
(72) Inventor: ZHANG, Jian, Shenzhen, Guangdong 518129 (CN); YANG, Yanmei, Shenzhen, Guangdong 518129 (CN)
(74) Representative: Huawei European IPR
(86) International application number: PCT/CN2025/075048
(87) International publication number: WO 2025/167779

(57) **Abstract**

This application provides a communication method and a communication apparatus. In this solution, transmission of a first service flow and/or a second service flow is adjusted, so that a synchronization delay requirement is met between the first service flow and the second service flow, ensuring user experience of a service application. In addition, a transmission delay is an end- to-end delay between a transmission server and a transmission client, and the transmission delay can more accurately reflect whether different service flows meet a synchronization delay requirement, better meeting user requirements and improving user experience.

## Description

### CROSS-REFERENCE TO RELATED APPLICATIONS

This application claims priority to Chinese Patent Application No. 202410175999.7, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

Currently, the 3rd Generation Partnership Project (3rd generation partnership project, 3GPP) has defined multi-modal service scenarios. A multi-modal service scenario refers to a service scenario in which data of multiple service flows needs to be transmitted synchronously. Examples of the multi-modal service scenario includes a virtual reality (Virtual Reality, VR) scenario, an augmented reality (augmented reality, AR) scenario, an extended reality (extended reality, XR) scenario, a game scenario, and the like. Input or output of a multi-modal application includes multiple service flows, where the service flows may include at least two of video data, audio data, sensor data (such as ambient brightness and ambient temperature), haptic data (such as joystick vibration in a game scenario), or the like.

During transmission of multi-modal service flows, a difference between times at which data of different service flows arrives at an application client may exceed a synchronization delay threshold, severely affecting user experience of a multi-modal application, for example, causing service freezing or user dizziness. Therefore, how to ensure that transmission of multiple service flows in multi-modal service scenarios meets synchronization delay requirements is a problem to be resolved currently.

### SUMMARY

This application provides a communication method and a communication apparatus, to ensure that transmission of multiple service flows meets a synchronization delay requirement.

According to a first aspect, an embodiment of this application provides a communication method. The method may be performed by a communication device or a module (for example, a chip) used in a communication device. The communication device may be a transmission client or a transmission server. The method includes: determining a first transmission delay of a first service flow and a second transmission delay of a second service flow, where the first transmission delay is a delay of transmitting a first data packet of the first service flow from a transmission server to a transmission client, the second transmission delay is a delay of transmitting a second data packet of the second service flow from a transmission server to a transmission client, and the first service flow and the second service flow are associated data flows; and determining, based on the first transmission delay, the second transmission delay, and a synchronization delay requirement, a QoS requirement of the first service flow to be sent to a core network element and/or a QoS requirement of the second service flow to be sent to a core network element; or determining packet sending time information of the first service flow and/or packet sending time information of the second service flow, where the synchronization delay requirement indicates a synchronization delay relationship between the first service flow and the second service flow.

In the foregoing solution, transmission of the first service flow and/or the second service flow is adjusted, so that the synchronization delay requirement is met between the first service flow and the second service flow, ensuring user experience of a service application. In addition, the transmission delay is an end-to-end delay between the transmission server and the transmission client, and the transmission delay can more accurately reflect whether different service flows meet a synchronization delay requirement, better meeting user requirements and improving user experience.

In a possible implementation, the communication device is the transmission server; and the method further includes: recording a first sending time of the first data packet and a second sending time of the second data packet, where the first sending time is a time at which the transmission server sends the first data packet to the transmission client, and the second sending time is a time at which the transmission server sends the second data packet to the transmission client; sending the first data packet and the second data packet to the transmission client; receiving, from the transmission client, a first reception time of the first data packet and a second reception time of the second data packet, where the first reception time is a time at which the transmission client receives the first data packet, and the second reception time is a time at which the transmission client receives the second data packet; and determining the first transmission delay based on the first sending time and the first reception time, and determining the second transmission delay based on the second sending time and the second reception time.

In a possible implementation, the method further includes: determining first association information and second association information, where the first association information indicates an association among multiple service flows between the transmission server and an application server, the multiple service flows between the transmission server and the application server include the first service flow and the second service flow, the second association information indicates an association among multiple service flows between the transmission server and the transmission client, and the multiple service flows between the transmission server and the transmission client include the first service flow and the second service flow; and establishing a mapping relationship between the first association information and the second association information.

In the foregoing solution, multiple service flows between the transmission server and the application server can be associated by using the first association information. Subsequently, the transmission server can identify, based on the first association information, which service flows are associated service flows, so as to accurately identify associated service flows. In addition, multiple service flows between the transmission server and the transmission client can be associated by using the second association information. Subsequently, the transmission server sends the second association information to the transmission client, and the transmission client can identify, based on the second association information, which service flows in service flows requested by the application client are associated service flows, so as to accurately identify associated service flows.

In a possible implementation, the method further includes: sending the second association information and/or a reception time feedback indication to the transmission client, where the reception time feedback indication indicates to record and feed back a reception time of a data packet of the first service flow and a reception time of a data packet of the second service flow.

In a possible implementation, the first association information includes a first interface address corresponding to the first service flow, a first interface address corresponding to the second service flow, and a first association indication, and the first association indication indicates that there is an association between the first service flow and the second service flow; or the first association information includes a correspondence between a first interface address corresponding to the first service flow and a first association identifier, and includes a correspondence between a first interface address corresponding to the second service flow and the first association identifier. The first interface address corresponding to the first service flow includes an address of the first service flow on an application server side and/or an address of the first service flow on a transmission server side; and the first interface address corresponding to the second service flow includes an address of the second service flow on an application server side and/or an address of the second service flow on a transmission server side.

In a possible implementation, the second association information includes a second interface address corresponding to the first service flow, a second interface address corresponding to the second service flow, and a second association indication, and the second association indication indicates that there is an association between the first service flow and the second service flow; or the second association information includes a correspondence between a second interface address corresponding to the first service flow and a second association identifier, and includes a correspondence between a second interface address corresponding to the second service flow and the second association identifier. The second interface address corresponding to the first service flow includes an address of the first service flow on a transmission client side and/or an address of the first service flow on a transmission server side; and the second interface address corresponding to the second service flow includes an address of the second service flow on a transmission client and/or an address of the second service flow on a transmission server side.

In a possible implementation, the method further includes: sending a request message to the core network element, where the request message includes the QoS requirement of the first service flow and/or the QoS requirement of the second service flow, and the request message is used to request to perform QoS guarantee on the first service flow based on the QoS requirement of the first service flow, and/or perform QoS guarantee on the second service flow based on the QoS requirement of the second service flow.

In the foregoing solution, after determining the QoS requirement of the first service flow and/or the QoS requirement of the second service flow, the transmission server notifies the core network element to adjust the transmission delay of the first service flow based on the QoS requirement of the first service flow, and/or adjust the transmission delay of the second service flow based on the QoS requirement of the second service flow, so that the synchronization delay relationship is satisfied between the first service flow and the second service flow after the adjustment, ensuring user experience.

In a possible implementation, when the request message includes the QoS requirement of the first service flow, the request message further includes description information of the first service flow; or when the request message includes the QoS requirement of the second service flow, the request message further includes description information of the second service flow; or when the request message includes the QoS requirement of the first service flow and the QoS requirement of the second service flow, the request message further includes description information of the first service flow and description information of the second service flow. The description information of the first service flow is a second interface address corresponding to the first service flow, and the second interface address corresponding to the first service flow includes an address of the first service flow on a transmission client side and/or an address of the first service flow on a transmission server side. The description information of the second service flow is a second interface address corresponding to the second service flow, and the second interface address corresponding to the second service flow includes an address of the second service flow on a transmission client and/or an address of the second service flow on a transmission server side.

In a possible implementation, the packet sending time information of the first service flow indicates a manner of adjusting a packet sending time of a data packet of the first service flow, and the packet sending time information of the second service flow indicates a manner of adjusting a packet sending time of a data packet of the second service flow.

In a possible implementation, the method further includes: sending a first message to an application server, where the first message includes the packet sending time information of the first service flow and/or the packet sending time information of the second service flow, and the first message is used to notify the application server to adjust the packet sending time of the data packet of the first service flow based on the packet sending time information of the first service flow, and/or adjust the packet sending time of the data packet of the second service flow based on the packet sending time information of the second service flow.

In the foregoing solution, after determining the packet sending time information of the first service flow and/or the packet sending time information of the second service flow, the transmission server notifies the application server to send the data packet of the first service flow in advance based on the packet sending time information of the first service flow and/or send the data packet of the second service flow in advance based on the packet sending time information of the second service flow, so that the synchronization delay relationship is satisfied between the first service flow and the second service flow after the adjustment, ensuring user experience.

In a possible implementation, when the first message includes the packet sending time information of the first service flow, the request message further includes description information of the first service flow, where the description information of the first service flow is a first interface address corresponding to the first service flow; or when the first message includes the packet sending time information of the second service flow, the request message further includes description information of the second service flow, where the description information of the second service flow is a first interface address corresponding to the second service flow; or when the first message includes the packet sending time information of the first service flow and the packet sending time information of the second service flow, the request message further includes description information of the first service flow and description information of the second service flow, where the description information of the first service flow is a first interface address corresponding to the first service flow, and the description information of the second service flow is a first interface address corresponding to the second service flow. The first interface address corresponding to the first service flow includes an address of the first service flow on a transmission server side and/or an address of the first service flow on an application server side; and the first interface address corresponding to the second service flow includes an address of the second service flow at a transmission server and/or an address of the second service flow on an application server side.

In a possible implementation, the method further includes: adjusting the packet sending time of the data packet of the first service flow based on the packet sending time information of the first service flow; and/or adjusting the packet sending time of the data packet of the second service flow based on the packet sending time information of the second service flow.

In the foregoing solution, after determining the packet sending time information of the first service flow and/or the packet sending time information of the second service flow, the transmission server sends the data packet of the first service flow in advance based on the packet sending time information of the first service flow and/or sends the data packet of the second service flow in advance based on the packet sending time information of the second service flow, so that the synchronization delay relationship is satisfied between the first service flow and the second service flow after the adjustment, ensuring user experience.

In a possible implementation, the packet sending time information of the first service flow includes a buffer time amount of the first service flow, and the buffer time amount of the first service flow indicates a buffer time of a data packet of the first service flow; and the packet sending time information of the second service flow includes a buffer time amount of the second service flow, and the buffer time amount of the second service flow indicates a buffer time of a data packet of the second service flow.

In a possible implementation, the method further includes: sending a second message to the transmission client, where the second message includes the buffer time amount of the first service flow and/or the buffer time amount of the second service flow, and the second message is used to notify the transmission client to buffer the data packet of the first service flow based on the buffer time amount of the first service flow, and/or buffer the data packet of the second service flow based on the buffer time amount of the second service flow.

In the foregoing solution, after determining the buffer time amount of the first service flow and/or the buffer time amount of the second service flow, the transmission server notifies the transmission client to postpone sending the data packet of the first service flow based on the buffer time amount of the first service flow and/or postpone sending the data packet of the second service flow based on the buffer time amount of the second service flow, so that the synchronization delay relationship is satisfied between the first service flow and the second service flow after the adjustment, ensuring user experience.

In a possible implementation, when the second message includes the buffer time amount of the first service flow, the request message further includes description information of the first service flow; or when the second message includes the buffer time amount of the second service flow, the request message further includes description information of the second service flow; or when the second message includes the buffer time amount of the first service flow and the buffer time amount of the second service flow, the request message further includes description information of the first service flow and description information of the second service flow. The description information of the first service flow is a second interface address corresponding to the first service flow, or a first flow identifier corresponding to the first service flow between the transmission server and the transmission client, and the second interface address corresponding to the first service flow includes an address of the first service flow on a transmission client side and/or an address of the first service flow on a transmission server side. The description information of the second service flow is a second interface address corresponding to the second service flow, or a second flow identifier corresponding to the second service flow between the transmission server and the transmission client; and the second interface address corresponding to the second service flow includes an address of the second service flow on a transmission client and/or an address of the second service flow on a transmission server side. In a possible implementation, the method further includes: buffering the data packet of the first service flow based on the buffer time amount of the first service flow; and/or buffering the data packet of the second service flow based on the buffer time amount of the second service flow.

In the foregoing solution, after determining the buffer time amount of the first service flow and/or the buffer time amount of the second service flow, the transmission server postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

In a possible implementation, the communication device is the transmission client; and the method further includes: receiving the first data packet and the second data packet from the transmission server; obtaining, from the first data packet, a first sending time of the first data packet and obtaining, from the second data packet, a second sending time of the second data packet, where the first sending time is a time at which the transmission server sends the first data packet to the transmission client, and the second sending time is a time at which the transmission server sends the second data packet to the transmission client; recording a first reception time of the first data packet and a second reception time of the second data packet, where the first reception time is a time at which the transmission client receives the first data packet, and the second reception time is a time at which the transmission client receives the second data packet; and determining the first transmission delay based on the first sending time and the first reception time, and determining the second transmission delay based on the second sending time and the second reception time.

In a possible implementation, the method further includes: receiving a reception time recording indication from the transmission server, where the reception time recording indication indicates to record a reception time of a data packet of the first service flow and a reception time of a data packet of the second service flow.

In a possible implementation, the method further includes: receiving second association information from the transmission server, where the second association information indicates an association among multiple service flows between the transmission server and the transmission client, and the multiple service flows between the transmission server and the transmission client include the first service flow and the second service flow.

In a possible implementation, the second association information includes a second interface address corresponding to the first service flow, a second interface address corresponding to the second service flow, and a second association indication, and the second association indication indicates that there is an association between the first service flow and the second service flow; or the second association information includes a correspondence between a second interface address corresponding to the first service flow and a second association identifier, and includes a correspondence between a second interface address corresponding to the second service flow and the second association identifier. The second interface address corresponding to the first service flow includes an address of the first service flow on a transmission client side and/or an address of the first service flow on a transmission server side; and the second interface address corresponding to the second service flow includes an address of the second service flow on a transmission client and/or an address of the second service flow on a transmission server side.

In a possible implementation, the method further includes: sending the QoS requirement of the first service flow and/or the QoS requirement of the second service flow to the transmission server.

In the foregoing solution, after determining the QoS requirement of the first service flow and/or the QoS requirement of the second service flow, the transmission client sends the QoS requirement of the first service flow and/or the QoS requirement of the second service flow to the transmission server, and then the transmission server notifies the core network element to adjust the transmission delay of the first service flow based on the QoS requirement of the first service flow, and/or adjust the transmission delay of the second service flow based on the QoS requirement of the second service flow, so that the synchronization delay relationship is satisfied between the first service flow and the second service flow after the adjustment, ensuring user experience.

In a possible implementation, the packet sending time information of the first service flow indicates a manner of adjusting a packet sending time of a data packet of the first service flow, and the packet sending time information of the second service flow indicates a manner of adjusting a packet sending time of a data packet of the second service flow.

In a possible implementation, the method further includes: sending the packet sending time information of the first service flow and/or the packet sending time information of the second service flow to the transmission server.

In the foregoing solution, after determining the packet sending time information of the first service flow and/or the packet sending time information of the second service flow, the transmission client sends the packet sending time information of the first service flow and/or the packet sending time information of the second service flow to the transmission server, and the transmission server may notify the application server to send the data packet of the first service flow in advance based on the packet sending time information of the first service flow and/or send the data packet of the second service flow in advance based on the packet sending time information of the second service flow, or the transmission server sends the data packet of the first service flow in advance based on the packet sending time information of the first service flow and/or sends the data packet of the second service flow in advance based on the packet sending time information of the second service flow, so that the synchronization delay relationship is satisfied between the first service flow and the second service flow after the adjustment, ensuring user experience.

In a possible implementation, the packet sending time information of the first service flow includes a buffer time amount of the first service flow, and the buffer time amount of the first service flow indicates a buffer time of a data packet of the first service flow; and the packet sending time information of the second service flow includes a buffer time amount of the second service flow, and the buffer time amount of the second service flow indicates a buffer time of a data packet of the second service flow.

In a possible implementation, the method further includes: sending the buffer time amount of the first service flow and/or the buffer time amount of the second service flow to the transmission server.

In the foregoing solution, after determining the buffer time amount of the first service flow and/or the buffer time amount of the second service flow, the transmission client sends the buffer time amount of the first service flow and/or the buffer time amount of the second service flow to the transmission server, and the transmission server postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

In a possible implementation, the method further includes: buffering the data packet of the first service flow based on the buffer time amount of the first service flow; and/or buffering the data packet of the second service flow based on the buffer time amount of the second service flow.

In the foregoing solution, after determining the buffer time amount of the first service flow and/or the buffer time amount of the second service flow, the transmission client postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

According to a second aspect, an embodiment of this application provides a communication method. The method may be performed by a communication device or a module (for example, a chip) used in a communication device. The communication device may be a transmission client or a transmission server. The method includes: determining a first reception time of a first service flow and a second reception time of a second service flow, where the first reception time is a time at which a transmission client receives a first data packet of the first service flow from a transmission server, the second reception time is a time at which the transmission client receives a second data packet of the second service flow from the transmission server, and the first service flow and the second service flow are associated data flows; and determining, based on the first reception time, the second reception time, and a synchronization delay requirement, a QoS requirement of the first service flow to be sent to a core network element and/or a QoS requirement of the second service flow to be sent to a core network element; or determining packet sending time information of the first service flow and/or packet sending time information of the second service flow, where the synchronization delay requirement indicates a synchronization delay relationship between the first service flow and the second service flow.

In the foregoing solution, transmission of the first service flow and/or the second service flow is adjusted, so that the synchronization delay requirement is met between the first service flow and the second service flow, ensuring user experience of a service application.

In a possible implementation, the communication device is the transmission server; and the method further includes: sending the first data packet and the second data packet to the transmission client; and receiving, from the transmission client, the first reception time of the first data packet and the second reception time of the second data packet.

In a possible implementation, the method further includes: determining first association information and second association information, where the first association information indicates an association among multiple service flows between the transmission server and an application server, the multiple service flows between the transmission server and the application server include the first service flow and the second service flow, the second association information indicates an association among multiple service flows between the transmission server and the transmission client, and the multiple service flows between the transmission server and the transmission client include the first service flow and the second service flow; and establishing a mapping relationship between the first association information and the second association information.

In the foregoing solution, multiple service flows between the transmission server and the application server can be associated by using the first association information. Subsequently, the transmission server can identify, based on the first association information, which service flows are associated service flows, so as to accurately identify associated service flows. In addition, multiple service flows between the transmission server and the transmission client can be associated by using the second association information. Subsequently, the transmission server sends the second association information to the transmission client, and the transmission client can identify, based on the second association information, which service flows in service flows requested by the application client are associated service flows, so as to accurately identify associated service flows.

In a possible implementation, the method further includes: sending the second association information and/or a reception time feedback indication to the transmission client, where the reception time feedback indication indicates to record and feed back a reception time of a data packet of the first service flow and a reception time of a data packet of the second service flow.

In a possible implementation, the first association information includes a first interface address corresponding to the first service flow, a first interface address corresponding to the second service flow, and a first association indication, and the first association indication indicates that there is an association between the first service flow and the second service flow; or the first association information includes a correspondence between a first interface address corresponding to the first service flow and a first association identifier, and includes a correspondence between a first interface address corresponding to the second service flow and the first association identifier. The first interface address corresponding to the first service flow includes an address of the first service flow on an application server side and/or an address of the first service flow on a transmission server side; and the first interface address corresponding to the second service flow includes an address of the second service flow on an application server side and/or an address of the second service flow on a transmission server side.

In a possible implementation, the second association information includes a second interface address corresponding to the first service flow, a second interface address corresponding to the second service flow, and a second association indication, and the second association indication indicates that there is an association between the first service flow and the second service flow; or the second association information includes a correspondence between a second interface address corresponding to the first service flow and a second association identifier, and includes a correspondence between a second interface address corresponding to the second service flow and the second association identifier. The second interface address corresponding to the first service flow includes an address of the first service flow on a transmission client side and/or an address of the first service flow on a transmission server side; and the second interface address corresponding to the second service flow includes an address of the second service flow on a transmission client and/or an address of the second service flow on a transmission server side.

In a possible implementation, the method further includes: sending a request message to the core network element, where the request message includes the QoS requirement of the first service flow and/or the QoS requirement of the second service flow, and the request message is used to request to perform QoS guarantee on the first service flow based on the QoS requirement of the first service flow, and/or perform QoS guarantee on the second service flow based on the QoS requirement of the second service flow.

In the foregoing solution, after determining the QoS requirement of the first service flow and/or the QoS requirement of the second service flow, the transmission server notifies the core network element to adjust the transmission delay of the first service flow based on the QoS requirement of the first service flow, and/or adjust the transmission delay of the second service flow based on the QoS requirement of the second service flow, so that the synchronization delay relationship is satisfied between the first service flow and the second service flow after the adjustment, ensuring user experience.

In a possible implementation, when the request message includes the QoS requirement of the first service flow, the request message further includes description information of the first service flow; or when the request message includes the QoS requirement of the second service flow, the request message further includes description information of the second service flow; or when the request message includes the QoS requirement of the first service flow and the QoS requirement of the second service flow, the request message further includes description information of the first service flow and description information of the second service flow. The description information of the first service flow is a second interface address corresponding to the first service flow, and the second interface address corresponding to the first service flow includes an address of the first service flow on a transmission client side and/or an address of the first service flow on a transmission server side. The description information of the second service flow is a second interface address corresponding to the second service flow, and the second interface address corresponding to the second service flow includes an address of the second service flow on a transmission client and/or an address of the second service flow on a transmission server side.

In a possible implementation, the packet sending time information of the first service flow indicates a manner of adjusting a packet sending time of a data packet of the first service flow, and the packet sending time information of the second service flow indicates a manner of adjusting a packet sending time of a data packet of the second service flow.

In a possible implementation, the method further includes: sending a first message to an application server, where the first message includes the packet sending time information of the first service flow and/or the packet sending time information of the second service flow, and the first message is used to notify the application server to adjust the packet sending time of the data packet of the first service flow based on the packet sending time information of the first service flow, and/or adjust the packet sending time of the data packet of the second service flow based on the packet sending time information of the second service flow.

In the foregoing solution, after determining the packet sending time information of the first service flow and/or the packet sending time information of the second service flow, the transmission server notifies the application server to send the data packet of the first service flow in advance based on the packet sending time information of the first service flow and/or send the data packet of the second service flow in advance based on the packet sending time information of the second service flow, so that the synchronization delay relationship is satisfied between the first service flow and the second service flow after the adjustment, ensuring user experience.

In a possible implementation, when the first message includes the packet sending time information of the first service flow, the request message further includes description information of the first service flow, where the description information of the first service flow is a first interface address corresponding to the first service flow; or when the first message includes the packet sending time information of the second service flow, the request message further includes description information of the second service flow, where the description information of the second service flow is a first interface address corresponding to the second service flow; or when the first message includes the packet sending time information of the first service flow and the packet sending time information of the second service flow, the request message further includes description information of the first service flow and description information of the second service flow, where the description information of the first service flow is a first interface address corresponding to the first service flow, and the description information of the second service flow is a first interface address corresponding to the second service flow. The first interface address corresponding to the first service flow includes an address of the first service flow on a transmission server side and/or an address of the first service flow on an application server side; and the first interface address corresponding to the second service flow includes an address of the second service flow at a transmission server and/or an address of the second service flow on an application server side.

In a possible implementation, the method further includes: adjusting the packet sending time of the data packet of the first service flow based on the packet sending time information of the first service flow; and/or adjusting the packet sending time of the data packet of the second service flow based on the packet sending time information of the second service flow.

In the foregoing solution, after determining the packet sending time information of the first service flow and/or the packet sending time information of the second service flow, the transmission server sends the data packet of the first service flow in advance based on the packet sending time information of the first service flow and/or sends the data packet of the second service flow in advance based on the packet sending time information of the second service flow, so that the synchronization delay relationship is satisfied between the first service flow and the second service flow after the adjustment, ensuring user experience.

In a possible implementation, the packet sending time information of the first service flow includes a buffer time amount of the first service flow, and the buffer time amount of the first service flow indicates a buffer time of a data packet of the first service flow; and the packet sending time information of the second service flow includes a buffer time amount of the second service flow, and the buffer time amount of the second service flow indicates a buffer time of a data packet of the second service flow.

In a possible implementation, the method further includes: sending a second message to the transmission client, where the second message includes the buffer time amount of the first service flow and/or the buffer time amount of the second service flow, and the second message is used to notify the transmission client to buffer the data packet of the first service flow based on the buffer time amount of the first service flow, and/or buffer the data packet of the second service flow based on the buffer time amount of the second service flow.

In the foregoing solution, after determining the buffer time amount of the first service flow and/or the buffer time amount of the second service flow, the transmission server notifies the transmission client to postpone sending the data packet of the first service flow based on the buffer time amount of the first service flow and/or postpone sending the data packet of the second service flow based on the buffer time amount of the second service flow, so that the synchronization delay relationship is satisfied between the first service flow and the second service flow after the adjustment, ensuring user experience.

In a possible implementation, when the second message includes the buffer time amount of the first service flow, the request message further includes description information of the first service flow; or when the second message includes the buffer time amount of the second service flow, the request message further includes description information of the second service flow; or when the second message includes the buffer time amount of the first service flow and the buffer time amount of the second service flow, the request message further includes description information of the first service flow and description information of the second service flow. The description information of the first service flow is a second interface address corresponding to the first service flow, or a first flow identifier corresponding to the first service flow between the transmission server and the transmission client, and the second interface address corresponding to the first service flow includes an address of the first service flow on a transmission client side and/or an address of the first service flow on a transmission server side. The description information of the second service flow is a second interface address corresponding to the second service flow, or a second flow identifier corresponding to the second service flow between the transmission server and the transmission client; and the second interface address corresponding to the second service flow includes an address of the second service flow on a transmission client and/or an address of the second service flow on a transmission server side.

In a possible implementation, the method further includes: buffering the data packet of the first service flow based on the buffer time amount of the first service flow; and/or buffering the data packet of the second service flow based on the buffer time amount of the second service flow.

In the foregoing solution, after determining the buffer time amount of the first service flow and/or the buffer time amount of the second service flow, the transmission server postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

In a possible implementation, the communication device is the transmission client; and the method further includes: receiving the first data packet and the second data packet from the transmission server; and recording the first reception time of the first data packet and the second reception time of the second data packet.

In a possible implementation, the method further includes: receiving a reception time recording indication from the transmission server, where the reception time recording indication indicates to record a reception time of a data packet of the first service flow and a reception time of a data packet of the second service flow.

In a possible implementation, the method further includes: receiving second association information from the transmission server, where the second association information indicates an association among multiple service flows between the transmission server and the transmission client, and the multiple service flows between the transmission server and the transmission client include the first service flow and the second service flow.

In a possible implementation, the second association information includes a second interface address corresponding to the first service flow, a second interface address corresponding to the second service flow, and a second association indication, and the second association indication indicates that there is an association between the first service flow and the second service flow; or the second association information includes a correspondence between a second interface address corresponding to the first service flow and a second association identifier, and includes a correspondence between a second interface address corresponding to the second service flow and the second association identifier. The second interface address corresponding to the first service flow includes an address of the first service flow on a transmission client side and/or an address of the first service flow on a transmission server side; and the second interface address corresponding to the second service flow includes an address of the second service flow on a transmission client and/or an address of the second service flow on a transmission server side.

In a possible implementation, the method further includes: sending the QoS requirement of the first service flow and/or the QoS requirement of the second service flow to the transmission server.

In the foregoing solution, after determining the QoS requirement of the first service flow and/or the QoS requirement of the second service flow, the transmission client sends the QoS requirement of the first service flow and/or the QoS requirement of the second service flow to the transmission server, and then the transmission server notifies the core network element to adjust the transmission delay of the first service flow based on the QoS requirement of the first service flow, and/or adjust the transmission delay of the second service flow based on the QoS requirement of the second service flow, so that the synchronization delay relationship is satisfied between the first service flow and the second service flow after the adjustment, ensuring user experience.

In a possible implementation, the packet sending time information of the first service flow indicates a manner of adjusting a packet sending time of a data packet of the first service flow, and the packet sending time information of the second service flow indicates a manner of adjusting a packet sending time of a data packet of the second service flow.

In a possible implementation, the method further includes: sending the packet sending time information of the first service flow and/or the packet sending time information of the second service flow to the transmission server.

In the foregoing solution, after determining the packet sending time information of the first service flow and/or the packet sending time information of the second service flow, the transmission client sends the packet sending time information of the first service flow and/or the packet sending time information of the second service flow to the transmission server, and the transmission server may notify the application server to send the data packet of the first service flow in advance based on the packet sending time information of the first service flow and/or send the data packet of the second service flow in advance based on the packet sending time information of the second service flow, or the transmission server sends the data packet of the first service flow in advance based on the packet sending time information of the first service flow and/or sends the data packet of the second service flow in advance based on the packet sending time information of the second service flow, so that the synchronization delay relationship is satisfied between the first service flow and the second service flow after the adjustment, ensuring user experience.

In a possible implementation, the packet sending time information of the first service flow includes a buffer time amount of the first service flow, and the buffer time amount of the first service flow indicates a buffer time of a data packet of the first service flow; and the packet sending time information of the second service flow includes a buffer time amount of the second service flow, and the buffer time amount of the second service flow indicates a buffer time of a data packet of the second service flow.

In a possible implementation, the method further includes: sending the buffer time amount of the first service flow and/or the buffer time amount of the second service flow to the transmission server.

In the foregoing solution, after determining the buffer time amount of the first service flow and/or the buffer time amount of the second service flow, the transmission client sends the buffer time amount of the first service flow and/or the buffer time amount of the second service flow to the transmission server, and the transmission server postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

In a possible implementation, the method further includes: buffering the data packet of the first service flow based on the buffer time amount of the first service flow; and/or buffering the data packet of the second service flow based on the buffer time amount of the second service flow.

In the foregoing solution, after determining the buffer time amount of the first service flow and/or the buffer time amount of the second service flow, the transmission client postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

According to a third aspect, an embodiment of this application provides a communication apparatus. The apparatus may be a communication device, or may be a module (for example, a chip) used in a communication device. The apparatus has a function of implementing any implementation according to the first aspect and the second aspect. The function may be implemented by hardware, or may be implemented by hardware executing corresponding software. The hardware or the software includes one or more modules corresponding to the function.

According to a fourth aspect, an embodiment of this application provides a communication apparatus, including a unit or a means (means) configured to perform steps in any implementation according to the first aspect and the second aspect.

According to a fifth aspect, an embodiment of this application provides a communication apparatus, including a processor and an interface circuit. The processor is configured to communicate with another apparatus through the interface circuit, and perform any implementation according to the first aspect and the second aspect. There are one or more processors.

According to a sixth aspect, an embodiment of this application provides a communication apparatus, including a processor. The processor is configured to invoke a program, to perform any implementation according to the first aspect and the second aspect. In addition, there may be one or more processors.

Optionally, the communication apparatus may further include a memory. The memory is coupled to the processor. The memory may be located inside the apparatus, or may be located outside the apparatus.

According to a seventh aspect, an embodiment of this application provides a communication apparatus, including a processor. When the apparatus runs, the processor executes computer instructions, to cause the apparatus to perform any implementation according to the first aspect and the second aspect.

Optionally, the communication apparatus may further include a memory, and the memory is configured to store the computer instructions.

According to an eighth aspect, an embodiment of this application further provides a computer program product. The computer program product includes a computer program or instructions, and when the computer program or the instructions are run by a communication apparatus, any implementation according to the first aspect and the second aspect is performed.

According to a ninth aspect, an embodiment of this application further provides a computer-readable storage medium. The computer-readable storage medium stores instructions. When the instructions are run on a communication apparatus, any implementation according to the first aspect and the second aspect is performed.

According to a tenth aspect, an embodiment of this application further provides a chip system, including a processor, configured to perform any implementation according to the first aspect and the second aspect.

### BRIEF DESCRIPTION OF DRAWINGS

FIG. 1 is a diagram of a 5G network architecture based on a service-based architecture;
FIG. 2 is an architecture diagram of a SEALDD service;
FIG. 3(a) is a schematic flowchart of a communication method according to an embodiment of this application;
FIG. 3(b) is a schematic flowchart of a communication method according to an embodiment of this application;
FIG. 4 to FIG. 12 are schematic flowcharts of communication methods according to embodiments of this application;
FIG. 13 is a diagram of a communication apparatus according to an embodiment of this application; and
FIG. 14 is a diagram of a communication apparatus according to an embodiment of this application.

### DESCRIPTION OF EMBODIMENTS

To cope with the challenges of wireless broadband technologies and maintain the leading edge of 3rd generation partnership project (3rd generation partnership project, 3GPP) networks, the 3GPP standard group has formulated a next generation mobile communication network system (next generation system) architecture, which is referred to as a 5th generation (5th generation, 5G) network architecture. The architecture not only supports access to a 5G core network (core network, CN) by using a radio access technology (for example, a long term evolution (long term evolution, LTE) access technology or a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

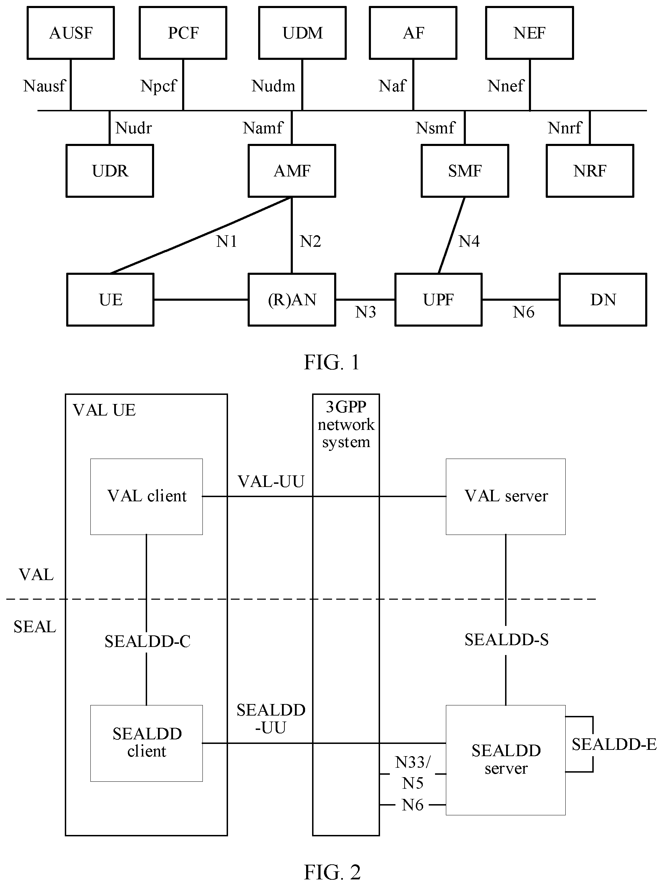

FIG. 1 is a diagram of a 5G network architecture based on a service-based architecture. The 5G network architecture shown in FIG. 1 may include an access network device and a core network device. A terminal device accesses a data network (data network, DN) via the access network device and the core network device. The core network device includes but is not limited to some or all of the following network elements: an authentication server function (authentication server function, AUSF) network element, a unified data management (unified data management, UDM) network element, a unified data repository (unified data repository, UDR) network element, a network repository function (network repository function, NRF) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, and a user plane function (user plane function, UPF) network element.

The terminal device may be user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart home, smart office, smart wearables, smart transportation, and smart city. The terminal device may be a mobile phone, a tablet computer, a computer having a wireless transceiver function, a wearable device, a vehicle, an urban air transportation means (like an uncrewed aerial vehicle or a helicopter), a ship, a robot, a mechanical arm, a smart home device, or the like. For ease of description, in this application, an example in which the UE is used as the terminal device is used for description, and UE that appears at any location subsequently may be replaced with the terminal device.

The access network device may be a radio access network device or a wireline access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, or a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wireline access network device includes but is not limited to: a wireline access gateway (wireline access gateway), a fixed-line phone network device, a switch, or a router. For ease of description, in this application, an example in which the base station is used as the access network device is used for description, and a base station that appears at any location subsequently may be replaced with the access network device.

The base station and the UE may be stationary or mobile. The base station and the UE may be deployed on land, including indoor, outdoor, handheld, or vehicle-mounted; may be deployed on water; or may be deployed on an airplane in the air, a balloon, and an artificial satellite. Application scenarios of the base station and the UE are not limited in embodiments of this application.

The AMF network element includes functions such as mobility management and access authentication/authorization. In addition, the AMF network element is further responsible for transferring a user policy between the UE and the PCF.

The SMF network element includes functions such as session management, execution of a control policy delivered by the PCF network element, UPF network element selection, and allocation of an internet protocol (internet protocol, IP) address of the UE.

The UPF network element includes functions such as user plane data forwarding, session/flow-level charging statistics, and bandwidth limitation.

The UDM network element includes functions such as subscription data management and user access authorization.

The UDR includes functions of storage and retrieval of subscription data, policy data, application data, and other types of data.

The NEF network element is configured to support exposure of capabilities and events.

The AF network element transfers a requirement of an application side on a network side, for example, a quality of service (quality of service, QoS) requirement or user status event subscription. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element includes policy control functions such as being responsible for charging at a session or service flow level, QoS bandwidth guarantee and mobility management, and UE policy decision. The PCF network element includes an access and mobility management policy control (access and mobility management policy control function, AM PCF) network element and a session management policy control function (session management PCF, SM PCF) network element. The AM PCF network element is configured to formulate an AM policy and a user policy for the UE. The AM PCF network element may also be referred to as a policy control network element that provides a service for the UE (PCF for a UE). The SM PCF network element is configured to formulate a session management policy (session management policy, SM policy) for a session. The SM PCF network element may also be referred to as a policy control network element that provides a service for a protocol data unit (protocol data unit, PDU) session (PCF for a PDU session).

The NRF network element may be configured to: provide a network element discovery function, and provide, based on a request of another network element, network element information corresponding to a network element type. The NRF network element further provides network element management services, for example, network element registration, update, and deregistration, and network element status subscription and push.

The AUSF network element is responsible for authenticating users, to determine whether a user or a device is allowed to access a network.

The DN is a network located outside an operator network. Multiple DNs may access the operator network, and multiple services may be deployed on the DN, to provide services such as data and/or voice for the UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server to obtain an instruction of the control server, transmit collected sensor data to the control server according to the instruction, and the like. For another example, the DN is an internal office network of a company, a mobile phone or a computer of an employee in the company may be the UE, and the mobile phone or the computer of the employee may access information, data resources, and the like on the internal office network of the company.

The Nausf, Npcf, Nudr, Nudm, Naf, Namf, Nsmf, Nnef, and Nnrf in FIG. 1 are service based interfaces (service based interface, SBI) provided by the AUSF, PCF, UDR, UDM, AF, AMF, SMF, NEF, and NRF, respectively, and are used to invoke corresponding service-based operations. N1, N2, N3, N4, and N6 are interface sequence numbers. Meanings of these interface sequence numbers are as follows:
(1) N1 is an interface between the AMF network element and the UE, and may be configured to transfer non-access stratum (non-access stratum, NAS) signaling (for example, including a QoS rule from the AMF network element) to the UE, and the like.
(2) N2 is an interface between the AMF network element and the base station, and may be configured to transfer radio bearer control information from a core network side to the base station, and the like.
(3) N3 is an interface between the base station and the UPF network element, and is mainly configured to transfer uplink and downlink user plane data between the base station and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transfer uplink and downlink user data flows between the UPF network element and the DN.

The network function network elements in the architecture shown in FIG. 1 are connected through service-based buses, and interact with each other through service based interfaces. An advantage of the service-based bus lies in enhancing network flexibility, openness, scalability, and intelligence, enabling support for diverse service scenarios and requirements. The service-based bus may be configured to transmit various types of data and signaling, for example, may be configured to transmit delay-sensitive real-time signaling (for example, signaling invoked by using a service based interface between network function network elements), may be configured to transmit delay-sensitive real-time data (for example, real-time artificial intelligence inference data), or may be configured to transmit non-real-time data (for example, offline artificial intelligence training data). In addition, when the data or the signaling is transmitted through the service-based bus, the data or the signaling is coupled together. That is, the service-based bus can be used for transmission of real-time signaling, real-time data, and non-real-time data at the same time.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by multiple devices, or may be a functional module in one device. This is not specifically limited in embodiments of this application.

FIG. 2 is an architecture diagram of a service enabler architecture layer data delivery (Service Enabler Architecture Layer Data Delivery, SEALDD) service. The service enabler architecture layer (SEAL) is also referred to as a SEALDD layer, a SEALDD enhancement layer, a data transmission enhancement layer, or the like, and is referred to as a SEALDD layer in the present invention for ease of description.

The SEALDD layer may provide a communication connection function and a data transmission function for a vertical application layer (Vertical Application Layer, VAL) application, for example, support transmission of data or signaling of an application/media.

The SEALDD layer includes a SEALDD client (SEALDD client) and a SEALDD server (SEALDD server). The SEALDD client is deployed on the UE in a form of software or a system component. The SEALDD server is deployed between a UPF network element and an application server (Application Server, AS) in a form of an independent or integrated server, or is deployed between a UPF network element and a VAL server (VAL server). In FIG. 2, an example in which the SEALDD server is deployed between a UPF network element and a VAL server is used for description. In addition, the SEALDD server may be deployed in a distributed manner based on a deployment status of the UPF network element and the VAL server, that is, multiple SEALDD servers are deployed.

The VAL client is deployed on the UE in a form of software or a system component. The VAL client communicates with the VAL server through a VAL-UU interface. The VAL client communicates with the SEALDD client through a SEALDD-C interface. User plane data is transmitted between the SEALDD client and the SEALDD server through a SEALDD-UU interface, and the SEALDD-UU interface is carried on a user plane session constructed by a 3GPP network system. The SEALDD server communicates with the VAL server through a SEALDD-S interface. Two SEALDD servers interact with each other through a SEALDD-E interface, for example, provide control plane context transmission and/or user plane data forwarding.

The SEALDD server may exchange a control plane message with a PCF network element through an N33/N5 interface. The N5 interface is an interface between an AF network element and a PCF network element, the N33 interface is an interface between an AF network element and an NEF network element, and the AF network element may indirectly communicate with the PCF network element via the NEF network element. In one aspect, the SEALDD server may serve as the AF network element, and send an AF request or perform notification subscription to the PCF network element through the N33/N5 interface. In another aspect, the SEALDD server may perform user plane data transmission with the UPF network element through an N6 interface.

For uplink data transmission, the VAL client transmits a data packet to the SEALDD client through the SEALDD-C interface. After encapsulating the data packet, the SEALDD client sends the encapsulated data packet to the SEALDD server through the SEALDD-UU interface. After parsing/decapsulating the data packet, the SEALDD server sends the parsed/decapsulated data packet to the VAL server through the SEALDD-S interface.

For downlink data transmission, the VAL server transmits a data packet to the SEALDD server through the SEALDD-S interface. After encapsulating the data packet, the SEALDD server sends the encapsulated data packet to the SEALDD client through the SEALDD-UU interface. After parsing/decapsulating the data packet, the SEALDD client sends the parsed/decapsulated data packet to the VAL client through the SEALDD-C interface.

Currently, the 3GPP defines a multi-modal service scenario, where the multi-modal service scenario refers to a service scenario in which data of multiple service flows needs to be transmitted synchronously. The multi-modal service scenario includes, for example, a virtual reality (Virtual Reality, VR) scenario, an augmented reality (augmented reality, AR) scenario, an extended reality (extended reality, XR) scenario, or a game scenario. Input or output of a multi-modal application includes multiple service flows, where the service flows may include at least two of video data, audio data, sensor data (such as ambient brightness and ambient temperature), haptic data (such as joystick vibration in a game scenario), or the like.

For a multi-modal service scenario, immersive experience of a user requires synchronized transmission of data of multiple data sources. Therefore, the 3GPP provides an example shown in Table 1 regarding a synchronization delay requirement between data sources.

**Table 1**

| Example | Composition of multi-modal service flows | Synchronization delay requirement |
|---|---|---|
| Example 1 | Audio-Haptic | Audio data may arrive no more than 50 ms later than haptic data |
| Example 2 | Video-Haptic | Video data may arrive no more than 15 ms later than haptic data |
| Example 3 | Audio-Haptic | Haptic data may arrive no more than 25 ms later than audio data |
| Example 4 | Video-Haptic | Haptic data may arrive no more than 50 ms later than video data |

According to Example 1, the synchronization delay requirement indicates that the audio data may arrive no more than 50 ms later than the haptic data. For example, a difference between a reception time at which the SEALDD client of the UE receives the audio data and a reception time at which the SEALDD client of the UE receives the haptic data is within a range of 0 ms to 50 ms. According to Example 2, the synchronization delay requirement indicates that the video data may arrive no more than 15 ms later than the haptic data. For example, a difference between a reception time at which the SEALDD client of the UE receives the video data and a reception time at which the SEALDD client of the UE receives the haptic data is within a range of 0 ms to 15 ms. According to Example 3, the synchronization delay requirement indicates that the haptic data may arrive no more than 25 ms later than the audio data. For example, a difference between a reception time at which the SEALDD client of the UE receives the haptic data and a reception time at which the SEALDD client of the UE receives the audio data is within a range of 0 ms to 25 ms. According to Example 4, the synchronization delay requirement indicates that the haptic data may arrive no more than 50 ms later than the video data. For example, a difference between a reception time at which the SEALDD client of the UE receives the haptic data and a reception time at which the SEALDD client of the UE receives the video data is within a range of 0 ms to 50 ms.

During transmission of multi-modal service flows, a difference between times at which data of different service flows arrives at the SEALDD client may exceed a synchronization delay threshold. For example, in Example 1, the audio data may arrive more than 50 ms later than the haptic data, severely affecting user experience of a multi-modal application, for example, causing service freezing or user dizziness. Therefore, how to ensure that transmission of multiple data sources in a multi-modal service scenario meets a synchronization delay requirement needs to be resolved currently.

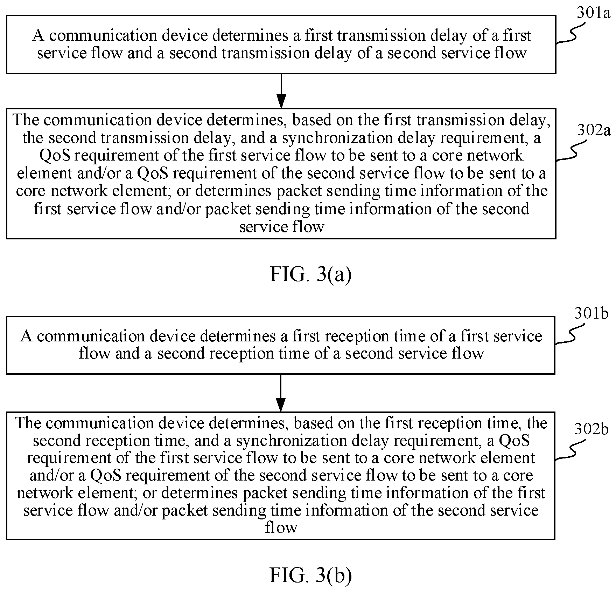

To address this issue, this application provides a corresponding solution. For details, refer to the following embodiments in FIG. 3(a) and FIG. 3(b). In the following embodiments in FIG. 3(a) and FIG. 3(b), the transmission server may be the SEALDD server described above or another server used for transmission, the transmission client may be the SEALDD client described above or another client used for transmission in the UE, the application server may be the VAL server described above or another server used for generating a service flow, and the application client may be the VAL client described above or another client used for transmission in the UE.

FIG. 3(a) is a schematic flowchart of a communication method according to an embodiment of this application. The method is performed by a communication device or a module (for example, a chip) used in a communication device. For ease of description, the following uses an example in which the communication device performs the method for description.

The method includes the following steps.

Step 301a: A communication device determines a first transmission delay of a first service flow and a second transmission delay of a second service flow.

The communication device is a transmission server or a transmission client.

The first transmission delay is a delay of transmitting a first data packet of the first service flow from a transmission server to a transmission client, and the second transmission delay is a delay of transmitting a second data packet of the second service flow from a transmission server to a transmission client.

The first service flow and the second service flow are associated data flows. The associated data flows herein refer to that the first service flow and the second service flow are service flows of a same service.

Optionally, the first data packet of the first service flow and the second data packet of the second service flow are associated data packets. In an implementation, the first data packet includes a first generation time of the first data packet, and the second data packet includes a second generation time of the second data packet. If the first generation time is the same as or close to the second generation time (for example, a difference is less than a threshold), the first data packet and the second data packet are associated data packets. The first generation time of the first data packet refers to a time at which an application server generates the first data packet. For example, the application server may include a real-time transport protocol (Real-time Transport Protocol, RTP) timestamp in the first data packet, where the RTP timestamp indicates the generation time of the first data packet. The second generation time of the second data packet refers to a time at which an application server generates the second data packet. For example, the application server may include an RTP timestamp in the second data packet, where the RTP timestamp indicates the generation time of the second data packet.

In an implementation, for example, measuring the transmission delay of the first service flow and the transmission delay of the second service flow by the communication device may be: The communication device periodically measures the transmission delay of the first service flow and the transmission delay of the second service flow, for example, measures the transmission delay of the first service flow and the transmission delay of the second service flow every 30 seconds. When the measurement periodicity arrives, the communication device measures a data packet (for example, the first data packet) of the first service flow, and measures a data packet (for example, the second data packet) of the second service flow. In addition, measuring the first service flow and the second service flow at a same periodicity needs to be ensured, so as to ensure that the data packet of the first service flow and the data packet of the second service flow are sampled at a same moment, and the transmission delay of the service flow is measured based on the data packet.

In another implementation, for example, measuring the transmission delay of the first service flow and the transmission delay of the second service flow by the communication device may be: The communication device measures associated data packets of the first service flow and the second service flow. For example, the first data packet of the first service flow and the second data packet of the second service flow are associated data packets. For the meaning of the associated data packets, refer to the foregoing descriptions.

To improve accuracy of transmission delay measurement, time synchronization needs to be achieved between the transmission server and the transmission client. If time synchronization is not achieved, an existing time synchronization mechanism may be used to implement time synchronization before the transmission delay is measured. For example, time synchronization may be implemented through a clock synchronization protocol (network timing protocol, NTP).

Step 302a: The communication device determines, based on the first transmission delay, the second transmission delay, and a synchronization delay requirement, a QoS requirement of the first service flow to be sent to a core network element and/or a QoS requirement of the second service flow to be sent to a core network element; or determines packet sending time information of the first service flow and/or packet sending time information of the second service flow.

The core network element may be a PCF network element, an NEF network element, another network element, or the like.

The synchronization delay requirement indicates a synchronization delay relationship between the first service flow and the second service flow, or it is understood that the synchronization delay requirement indicates a synchronization delay relationship that should be satisfied between the first service flow and the second service flow. For example, the synchronization delay requirement specifically indicates that a difference between a time at which the data packet of the first service flow arrives at an application client of UE and a time at which the data packet of the second service flow arrives at the application client of the UE should be less than or equal to a synchronization delay threshold. If the synchronization delay relationship is not satisfied, a sending manner of the first service flow and/or a sending manner of the second service flow need to be adjusted, so that the synchronization delay relationship is satisfied between the first service flow and the second service flow. When the synchronization delay relationship is satisfied between the first service flow and the second service flow, the difference between the time at which the data packet of the first service flow arrives at the application client of the UE and the time at which the data packet of the second service flow arrives at the application client of the UE is less than or equal to the synchronization delay threshold. User plane paths of the data packet of the first service flow and the data packet of the second service flow are: application server -> transmission server -> UPF network element -> base station -> transmission client of the UE -> application client of the UE.

In an implementation, before the foregoing step 302a, the communication device further determines that the first service flow and the second service flow do not satisfy the synchronization delay relationship, and then the communication device performs step 302a.

In an implementation, the foregoing step 302a includes: The communication device determines a QoS requirement of the first service flow to be sent to a core network element and/or a QoS requirement of the second service flow to be sent to a core network element. Subsequently, the core network element may perform QoS guarantee on the first service flow based on the QoS requirement of the first service flow, and/or perform QoS guarantee on the second service flow based on the QoS requirement of the second service flow, so that the synchronization delay relationship is satisfied between the first service flow and the second service flow. In this embodiment of this application, the QoS requirement refers to a transmission delay in a 5G network or a future communication network, and may specifically include a QoS parameter, a QoS index, or the like. The QoS parameter refers to a QoS parameter value (for example, a transmission delay value of a 5G network) requested by the transmission server from a network. The QoS index refers to a QoS index and a QoS parameter value corresponding to the QoS index negotiated between a transmission server provider and a network operator in advance. The transmission server provides the QoS index, and the core network element (such as a PCF network element) can convert the QoS index into the QoS parameter. The QoS requirement is described herein in a unified manner, and details are not described in other subsequent embodiments.

In another implementation, the foregoing step 302a includes: The communication device determines packet sending time information of the first service flow and/or packet sending time information of the second service flow. Subsequently, the communication device or another device may adjust a sending manner of the data packet of the first service flow based on the packet sending time information of the first service flow, and/or adjust a sending manner of the data packet of the second service flow based on the packet sending time information of the second service flow, so that the synchronization delay relationship is satisfied between the first service flow and the second service flow.

In this embodiment, both the first service flow and the second service flow may be referred to as multi-modal service flows. In addition, this embodiment is described by using two service flows, that is, the first service flow and the second service flow, as an example. In actual application, a quantity of service flows is not limited. For example, a relationship between transmission delays of three or more service flows may be adjusted, so that the synchronization delay relationship is satisfied between different service flows.

In the foregoing solution, transmission of the first service flow and/or the second service flow is adjusted, so that the synchronization delay requirement is met between the first service flow and the second service flow, ensuring user experience of a service application. In addition, the transmission delay is an end-to-end delay between the transmission server and the transmission client, and the transmission delay can more accurately reflect whether different service flows meet a synchronization delay requirement, better meeting user requirements and improving user experience.

The communication device in the embodiment in FIG. 3(a) may be the transmission server or the transmission client. Descriptions are separately provided below.

Implementation 1: The communication device in the embodiment in FIG. 3(a) is the transmission server.

For example, based on Implementation 1, the transmission server may determine the first transmission delay of the first service flow by using the following method: The transmission server records a first sending time of the first data packet of the first service flow, where the first sending time is a time at which the transmission server sends the first data packet to the transmission client; then the transmission server sends the first data packet to the transmission client; after receiving the first data packet, the transmission client records a first reception time of the first data packet, and sends the first reception time of the first data packet to the transmission server, where the first reception time is a time at which the transmission client receives the first data packet; and the transmission server determines the first transmission delay based on the first sending time and the first reception time. Specifically, a difference between the first reception time and the first sending time may be used as the first transmission delay. Alternatively, after the difference between the first reception time and the first sending time is determined, the difference is corrected according to a preset algorithm, to obtain the first transmission delay. The user plane path of the first data packet is: application server -> transmission server -> UPF network element -> base station -> transmission client -> application client.

For example, based on Implementation 1, the transmission server may determine the second transmission delay of the second service flow by using the following method: The transmission server records a second sending time of the second data packet of the second service flow, where the second sending time is a time at which the transmission server sends the second data packet to the transmission client; then the transmission server sends the second data packet to the transmission client; after receiving the second data packet, the transmission client records a second reception time of the second data packet, and sends the second reception time of the second data packet to the transmission server, where the second reception time is a time at which the transmission client receives the second data packet; and the transmission server determines the second transmission delay based on the second sending time and the second reception time. Specifically, a difference between the second reception time and the second sending time may be used as the second transmission delay. Alternatively, after the difference between the second reception time and the second sending time is determined, the difference is corrected according to a preset algorithm to obtain the second transmission delay. The user plane path of the second data packet is: application server -> transmission server -> UPF network element -> base station -> transmission client -> application client.

In an implementation, the transmission server further sends a reception time feedback indication to the transmission client, where the reception time feedback indication indicates to record and feed back a reception time of a data packet of the first service flow and a reception time of a data packet of the second service flow. Accordingly, based on the reception time feedback indication, the transmission client sends the first reception time of the first data packet to the transmission server after receiving the first data packet, and sends the second reception time of the second data packet to the transmission server after receiving the second data packet.

In an implementation, the transmission server may further determine first association information, where the first association information indicates an association among multiple service flows between the transmission server and the application server, or it is understood that the first association information indicates multiple service flows having an association between the transmission server and the application server, and the multiple service flows between the transmission server and the application server include the first service flow and the second service flow. Multiple service flows between the transmission server and the application server can be associated by using the first association information. Subsequently, the transmission server can identify, based on the first association information, which service flows are associated service flows.

For example, an interface between the transmission server and the application server may be referred to as a first interface. The first association information includes a first interface address corresponding to the first service flow, a first interface address corresponding to the second service flow, and a first association indication, and the first association indication indicates that there is an association between the first service flow and the second service flow. Alternatively, the first association information includes a correspondence between a first interface address corresponding to the first service flow and a first association identifier, and includes a correspondence between a first interface address corresponding to the second service flow and the first association identifier. Because both the first interface address corresponding to the first service flow and the first interface address corresponding to the second service flow correspond to the same first association identifier, there is a correspondence between the first interface address corresponding to the first service flow and the first interface address corresponding to the second service flow, and the first service flow and the second service flow are associated service flows. For example, the first interface address corresponding to the first service flow includes an address of the first service flow on an application server side and/or an address of the first service flow on a transmission server side, and the first interface address corresponding to the second service flow includes an address of the second service flow on an application server side and/or an address of the second service flow on a transmission server side.

In an implementation, the transmission server may further determine second association information, where the second association information indicates an association among multiple service flows between the transmission server and the transmission client, or it is understood that the second association information indicates multiple service flows having an association between the transmission server and the transmission client, and the multiple service flows between the transmission server and the transmission client include the first service flow and the second service flow. Multiple service flows between the transmission server and the transmission client can be associated by using the second association information. Subsequently, the transmission server sends the second association information to the transmission client, and the transmission client can identify, based on the second association information, which service flows in service flows requested by the application client are associated service flows.

For example, the transmission server may simultaneously send the second association information and the foregoing reception time feedback indication to the transmission client, to indicate the transmission client to record and feed back reception times of data packets of service flows (for example, including the first service flow and the second service flow) indicated by the second association information. In an implementation, the transmission client detects, based on the reception time feedback indication and the second association information, data packets of service flows (for example, including the first service flow and the second service flow) indicated by the second association information. If a data packet includes a sending timestamp of the data packet, the transmission client records a reception time of the data packet, and sends the reception time of the data packet to the transmission server. The sending timestamp in the data packet is added by the transmission server to the data packet before the transmission server sends the data packet to the transmission client, and the sending timestamp indicates a time at which the transmission server sends the data packet to the transmission client.

It should be noted that the reception time feedback indication is optional information. For example, the transmission server sends the second association information to the transmission client, but does not send the reception time feedback indication. The transmission client may determine, based on the second association information provided by the transmission server and a local configuration of the transmission client, to record the reception time of the data packet, and feed back the recorded reception time to the transmission server. For example, the transmission server encapsulates a sending timestamp in a data packet of a service flow corresponding to the second association information, and the transmission client detects the data packet of the service flow corresponding to the second association information. If the data packet of the service flow includes the sending timestamp, the transmission client records the reception time of the data packet based on the local configuration, and feeds back the recorded reception time to the transmission server.

For example, an interface between the transmission server and the transmission client may be referred to as a second interface. The second association information includes a second interface address corresponding to the first service flow, a second interface address corresponding to the second service flow, and a second association indication, and the second association indication indicates that there is an association between the first service flow and the second service flow. Alternatively, the second association information includes a correspondence between a second interface address corresponding to the first service flow and a second association identifier, and includes a correspondence between a second interface address corresponding to the second service flow and the second association identifier. Because both the second interface address corresponding to the first service flow and the second interface address corresponding to the second service flow correspond to the same second association identifier, there is a correspondence between the second interface address corresponding to the first service flow and the second interface address corresponding to the second service flow, and the first service flow and the second service flow are associated service flows. For example, the second interface address corresponding to the first service flow includes an address of the first service flow on a transmission client side and/or an address of the first service flow on a transmission server side. The second interface address corresponding to the second service flow includes an address of the second service flow on a transmission client and/or an address of the second service flow on a transmission server side.

In an implementation, the transmission server may further establish a mapping relationship between the first association information and the second association information. When receiving multiple service flows from the application server, the transmission server can identify, based on the first association information, which service flows are associated service flows, and then determine, based on the mapping relationship between the first association information and the second association information, to map a service flow between the application server and the transmission server to a corresponding second interface address for transmission. For example, the first service flow in the associated service flows between the application server and the transmission server is mapped to the second interface address corresponding to the first service flow for transmission, and the second service flow in the associated service flows between the application server and the transmission server is mapped to the second interface address corresponding to the second service flow for transmission.

Based on Implementation 1, there are multiple methods for adjusting a service flow, so that the associated service flows meet the synchronization delay requirement. The following describes three different adjustment methods, which are the following adjustment method 1, adjustment method 2, and adjustment method 3 respectively. In addition, it is assumed that the first service flow and the second service flow do not satisfy the synchronization delay relationship before the adjustment. For example, the first data packet of the first service flow arrives at the application client of the UE before the second data packet of the second service flow, and a difference between arrival times is greater than the synchronization delay threshold, where the first data packet and the second data packet are associated data packets, that is, data packets that need to meet the synchronization delay requirement. After the adjustment, the first service flow and the second service flow satisfy the synchronization delay relationship. For example, a third data packet of the first service flow arrives at the application client of the UE before a fourth data packet of the second service flow, and a difference between arrival times is less than or equal to the synchronization delay threshold, where the third data packet and the fourth data packet are associated data packets, that is, data packets that need to meet the synchronization delay requirement.

Adjustment method 1: The transmission server determines, based on the first transmission delay, the second transmission delay, and the synchronization delay requirement, the QoS requirement of the first service flow to be sent to the core network element and/or the QoS requirement of the second service flow to be sent to the core network element; and the transmission server sends a request message to the core network element, where the request message includes the QoS requirement of the first service flow and/or the QoS requirement of the second service flow, and the request message is used to request to perform QoS guarantee on the first service flow based on the QoS requirement of the first service flow, and/or perform QoS guarantee on the second service flow based on the QoS requirement of the second service flow.

In an implementation, the transmission server determines, based on the first transmission delay, the second transmission delay, and the synchronization delay requirement, the QoS requirement of the first service flow to be sent to the core network element; and the transmission server sends a request message to the core network element, where the request message includes the QoS requirement of the first service flow, and the request message is used to request to perform QoS guarantee on the first service flow based on the QoS requirement of the first service flow. For example, after the core network element performs QoS guarantee on the first service flow based on the QoS requirement of the first service flow, a delay of transmitting the data packet of the first service flow from the transmission server to the transmission client is updated from the first transmission delay to a third transmission delay, and the third transmission delay is less than the first transmission delay. Because the delay of the data packet of the first service flow from the transmission server to the transmission client is shortened, the data packet of the first service flow may arrive at the application client more quickly, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

In another implementation, the transmission server determines, based on the first transmission delay, the second transmission delay, and the synchronization delay requirement, the QoS requirement of the second service flow to be sent to the core network element; and the transmission server sends a request message to the core network element, where the request message includes the QoS requirement of the second service flow, and the request message is used to request to perform QoS guarantee on the second service flow based on the QoS requirement of the second service flow. For example, after the core network element performs QoS guarantee on the second service flow based on the QoS requirement of the second service flow, a delay of transmitting the data packet of the second service flow from the transmission server to the transmission client is updated from the second transmission delay to a fourth transmission delay, and the fourth transmission delay is greater than the second transmission delay. Because the delay of the data packet of the second service flow from the transmission server to the transmission client is increased, the data packet of the second service flow may arrive at the application client with a delay, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

In another implementation, the transmission server determines, based on the first transmission delay, the second transmission delay, and the synchronization delay requirement, the QoS requirement of the first service flow to be sent to the core network element and the QoS requirement of the second service flow to be sent to the core network element; and the transmission server sends a request message to the core network element, where the request message includes the QoS requirement of the first service flow and the QoS requirement of the second service flow, and the request message is used to request to perform QoS guarantee on the first service flow based on the QoS requirement of the first service flow and perform QoS guarantee on the second service flow based on the QoS requirement of the second service flow. For example, after the core network element performs QoS guarantee on the first service flow based on the QoS requirement of the first service flow, a delay of transmitting the data packet of the first service flow from the transmission server to the transmission client is updated from the first transmission delay to a third transmission delay, and the third transmission delay is less than the first transmission delay. After the core network element performs QoS guarantee on the second service flow based on the QoS requirement of the second service flow, a delay of transmitting the data packet of the second service flow from the transmission server to the transmission client is updated from the second transmission delay to a fourth transmission delay, and the fourth transmission delay is greater than the second transmission delay. Because the delay of the data packet of the first service flow from the transmission server to the transmission client is shortened, the data packet of the first service flow may arrive at the application client more quickly. In addition, because the delay of the data packet of the second service flow from the transmission server to the transmission client is increased, the data packet of the second service flow may arrive at the application client with a delay, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

It should be noted that when the request message sent by the transmission server to the core network element includes the QoS requirement of the first service flow, the request message further includes the second interface address of the first service flow, where the second interface address is an address used when the first service flow is transmitted between the transmission server and the transmission client, and the second interface is an interface between the transmission server and the transmission client. The second interface address corresponding to the first service flow includes an address of the first service flow on a transmission client and/or an address of the first service flow on a transmission server side.

When the request message sent by the transmission server to the core network element includes the QoS requirement of the second service flow, the request message further includes the second interface address of the second service flow, where the second interface address is an address used when the second service flow is transmitted between the transmission server and the transmission client, and the second interface is an interface between the transmission server and the transmission client. The second interface address corresponding to the second service flow includes an address of the second service flow on a transmission client and/or an address of the second service flow on a transmission server side.

Based on the foregoing adjustment method 1, after determining the QoS requirement of the first service flow and/or the QoS requirement of the second service flow, the transmission server notifies the core network element to adjust the transmission delay of the first service flow based on the QoS requirement of the first service flow, and/or adjust the transmission delay of the second service flow based on the QoS requirement of the second service flow, so that the synchronization delay relationship is satisfied between the first service flow and the second service flow after the adjustment, ensuring user experience.

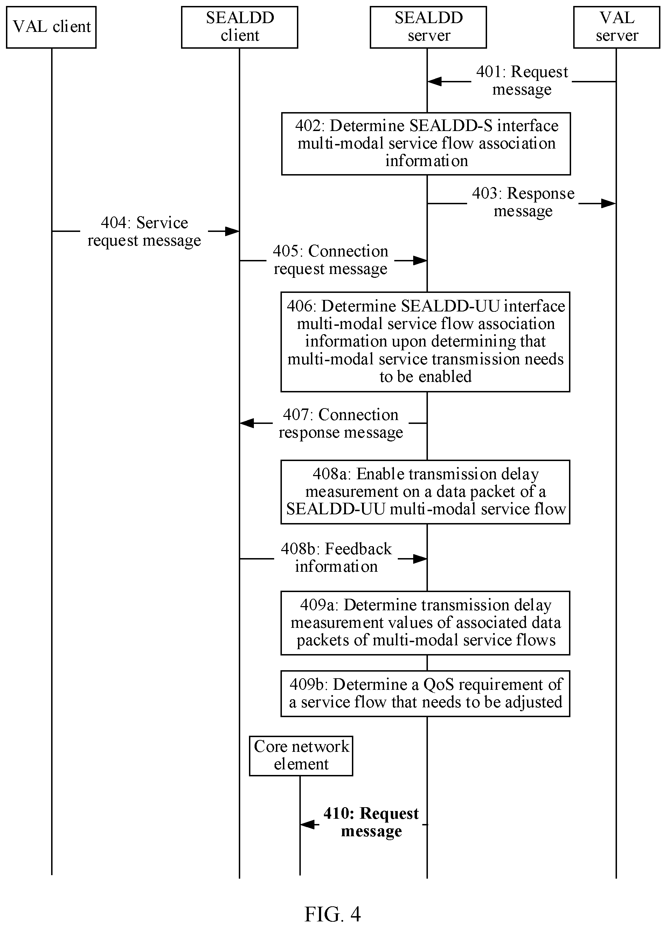

For a specific example of the adjustment method 1 in Implementation 1, refer to a subsequent embodiment in FIG. 4.

Adjustment method 2: The transmission server determines, based on the first transmission delay, the second transmission delay, and the synchronization delay requirement, the packet sending time information of the first service flow and/or the packet sending time information of the second service flow. The packet sending time information of the first service flow indicates a manner of adjusting a packet sending time of a data packet of the first service flow, and the packet sending time information of the second service flow indicates a manner of adjusting a packet sending time of a data packet of the second service flow.

For example, the packet sending time information of the first service flow may be a packet sending time advance, or information used to calculate a packet sending time advance (for example, including a difference between the first transmission delay and the second transmission delay, or including the first transmission delay and the second transmission delay). The packet sending time information of the second service flow may be a packet sending time advance, or information used to calculate a packet sending time advance (for example, including a difference between the first transmission delay and the second transmission delay, or including the first transmission delay and the second transmission delay).

The manner of adjusting the packet sending time herein refers to adjusting the sending time of the data packet according to a specific time advance, so that the data packet of the service flow is sent in advance.

In an implementation, the transmission server may send a first message to the application server, where the first message includes the packet sending time information of the first service flow and/or the packet sending time information of the second service flow, and the first message is used to notify the application server to adjust the packet sending time of the data packet of the first service flow based on the packet sending time information of the first service flow, and/or adjust the packet sending time of the data packet of the second service flow based on the packet sending time information of the second service flow. For example, the application server sends the data packet of the first service flow in advance based on the packet sending time information of the first service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the application server sends the data packet of the first service flow in advance based on the packet sending time information of the first service flow, and sends the data packet of the second service flow in advance based on the packet sending time information of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

For example, the first message may be a notification message, a request message, or a message of another type. This is not limited in this application.

For example, when the first message includes the packet sending time information of the first service flow, the first message further includes the first interface address of the first service flow. The transmission server determines the first interface address of the first service flow based on the second interface address of the first service flow and the mapping relationship between the first association information and the second association information. Specifically, the transmission server determines the second interface address of the first service flow whose packet sending time needs to be adjusted between the transmission server and the transmission client, where the second interface address is an address used when the first service flow is transmitted between the transmission server and the transmission client, and the second interface is an interface between the transmission server and the transmission client. Then, the transmission server determines, based on the mapping relationship between the first association information and the second association information, the first interface address of the first service flow corresponding to the second interface address of the first service flow, where the first interface address is an address used when the first service flow is transmitted between the transmission server and the application server, and the first interface is an interface between the transmission server and the application server.

For example, when the first message includes the packet sending time information of the second service flow, the first message further includes the first interface address of the second service flow. The transmission server determines the first interface address of the second service flow by using the following method: The transmission server determines the second interface address of the second service flow whose packet sending time needs to be adjusted between the transmission server and the transmission client, where the second interface address is an address used when the second service flow is transmitted between the transmission server and the transmission client, and the second interface is an interface between the transmission server and the transmission client. Then, the transmission server determines, based on the mapping relationship between the first association information and the second association information, the first interface address of the second service flow corresponding to the second interface address of the second service flow, where the first interface address is an address used when the second service flow is transmitted between the transmission server and the application server, and the first interface is an interface between the transmission server and the application server.

In another implementation, the transmission server may adjust the packet sending time of the data packet of the first service flow based on the packet sending time information of the first service flow, and/or adjust the packet sending time of the data packet of the second service flow based on the packet sending time information of the second service flow. For example, the transmission server sends the data packet of the first service flow in advance based on the packet sending time information of the first service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the transmission server sends the data packet of the first service flow in advance based on the packet sending time information of the first service flow, and sends the data packet of the second service flow in advance based on the packet sending time information of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

Based on the foregoing adjustment method 2, after determining the packet sending time information of the first service flow and/or the packet sending time information of the second service flow, the transmission server notifies the application server to send the data packet of the first service flow in advance based on the packet sending time information of the first service flow and/or send the data packet of the second service flow in advance based on the packet sending time information of the second service flow, or the transmission server sends the data packet of the first service flow in advance based on the packet sending time information of the first service flow and/or sends the data packet of the second service flow in advance based on the packet sending time information of the second service flow, so that the synchronization delay relationship is satisfied between the first service flow and the second service flow after the adjustment, ensuring user experience.

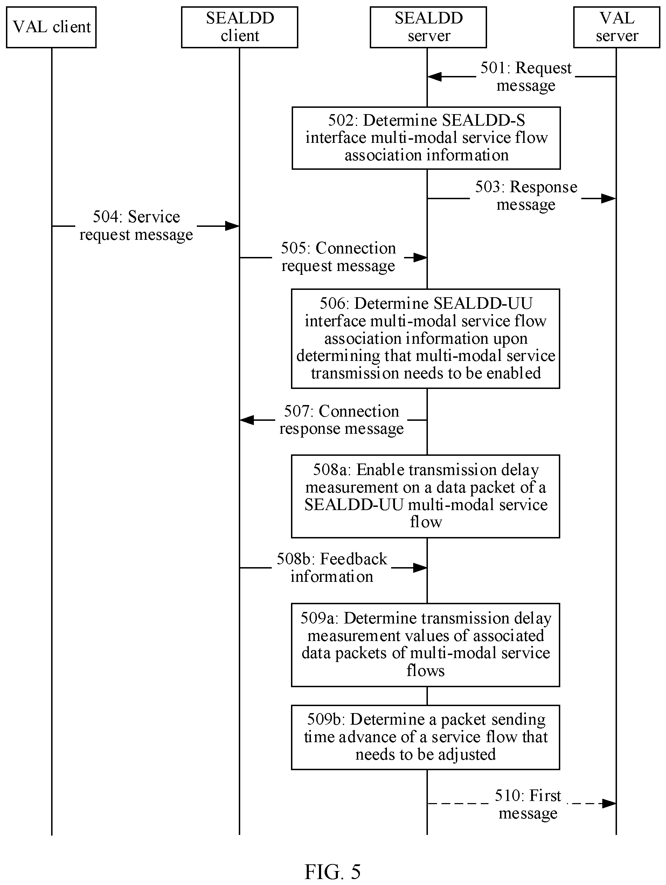

For a specific example of the adjustment method 2 in Implementation 1, refer to a subsequent embodiment in FIG. 5.

Adjustment method 3: The transmission server determines, based on the first transmission delay, the second transmission delay, and the synchronization delay requirement, the packet sending time information of the first service flow and/or the packet sending time information of the second service flow. The packet sending time information of the first service flow includes a buffer time amount of the first service flow, and the buffer time amount of the first service flow indicates a buffer time of a data packet of the first service flow. The packet sending time information of the second service flow includes a buffer time amount of the second service flow, and the buffer time amount of the second service flow indicates a buffer time of a data packet of the second service flow.

In an implementation, the transmission server may send a second message to the transmission client, where the second message includes the buffer time amount of the first service flow and/or the buffer time amount of the second service flow, and the second message is used to notify the transmission client to buffer the data packet of the first service flow based on the buffer time amount of the first service flow, and/or buffer the data packet of the second service flow based on the buffer time amount of the second service flow. For example, the transmission client buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the transmission client buffers the data packet of the first service flow based on the buffer time amount of the first service flow, so as to postpone sending the data packet of the first service flow, and buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. Based on the implementation, the packet sending time information of the first service flow may be understood as indicating a time at which the transmission client sends the data packet of the first service flow to the application client. The packet sending time information of the second service flow may be understood as indicating a time at which the transmission client sends the data packet of the second service flow to the application client.

For example, the second message may be a notification message, a request message, or a message of another type. This is not limited in this application.

When the second message includes the buffer time amount of the first service flow, the second message further includes description information of the first service flow, where the description information of the first service flow includes at least one of the second interface address corresponding to the first service flow or a first flow identifier between the transmission server and the transmission client, and the first flow identifier corresponds to the first service flow. The second interface address corresponding to the first service flow includes an address of the first service flow on a transmission client and/or an address of the first service flow on a transmission server side.

When the second message includes the buffer time amount of the second service flow, the second message further includes description information of the second service flow, where the description information of the second service flow includes at least one of the second interface address corresponding to the second service flow or a second flow identifier between the transmission server and the transmission client, and the second flow identifier corresponds to the second service flow. The second interface address corresponding to the second service flow includes an address of the second service flow on a transmission client and/or an address of the second service flow on a transmission server side.

In another implementation, the transmission server buffers the data packet of the first service flow based on the buffer time amount of the first service flow, and/or buffers the data packet of the second service flow based on the buffer time amount of the second service flow. For example, the transmission server buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the transmission server buffers the data packet of the first service flow based on the buffer time amount of the first service flow, so as to postpone sending the data packet of the first service flow, and buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

Based on the foregoing adjustment method 3, after determining the buffer time amount of the first service flow and/or the buffer time amount of the second service flow, the transmission server notifies the transmission client to postpone sending the data packet of the first service flow based on the buffer time amount of the first service flow and/or postpone sending the data packet of the second service flow based on the buffer time amount of the second service flow, or the transmission server postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

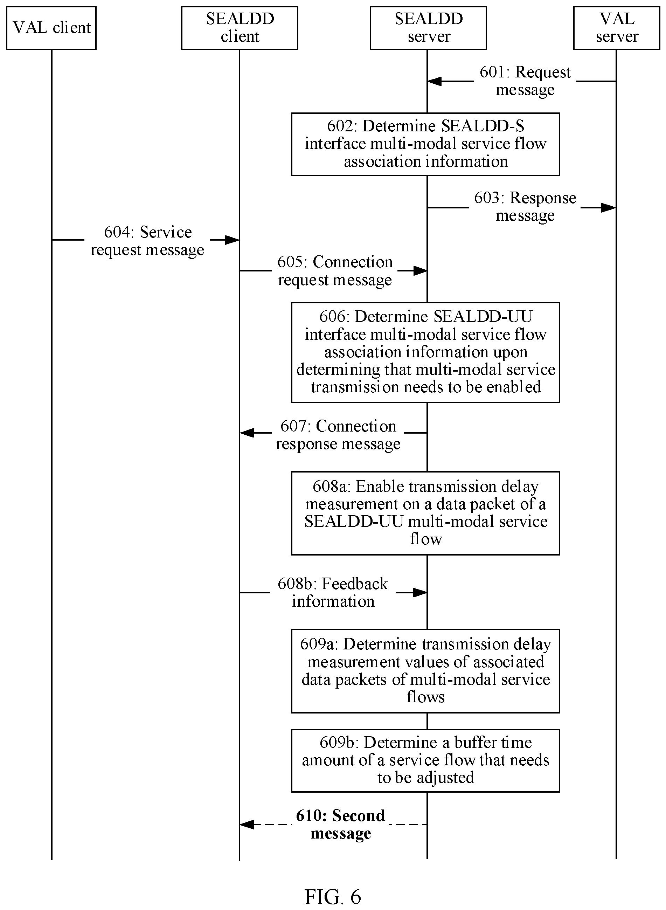

For a specific example of the adjustment method 3 in Implementation 1, refer to a subsequent embodiment in FIG. 6.

The foregoing describes adjusting the sending manner of the first service flow and/or the second service flow to cause the first service flow and the second service flow to satisfy the synchronization delay relationship when the communication device in the embodiment in FIG. 3(a) is the transmission server.

The following describes another implementation, that is, when the communication device in the embodiment in FIG. 3(a) is the transmission client, the sending manner of the first service flow and/or the second service flow is adjusted, so that the synchronization delay relationship is satisfied between the first service flow and the second service flow.

Implementation 2: The communication device in the embodiment in FIG. 3(a) is the transmission client.

For example, based on Implementation 2, the transmission client may determine the first transmission delay of the first service flow by using the following method: The transmission client receives the first data packet of the first service flow from the transmission server, and obtains, from the first data packet, a first sending time of the first data packet, where the first sending time is a time at which the transmission server sends the first data packet to the transmission client; the transmission client records a first reception time of the first data packet, where the first reception time is a time at which the transmission client receives the first data packet; and the transmission client determines the first transmission delay based on the first sending time and the first reception time. The user plane path of the first data packet is: application server -> transmission server -> UPF network element -> base station -> transmission client -> application client.

For example, based on Implementation 2, the transmission client may determine the second transmission delay of the second service flow by using the following method: The transmission client receives the second data packet of the second service flow from the transmission server, and obtains, from the second data packet, a second sending time of the second data packet, where the second sending time is a time at which the transmission server sends the second data packet to the transmission client; the transmission client records a second reception time of the second data packet, where the second reception time is a time at which the transmission client receives the second data packet; and the transmission client determines the second transmission delay based on the second sending time and the second reception time. The user plane path of the second data packet is: application server -> transmission server -> UPF network element -> base station -> transmission client -> application client.

In an implementation, the transmission client further receives a reception time recording indication from the transmission server, where the reception time recording indication indicates to record a reception time of a data packet of the first service flow and a reception time of a data packet of the second service flow. Accordingly, based on the reception time recording indication, the transmission client records the first reception time of the first data packet after receiving the first data packet, and records the second reception time of the second data packet after receiving the second data packet.

In an implementation, the transmission client further receives second association information from the transmission server. For the meaning of the second association information, refer to the descriptions in the foregoing Implementation 1. The transmission client can identify, based on the second association information, which service flows in service flows requested by the application client are associated service flows.

For example, the transmission server may simultaneously send the second association information and the foregoing reception time recording indication to the transmission client, to indicate the transmission client to record reception times of data packets of service flows (for example, including the first service flow and the second service flow) indicated by the second association information. In an implementation, the transmission client detects, based on the reception time recording indication and the second association information, associated data packets of service flows (for example, including the first service flow and the second service flow) indicated by the second association information, and records a reception time of the data packet. A method for the transmission client to identify associated data packets may be: The transmission client detects a generation time of a data packet carried in the data packet (for example, the generation time is indicated by using an RTP timestamp), and data packets with a same generation time or generation times that differ by no more than a specific threshold are associated data packets. A method for the transmission client to identify associated data packet may alternatively be: The transmission client detects associated data packet indication information carried in a data packet. If data packets of different service flows carry same associated data packet indication information or carry associated data packet indication information having a correspondence, the transmission client determines that the data packets are associated data packets. The associated data packet indication information carried in the data packet is added by the transmission server. For example, the transmission server receives data packets of associated service flows from the application server. For data packets of different service flows, if generation times are same or a difference between generation times is within a specific threshold, the transmission server identifies the data packets as associated data packets, and includes the associated data packet indication information in the associated data packets.

It should be noted that the reception time recording indication is optional information. For example, the transmission server sends the second association information to the transmission client, but does not send the reception time recording indication. The transmission client may determine, based on the second association information provided by the transmission server and a local configuration of the transmission client, to record the reception time of the data packet. For example, the transmission server encapsulates a sending timestamp in a data packet of a service flow corresponding to the second association information, and the transmission client detects the data packet of the service flow corresponding to the second association information. If the data packet of the service flow includes the sending timestamp, the transmission client records the reception time of the data packet based on the local configuration.

Based on Implementation 2, there are multiple methods for adjusting a service flow, so that the associated service flows meet the synchronization delay requirement. The following describes three different adjustment methods, which are the following adjustment method A, adjustment method B, and adjustment method C respectively. In addition, it is assumed that the first service flow and the second service flow do not satisfy the synchronization delay relationship before the adjustment. For example, the first data packet of the first service flow arrives at the application client of the UE before the second data packet of the second service flow, and a difference between arrival times is greater than the synchronization delay threshold, where the first data packet and the second data packet are associated data packets, that is, data packets that need to meet the synchronization delay requirement. After the adjustment, the first service flow and the second service flow satisfy the synchronization delay relationship. For example, a third data packet of the first service flow arrives at the application client of the UE before a fourth data packet of the second service flow, and a difference between arrival times is less than or equal to the synchronization delay threshold, where the third data packet and the fourth data packet are associated data packets, that is, data packets that need to meet the synchronization delay requirement.

Adjustment method A: The transmission client determines, based on the first transmission delay, the second transmission delay, and the synchronization delay requirement, the QoS requirement of the first service flow to be sent to the core network element and/or the QoS requirement of the second service flow to be sent to the core network element; the transmission client sends the QoS requirement of the first service flow and/or the QoS requirement of the second service flow to the transmission server; and then the transmission server sends a request message to the core network element, where the request message includes the QoS requirement of the first service flow and/or the QoS requirement of the second service flow, and the request message is used to request to perform QoS guarantee on the first service flow based on the QoS requirement of the first service flow, and/or perform QoS guarantee on the second service flow based on the QoS requirement of the second service flow.

In an implementation, the transmission client determines, based on the first transmission delay, the second transmission delay, and the synchronization delay requirement, the QoS requirement of the first service flow to be sent to the core network element; the transmission client sends the QoS requirement of the first service flow to the transmission server; and the transmission server sends a request message to the core network element, where the request message includes the QoS requirement of the first service flow, and the request message is used to request to perform QoS guarantee on the first service flow based on the QoS requirement of the first service flow. For example, after the core network element performs QoS guarantee on the first service flow based on the QoS requirement of the first service flow, a delay of transmitting the data packet of the first service flow from the transmission server to the transmission client is updated from the first transmission delay to a third transmission delay, and the third transmission delay is less than the first transmission delay. Because the delay of the data packet of the first service flow from the transmission server to the transmission client is shortened, the data packet of the first service flow may arrive at the application client more quickly, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

In another implementation, the transmission client determines, based on the first transmission delay, the second transmission delay, and the synchronization delay requirement, the QoS requirement of the second service flow to be sent to the core network element; the transmission client sends the QoS requirement of the second service flow to the transmission server; and the transmission server sends a request message to the core network element, where the request message includes the QoS requirement of the second service flow, and the request message is used to request to perform QoS guarantee on the second service flow based on the QoS requirement of the second service flow. For example, after the core network element performs QoS guarantee on the second service flow based on the QoS requirement of the second service flow, a delay of transmitting the data packet of the second service flow from the transmission server to the transmission client is updated from the second transmission delay to a fourth transmission delay, and the fourth transmission delay is greater than the second transmission delay. Because the delay of the data packet of the second service flow from the transmission server to the transmission client is increased, the data packet of the second service flow may arrive at the application client with a delay, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

In another implementation, the transmission client determines, based on the first transmission delay, the second transmission delay, and the synchronization delay requirement, the QoS requirement of the first service flow to be sent to the core network element and the QoS requirement of the second service flow to be sent to the core network element; the transmission client sends the QoS requirement of the first service flow and the QoS requirement of the second service flow to the transmission server; and the transmission server sends a request message to the core network element, where the request message includes the QoS requirement of the first service flow and the QoS requirement of the second service flow, and the request message is used to request to perform QoS guarantee on the first service flow based on the QoS requirement of the first service flow and perform QoS guarantee on the second service flow based on the QoS requirement of the second service flow. For example, after the core network element performs QoS guarantee on the first service flow based on the QoS requirement of the first service flow, a delay of transmitting the data packet of the first service flow from the transmission server to the transmission client is updated from the first transmission delay to a third transmission delay, and the third transmission delay is less than the first transmission delay. After the core network element performs QoS guarantee on the second service flow based on the QoS requirement of the second service flow, a delay of transmitting the data packet of the second service flow from the transmission server to the transmission client is updated from the second transmission delay to a fourth transmission delay, and the fourth transmission delay is greater than the second transmission delay. Because the delay of the data packet of the first service flow from the transmission server to the transmission client is shortened, the data packet of the first service flow may arrive at the application client more quickly. In addition, because the delay of the data packet of the second service flow from the transmission server to the transmission client is increased, the data packet of the second service flow may arrive at the application client with a delay, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

It should be noted that when the request message sent by the transmission server to the core network element includes the QoS requirement of the first service flow, the request message further includes the second interface address of the first service flow, where the second interface address is an address used when the first service flow is transmitted between the transmission server and the transmission client, and the second interface is an interface between the transmission server and the transmission client.

When the request message sent by the transmission server to the core network element includes the QoS requirement of the second service flow, the request message further includes the second interface address of the second service flow, where the second interface address is an address used when the second service flow is transmitted between the transmission server and the transmission client, and the second interface is an interface between the transmission server and the transmission client.

Based on the foregoing adjustment method A, after determining the QoS requirement of the first service flow and/or the QoS requirement of the second service flow, the transmission client sends the QoS requirement of the first service flow and/or the QoS requirement of the second service flow to the transmission server, and then the transmission server notifies the core network element to adjust the transmission delay of the first service flow based on the QoS requirement of the first service flow, and/or adjust the transmission delay of the second service flow based on the QoS requirement of the second service flow, so that the synchronization delay relationship is satisfied between the first service flow and the second service flow after the adjustment, ensuring user experience.

Adjustment method B: The transmission client determines, based on the first transmission delay, the second transmission delay, and the synchronization delay requirement, the packet sending time information of the first service flow and/or the packet sending time information of the second service flow, and the transmission client sends the packet sending time information of the first service flow and/or the packet sending time information of the second service flow to the transmission server. The packet sending time information of the first service flow indicates a manner of adjusting a packet sending time of a data packet of the first service flow, and the packet sending time information of the second service flow indicates a manner of adjusting a packet sending time of a data packet of the second service flow.

For example, the packet sending time information of the first service flow may be a packet sending time advance, or information used to calculate a packet sending time advance (for example, a difference between the first transmission delay and the second transmission delay). The packet sending time information of the second service flow may be a packet sending time advance, or information used to calculate a packet sending time advance (for example, a difference between the first transmission delay and the second transmission delay).

In an implementation, the transmission client sends the packet sending time information of the first service flow and/or the packet sending time information of the second service flow to the transmission server, and the transmission server may send a first message to the application server, where the first message includes the packet sending time information of the first service flow and/or the packet sending time information of the second service flow, and the first message is used to notify the application server to adjust the packet sending time of the data packet of the first service flow based on the packet sending time information of the first service flow, and/or adjust the packet sending time of the data packet of the second service flow based on the packet sending time information of the second service flow. For example, the application server sends the data packet of the first service flow in advance based on the packet sending time information of the first service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the application server sends the data packet of the first service flow in advance based on the packet sending time information of the first service flow, and sends the data packet of the second service flow in advance based on the packet sending time information of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

For example, the first message may be a notification message, a request message, or a message of another type. This is not limited in this application.

For example, when the first message includes the packet sending time information of the first service flow, the first message further includes the first interface address of the first service flow. The transmission server determines the first interface address of the first service flow by using the following method: The transmission server determines the second interface address of the first service flow whose packet sending time needs to be adjusted between the transmission server and the transmission client, where the second interface address is an address used when the first service flow is transmitted between the transmission server and the transmission client, and the second interface is an interface between the transmission server and the transmission client. Then, the transmission server determines, based on the mapping relationship between the first association information and the second association information, the first interface address of the first service flow corresponding to the second interface address of the first service flow, where the first interface address is an address used when the first service flow is transmitted between the transmission server and the application server, and the first interface is an interface between the transmission server and the application server.

For example, when the first message includes the packet sending time information of the second service flow, the first message further includes the first interface address of the second service flow. The transmission server determines the first interface address of the second service flow by using the following method: The transmission server determines the second interface address of the second service flow whose packet sending time needs to be adjusted between the transmission server and the transmission client, where the second interface address is an address used when the second service flow is transmitted between the transmission server and the transmission client, and the second interface is an interface between the transmission server and the transmission client. Then, the transmission server determines, based on the mapping relationship between the first association information and the second association information, the first interface address of the second service flow corresponding to the second interface address of the second service flow, where the first interface address is an address used when the second service flow is transmitted between the transmission server and the application server, and the first interface is an interface between the transmission server and the application server.

In another implementation, the transmission client sends the packet sending time information of the first service flow and/or the packet sending time information of the second service flow to the transmission server, and the transmission server may adjust the packet sending time of the data packet of the first service flow based on the packet sending time information of the first service flow, and/or adjust the packet sending time of the data packet of the second service flow based on the packet sending time information of the second service flow. For example, the transmission server sends the data packet of the first service flow in advance based on the packet sending time information of the first service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the transmission server sends the data packet of the first service flow in advance based on the packet sending time information of the first service flow, and sends the data packet of the second service flow in advance based on the packet sending time information of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

Based on the foregoing adjustment method B, after determining the packet sending time information of the first service flow and/or the packet sending time information of the second service flow, the transmission client sends the packet sending time information of the first service flow and/or the packet sending time information of the second service flow to the transmission server, and the transmission server may notify the application server to send the data packet of the first service flow in advance based on the packet sending time information of the first service flow and/or send the data packet of the second service flow in advance based on the packet sending time information of the second service flow, or the transmission server sends the data packet of the first service flow in advance based on the packet sending time information of the first service flow and/or sends the data packet of the second service flow in advance based on the packet sending time information of the second service flow, so that the synchronization delay relationship is satisfied between the first service flow and the second service flow after the adjustment, ensuring user experience.

Adjustment method C: The transmission client determines, based on the first transmission delay, the second transmission delay, and the synchronization delay requirement, the packet sending time information of the first service flow and/or the packet sending time information of the second service flow, and the transmission client sends the packet sending time information of the first service flow and/or the packet sending time information of the second service flow to the transmission server. The packet sending time information of the first service flow includes a buffer time amount of the first service flow, and the buffer time amount of the first service flow indicates a buffer time of a data packet of the first service flow. The packet sending time information of the second service flow includes a buffer time amount of the second service flow, and the buffer time amount of the second service flow indicates a buffer time of a data packet of the second service flow.

In an implementation, the transmission client sends the buffer time amount of the first service flow and/or the buffer time amount of the second service flow to the transmission server, and the transmission server buffers the data packet of the first service flow based on the buffer time amount of the first service flow, and/or buffers the data packet of the second service flow based on the buffer time amount of the second service flow. For example, the transmission server buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the transmission server buffers the data packet of the first service flow based on the buffer time amount of the first service flow, so as to postpone sending the data packet of the first service flow, and buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment.

In an implementation, the transmission client buffers the data packet of the first service flow based on the buffer time amount of the first service flow, and/or buffers the data packet of the second service flow based on the buffer time amount of the second service flow. For example, the transmission client buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. For another example, the transmission client buffers the data packet of the first service flow based on the buffer time amount of the first service flow, so as to postpone sending the data packet of the first service flow, and buffers the data packet of the second service flow based on the buffer time amount of the second service flow, so as to postpone sending the data packet of the second service flow, so that the difference between the time at which the data packet of the first service flow arrives at the application client and the time at which the data packet of the second service flow arrives at the application client is less than or equal to the synchronization delay threshold, that is, the synchronization delay relationship is satisfied between the first service flow and the second service flow after the adjustment. Based on the implementation, the packet sending time information of the first service flow may be understood as indicating a time at which the transmission client sends the data packet of the first service flow to the application client. The packet sending time information of the second service flow may be understood as indicating a time at which the transmission client sends the data packet of the second service flow to the application client.

Based on the foregoing adjustment method C, after determining the buffer time amount of the first service flow and/or the buffer time amount of the second service flow, the transmission client sends the buffer time amount of the first service flow and/or the buffer time amount of the second service flow to the transmission server, and the transmission server postpones sending the data packet of the first service flow based on the buffer time amount of the first service flow and/or postpones sending the data packet of the second service flow based on the buffer time amount of the second service flow, or the transmission client postpones sending the data packet of the first service flow based on the buffer time amount of the first service flow and/or postpones sending the data packet of the second service flow based on the buffer time amount of the second service flow, so that the synchronization delay relationship is satisfied between the first service flow and the second service flow after the adjustment, ensuring user experience.

FIG. 3(b) is a schematic flowchart of a communication method according to an embodiment of this application. The method is performed by a communication device or a module (for example, a chip) used in a communication device. For ease of description, the following uses an example in which the communication device performs the method for description.

The method includes the following steps.

Step 301b: A communication device determines a first reception time of a first service flow and a second reception time of a second service flow.

The communication device is a transmission server or a transmission client.

The first reception time is a time at which a transmission client receives a first data packet of the first service flow from a transmission server, and the second reception time is a time at which the transmission client receives a second data packet of the second service flow from the transmission server.

The first service flow and the second service flow are associated data flows. The associated data flows herein refer to that the first service flow and the second service flow are service flows of a same service.

Optionally, the first data packet of the first service flow and the second data packet of the second service flow are associated data packets. In an implementation, the first data packet includes a first generation time of the first data packet, and the second data packet includes a second generation time of the second data packet. If the first generation time is the same as or close to the second generation time (for example, a difference is less than a threshold), the first data packet and the second data packet are associated data packets. The generation time of the first data packet refers to a time at which an application server generates the first data packet. For example, the application server may include an RTP timestamp in the first data packet, where the RTP timestamp indicates the generation time of the first data packet. The generation time of the second data packet refers to a time at which an application server generates the second data packet. The application server may include an RTP timestamp in the second data packet, where the RTP timestamp indicates the generation time of the second data packet.

In an implementation, for example, determining the reception time of the first service flow and the reception time of the second service flow by the communication device may be: The communication device periodically determines the reception time of the first service flow and the reception time of the second service flow, for example, determines the reception time of the first service flow and the reception time of the second service flow every 30 seconds. In addition, measuring the first service flow and the second service flow at a same periodicity needs to be ensured, so as to ensure that the data packet of the first service flow and the data packet of the second service flow are sampled at a same moment, and the reception time of the service flow is determined based on the data packet.

In another implementation, for example, determining the reception time of the first service flow and the reception time of the second service flow by the communication device may be: The communication device determines reception times of associated data packets of the first service flow and the second service flow. For example, the first data packet of the first service flow and the second data packet of the second service flow are associated data packets. For the meaning of the associated data packets, refer to the foregoing descriptions.

To improve accuracy of transmission delay measurement, time synchronization needs to be achieved between the transmission server and the transmission client. If time synchronization is not achieved, an existing time synchronization mechanism may be used to implement time synchronization before the transmission delay is measured. For example, time synchronization may be implemented through NTP.

Step 302b: The communication device determines, based on the first reception time, the second reception time, and a synchronization delay requirement, a QoS requirement of the first service flow to be sent to a core network element and/or a QoS requirement of the second service flow to be sent to a core network element; or determines packet sending time information of the first service flow and/or packet sending time information of the second service flow.

The core network element may be a PCF network element, an NEF network element, another network element, or the like.

The synchronization delay requirement indicates a synchronization delay relationship between the first service flow and the second service flow, or it is understood that the synchronization delay requirement indicates a synchronization delay relationship that should be satisfied between the first service flow and the second service flow. For example, the synchronization delay requirement specifically indicates that a difference between a time at which the data packet of the first service flow arrives at an application client of UE and a time at which the data packet of the second service flow arrives at the application client of the UE should be less than or equal to a synchronization delay threshold. If the synchronization delay relationship is not satisfied, a sending manner of the first service flow and/or a sending manner of the second service flow need to be adjusted, so that the synchronization delay relationship is satisfied between the first service flow and the second service flow. When the synchronization delay relationship is satisfied between the first service flow and the second service flow, the difference between the time at which the data packet of the first service flow arrives at the application client of the UE and the time at which the data packet of the second service flow arrives at the application client of the UE is less than or equal to the synchronization delay threshold. User plane paths of the data packet of the first service flow and the data packet of the second service flow are: application server -> transmission server -> UPF network element -> base station -> transmission client of the UE -> application client of the UE.

In an implementation, before the foregoing step 302b, the communication device further determines that the first service flow and the second service flow do not satisfy the synchronization delay relationship, and then the communication device performs step 302b.

In an implementation, the foregoing step 302b includes: The communication device determines a QoS requirement of the first service flow to be sent to a core network element and/or a QoS requirement of the second service flow to be sent to a core network element. Subsequently, the core network element may perform QoS guarantee on the first service flow based on the QoS requirement of the first service flow, and/or perform QoS guarantee on the second service flow based on the QoS requirement of the second service flow, so that the synchronization delay relationship is satisfied between the first service flow and the second service flow.

In another implementation, the foregoing step 302b includes: The communication device determines packet sending time information of the first service flow and/or packet sending time information of the second service flow. Subsequently, the communication device or another device may adjust a sending manner of the data packet of the first service flow based on the packet sending time information of the first service flow, and/or adjust a sending manner of the data packet of the second service flow based on the packet sending time information of the second service flow, so that the synchronization delay relationship is satisfied between the first service flow and the second service flow.

In this embodiment, both the first service flow and the second service flow may be referred to as multi-modal service flows. In addition, this embodiment is described by using two service flows, that is, the first service flow and the second service flow, as an example. In actual application, a quantity of service flows is not limited. For example, a relationship between transmission delays of three or more service flows may be adjusted, so that the synchronization delay relationship is satisfied between different service flows.

In the foregoing solution, transmission of the first service flow and/or the second service flow is adjusted, so that the synchronization delay requirement is met between the first service flow and the second service flow, ensuring user experience of a service application.

The communication device in the embodiment in FIG. 3(b) may be the transmission server or the transmission client. Descriptions are separately provided below.

Implementation 1: The communication device in the embodiment in FIG. 3(b) is the transmission server.

For example, based on Implementation 1, the transmission server may determine the first reception time of the first data packet of the first service flow by using the following method: The transmission server sends the first data packet to the transmission client; and after receiving the first data packet, the transmission client records the first reception time of the first data packet, and sends the first reception time of the first data packet to the transmission server, where the first reception time is a time at which the transmission client receives the first data packet. The user plane path of the first data packet is: application server -> transmission server -> UPF network element -> base station -> transmission client -> application client.

For example, based on Implementation 1, the transmission server may determine the second reception time of the second data packet of the second service flow by using the following method: The transmission server sends the second data packet to the transmission client; and after receiving the second data packet, the transmission client records the second reception time of the second data packet, and sends the second reception time of the second data packet to the transmission server, where the second reception time is a time at which the transmission client receives the second data packet. The user plane path of the second data packet is: application server -> transmission server -> UPF network element -> base station -> transmission client -> application client.

In an implementation, the transmission server further sends a reception time feedback indication to the transmission client, where the reception time feedback indication indicates to record and feed back a reception time of a data packet of the first service flow and a reception time of a data packet of the second service flow. Accordingly, based on the reception time feedback indication, the transmission client sends the first reception time of the first data packet to the transmission server after receiving the first data packet, and sends the second reception time of the second data packet to the transmission server after receiving the second data packet.

In an implementation, the transmission server may further determine first association information and second association information, and establish a mapping relationship between the first association information and the second association information. For meanings and usage of the first association information and the second association information, refer to related descriptions in the embodiment in FIG. 3(a). Details are not described herein again.

For example, the transmission server may simultaneously send the second association information and the foregoing reception time feedback indication to the transmission client, to indicate the transmission client to record and feed back reception times of data packets of service flows (for example, including the first service flow and the second service flow) indicated by the second association information. In an implementation, the transmission client detects, based on the reception time feedback indication and the second association information, data packets of service flows (for example, including the first service flow and the second service flow) indicated by the second association information, records reception times of associated data packets of service flows indicated by the second association information, and sends the reception time of the data packet to the transmission server. For an implementation of identifying associated data packets by the transmission client, refer to related descriptions in the embodiment in FIG. 3(a).

It should be noted that the reception time feedback indication is optional information. For example, the transmission server sends the second association information to the transmission client, but does not send the reception time feedback indication. The transmission client may determine, based on the second association information provided by the transmission server and a local configuration of the transmission client, to record the reception time of the data packet, and feed back the recorded reception time to the transmission server. For example, the transmission server encapsulates a sending timestamp in a data packet of a service flow corresponding to the second association information, and the transmission client detects the data packet of the service flow corresponding to the second association information. If the data packet of the service flow includes the sending timestamp, the transmission client records the reception time of the data packet based on the local configuration, and feeds back the recorded reception time to the transmission server.

Based on Implementation 1, there are multiple methods for adjusting a service flow, so that the associated service flows meet the synchronization delay requirement. Methods for adjusting a service flow are the same as the adjustment method 1, the adjustment method 2, and the adjustment method 3 in the embodiment in FIG. 3(a). Reference may be made to the foregoing descriptions.

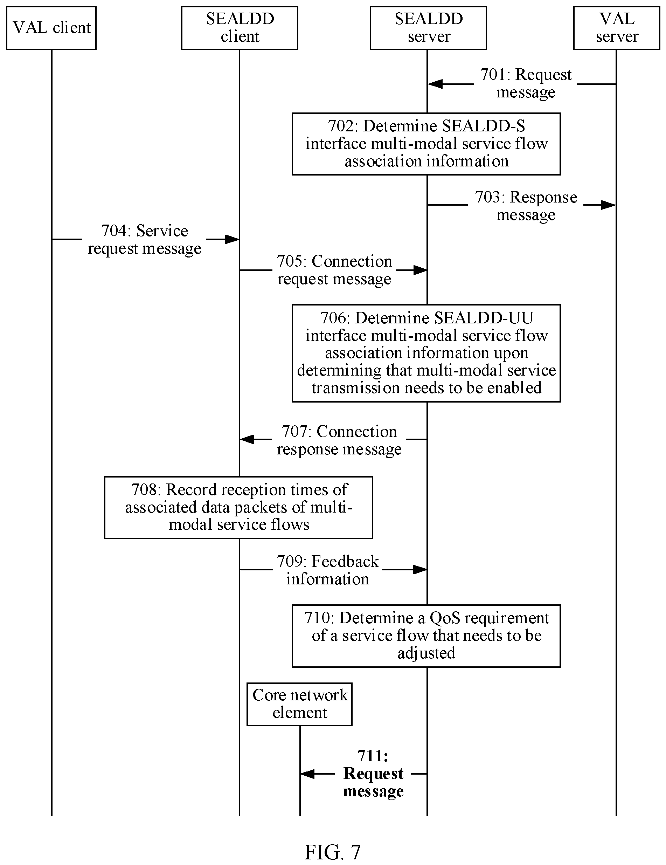

For specific examples of the three different adjustment methods in Implementation 1, refer to subsequent embodiments in FIG. 7 to FIG. 9.

Implementation 2: The communication device in the embodiment in FIG. 3(b) is the transmission client.

For example, based on Implementation 2, the transmission client may determine the first reception time of the first data packet of the first service flow by using the following method: The transmission client receives the first data packet of the first service flow from the transmission server, and records the first reception time of the first data packet, where the first reception time is a time at which the transmission client receives the first data packet. The user plane path of the first data packet is: application server -> transmission server -> UPF network element -> base station -> transmission client -> application client.

For example, based on Implementation 2, the transmission client may determine the second reception time of the second data packet of the second service flow by using the following method: The transmission client receives the second data packet of the second service flow from the transmission server, and records the second reception time of the second data packet, where the second reception time is a time at which the transmission client receives the second data packet. The user plane path of the second data packet is: application server -> transmission server -> UPF network element -> base station -> transmission client -> application client.

In an implementation, the transmission client further receives a reception time recording indication from the transmission server, where the reception time recording indication indicates to record a reception time of a data packet of the first service flow and a reception time of a data packet of the second service flow. Accordingly, based on the reception time recording indication, the transmission client records the first reception time of the first data packet after receiving the first data packet, and records the second reception time of the second data packet after receiving the second data packet.

In an implementation, the transmission client further receives second association information from the transmission server. For the meaning of the second association information, refer to the descriptions in the foregoing Implementation 1. The transmission client can identify, based on the second association information, which service flows in service flows requested by the application client are associated service flows.

For example, the transmission server may simultaneously send the second association information and the foregoing reception time recording indication to the transmission client, to indicate the transmission client to record reception times of data packets of service flows (for example, including the first service flow and the second service flow) indicated by the second association information. In an implementation, the transmission client detects, based on the reception time recording indication and the second association information, data packets of service flows (for example, including the first service flow and the second service flow) indicated by the second association information, and records reception times of associated data packets of service flows indicated by the second association information. For an implementation of identifying associated data packets by the transmission client, refer to related descriptions in the embodiment in FIG. 3(a).

It should be noted that the reception time recording indication is optional information. For example, the transmission server sends the second association information to the transmission client, but does not send the reception time recording indication. The transmission client may determine, based on the second association information provided by the transmission server and a local configuration of the transmission client, to record the reception time of the data packet. For example, the transmission server encapsulates a sending timestamp in a data packet of a service flow corresponding to the second association information, and the transmission client detects the data packet of the service flow corresponding to the second association information. If the data packet of the service flow includes the sending timestamp, the transmission client records the reception time of the data packet based on the local configuration.

Based on Implementation 2, there are multiple methods for adjusting a service flow, so that the associated service flows meet the synchronization delay requirement. Methods for adjusting a service flow are the same as the adjustment method A, the adjustment method B, and the adjustment method C in the embodiment in FIG. 3(a). Reference may be made to the foregoing descriptions.

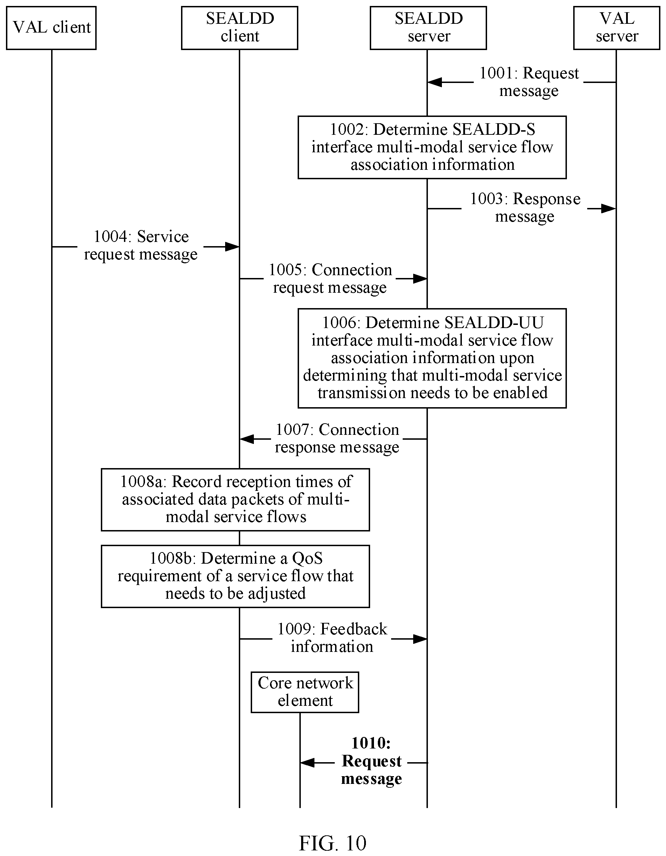

For specific examples of the three different adjustment methods in Implementation 2, refer to subsequent embodiments in FIG. 10 to FIG. 12.

The following describes the embodiments of FIG. 3(a) and FIG. 3(b) with reference to specific examples.

The following embodiments in FIG. 4 to FIG. 6 are specific examples of the embodiment in FIG. 3(a), and the following embodiments in FIG. 7 to FIG. 12 are specific examples of the embodiment in FIG. 3(b). In the following embodiments in FIG. 4 to FIG. 12, a specific example in which a VAL client, a SEALDD client, a SEALDD server, and a VAL server are respectively the application client, the transmission client, the transmission server, and the application server in the embodiments in FIG. 3(a) and FIG. 3(b) is used for description. In the following embodiments in FIG. 4 to FIG. 12, SEALDD-S interface multi-modal service flow association information is a specific example of the first association information in the embodiments in FIG. 3(a) and FIG. 3(b), and SEALDD-UU interface multi-modal service flow association information is a specific example of the second association information in the embodiments in FIG. 3(a) and FIG. 3(b).

FIG. 4 is a schematic flowchart of a communication method according to an embodiment of this application. The method includes the following steps.

Step 401: A VAL server sends a request message to a SEALDD server. Correspondingly, the SEALDD server receives the request message.

The request message may be a subscription request message or a common request message.

The request message includes one or more of a VAL server identifier, a VAL service identifier, a multi-modal service flow address on a VAL server side (for example, each multi-modal service flow address includes an IP address, or includes an IP address and a port number), a multi-modal service flow transmission requirement, or a synchronization delay requirement between multi-modal service flows.

There are two or more multi-modal service flows, and these service flows may be from a same VAL server, or may be from different VAL servers. For example, the multi-modal service flows include a service flow #1 (a video flow), a service flow #2 (an audio flow), and a service flow #3 (a haptic flow).

The VAL server identifier uniquely identifies a VAL server.

In an implementation, if the multiple multi-modal service flows are from a same VAL server, each multi-modal service flow may be indicated by a VAL service identifier. For example, a VAL service identifier #1 indicates the service flow #1, which corresponds to a multi-modal service flow address #1 on the VAL server side (for example, including an IP address #1 and a port number #1). A VAL service identifier #2 indicates the service flow #2, which corresponds to a multi-modal service flow address #2 on the VAL server side (for example, including the IP address #1 and a port number #2, or including an IP address #2 and the port number #1, or including the IP address #2 and the port number #2). A VAL identifier #3 indicates the service flow #3, which corresponds to a multi-modal service flow address #3 on the VAL server side (for example, including the IP address #1 and a port number #3, or including an IP address #3 and the port number #1, or including the IP address #3 and the port number #2, or including the IP address #3 and the port number #3).

In another implementation, if the multiple multi-modal service flows are from multiple VAL servers, each multi-modal service flow may be indicated by a VAL server identifier and/or a VAL service identifier. For example, a VAL server identifier #1 indicates the service flow #1, or a VAL server identifier #1 and a VAL service identifier #1 jointly indicate the service flow #1, which corresponds to a multi-modal service flow address #1 on the VAL server side (for example, including an IP address #1 and a port number #1). A VAL server identifier #2 indicates the service flow #2, or a VAL server identifier #2 and a VAL service identifier #2 jointly indicate the service flow #2, which corresponds to a multi-modal service flow address #2 on the VAL server side (for example, including an IP address #2 and the port number #1, or including the IP address #2 and a port number #2). A VAL server identifier #3 indicates the service flow #3, or a VAL server identifier #3 and a VAL service identifier #3 jointly indicate the service flow #3, which corresponds to a multi-modal service flow address #3 on the VAL server side (for example, including an IP address #3 and the port number #1, or including the IP address #3 and the port number #2, or including the IP address #3 and a port number #3).

The multi-modal service flow transmission requirement indicates a transmission delay requirement of a service flow, that is, a delay of the service flow from the SEALDD server to the SEALDD client. For example, a transmission delay requirement of the service flow #1 is 100 ms, a transmission delay requirement of the service flow #2 is 95 ms, and a transmission delay requirement of the service flow #3 is 80 ms. In an implementation, each multi-modal service flow transmission requirement may indicate a transmission delay requirement of one service flow. For example, a multi-modal service flow transmission requirement #1 indicates the transmission delay requirement of the service flow #1, a multi-modal service flow transmission requirement #2 indicates the transmission delay requirement of the service flow #2, and a multi-modal service flow transmission requirement #3 indicates the transmission delay requirement of the service flow #3. In another implementation, one multi-modal service flow transmission requirement may indicate transmission delay requirements of multiple service flows. For example, a multi-modal service flow transmission requirement indicates the transmission delay requirements of the service flow #1, the service flow #2, and the service flow #3.

The synchronization delay requirement between multi-modal service flows indicates a synchronization delay relationship between different multi-modal service flows. For example, the synchronization delay requirement between multi-modal service flows indicates that a difference between a time at which a VAL client receives a data packet of the service flow #1 and a time at which the VAL client receives a data packet of the service flow #2 is within a range of 0 ms to 50 ms, where 50 ms may be referred to as a synchronization delay threshold #1. For another example, the synchronization delay requirement between multi-modal service flows indicates that a difference between a time at which the VAL client receives a data packet of the service flow #2 and a time at which the VAL client receives a data packet of the service flow #3 is within a range of 0 ms to 30 ms, where 30 ms may be referred to as a synchronization delay threshold #2. The synchronization delay threshold is also referred to as a delay tolerance value, a maximum delay interval, or the like. In an implementation, each synchronization delay requirement between multi-modal service flows may indicate a synchronization delay relationship between two multi-modal service flows. For example, a synchronization delay requirement #1 between multi-modal service flows indicates the synchronization delay relationship between the service flow #1 and the service flow #2, and a synchronization delay requirement #2 between multi-modal service flows indicates the synchronization delay relationship between the service flow #2 and the service flow #3. In another implementation, one synchronization delay requirement between multi-modal service flows may indicate synchronization delay relationships between three or more multi-modal service flows. For example, a synchronization delay requirement between multi-modal service flows indicates the synchronization delay relationship between the service flow #1 and the service flow #2, and indicates the synchronization delay relationship between the service flow #2 and the service flow #3.

Step 402: The SEALDD server determines SEALDD-S interface multi-modal service flow association information.

The SEALDD-S interface multi-modal service flow association information is a specific example of the first association information in the embodiment in FIG. 3(a).

In an implementation, the SEALDD-S interface multi-modal service flow association information includes an association indication and SEALDD-S interface addresses respectively corresponding to multiple multi-modal service flows, and the association indication explicitly indicates that there is an association among the multiple multi-modal service flows. The SEALDD-S interface address may include a multi-modal service flow address on the VAL server side corresponding to a multi-modal service flow, or include a multi-modal service flow address on a SEALDD server side allocated by the SEALDD server to the VAL server, or include a multi-modal service flow address on the VAL server side and a multi-modal service flow address on the SEALDD server side allocated by the SEALDD server to the VAL server. The multi-modal service flow address on the SEALDD server side allocated by the SEALDD server to the VAL server may include an IP address, or include an IP address and a port number. For example, the request message in step 401 includes the multi-modal service flow address #1 on the VAL server side corresponding to the service flow #1, the multi-modal service flow address #2 on the VAL server side corresponding to the service flow #2, and the multi-modal service flow address #3 on the VAL server side corresponding to the service flow #3. In this case, the multi-modal service flow address on the SEALDD server side allocated by the SEALDD server to the VAL server includes a multi-modal service flow address #1 on the SEALDD server side corresponding to the service flow #1, a multi-modal service flow address #2 on the SEALDD server side corresponding to the service flow #2, and a multi-modal service flow address #3 on the SEALDD server side corresponding to the service flow #3. Therefore, the SEALDD-S interface multi-modal service flow association information may be <SEALDD-S interface address #1, SEALDD-S interface address #2, SEALDD-S interface address #3, association indication>, where the SEALDD-S interface address #1 includes the multi-modal service flow address #1 on the VAL server side and/or the multi-modal service flow address #1 on the SEALDD server side, the SEALDD-S interface address #2 includes the multi-modal service flow address #2 on the VAL server side and/or the multi-modal service flow address #2 on the SEALDD server side, and the SEALDD-S interface address #3 includes the multi-modal service flow address #3 on the VAL server side and/or the multi-modal service flow address #3 on the SEALDD server side.

In another implementation, the SEALDD-S interface multi-modal service flow association information includes SEALDD-S interface addresses respectively corresponding to multiple multi-modal service flows, and a same association identifier corresponding to each SEALDD-S interface address. Because each SEALDD-S interface address corresponds to a same association identifier, it is implicitly indicated that there is an association among the multiple multi-modal service flows. For the meaning of the SEALDD-S interface address, refer to the foregoing descriptions. For example, the SEALDD-S interface multi-modal service flow association information includes <SEALDD-S interface address #1, association identifier #1>, <SEALDD-S interface address #2, association identifier #1>, and <SEALDD-S interface address #3, and association identifier #1>. Because the SEALDD-S interface address #1, the SEALDD-S interface address #2, and the SEALDD-S interface address #3 correspond to the same association identifier #1, there is an association among the SEALDD-S interface address #1, the SEALDD-S interface address #2, and the SEALDD-S interface address #3, and there is an association among the service flow #1, the service flow #2, and the service flow #3.

Step 403: The SEALDD server sends a response message to the VAL server. Correspondingly, the VAL server receives the response message.

The response message may be a subscription response message or a common response message.

The response message includes the multi-modal service flow address on the SEALDD server side allocated by the SEALDD server to the VAL server. For example, the response message includes the multi-modal service flow address #1 on the SEALDD server side corresponding to the service flow #1, the multi-modal service flow address #2 on the SEALDD server side corresponding to the service flow #2, and the multi-modal service flow address #3 on the SEALDD server side corresponding to the service flow #3.

When subsequently sending a multi-modal service flow to the SEALDD server, the VAL server may include a source address and/or a destination address in a data packet of the multi-modal service flow. The source address may be the multi-modal service flow address on the VAL server side, and the destination address may be the multi-modal service flow address on the SEALDD server side. For example, for a data packet of the service flow #1, a source address carried in a packet header of the data packet may be the multi-modal service flow address #1 on the VAL server side, and a destination address may be the multi-modal service flow address #1 on the SEALDD server side. For a data packet of the service flow #2, a source address carried in a packet header of the data packet may be the multi-modal service flow address #2 on the VAL server side, and a destination address may be the multi-modal service flow address #2 on the SEALDD server side.

Step 404: The VAL client sends a service request message to the SEALDD client. Correspondingly, the SEALDD client receives the service request message.

The service request message includes a VAL server identifier and a VAL service identifier. There may be two or more VAL service identifiers.

The VAL server identifier uniquely identifies a VAL server.

The VAL service identifier indicates a multi-modal service flow, or the VAL server identifier and the VAL service identifier jointly indicate a multi-modal service flow. For specific descriptions, refer to step 401.

Step 405: The SEALDD client sends a connection request message to the SEALDD server. Correspondingly, the SEALDD server receives the connection request message.

The connection request message includes one or more of a SEALDD client identifier, a VAL server identifier, a VAL service identifier, a SEALDD flow identifier (SEALDD flow ID), or multi-modal service flow address on a SEALDD client side.

The SEALDD client identifier uniquely identifies a SEALDD client.

The SEALDD flow identifier uniquely identifies a SEALDD flow. One SEALDD flow is used to transmit data packets of one or more service flows.

The multi-modal service flow address on the SEALDD client side may include an IP address, or include an IP address and a port number.

Step 406: If the SEALDD server determines that multi-modal service transmission needs to be enabled, the SEALDD server determines SEALDD-UU interface multi-modal service flow association information.

The SEALDD-UU interface multi-modal service flow association information is a specific example of the second association information in the embodiment in FIG. 3(a).

For example, a method for the SEALDD server to determine that multi-modal service transmission needs to be enabled may be: The SEALDD server determines, based on the request message in step 401 and the connection request message in step 405, that multi-modal service transmission needs to be enabled. For example, the SEALDD server determines, based on the request message in step 401, that the service flow #1, the service flow #2, and the service flow #3 are associated multi-modal service flows, and determines, based on the connection request message in step 405, that the SEALDD client is requesting to transmit the service flow #1, the service flow #2, and the service flow #3. Therefore, the SEALDD server determines that associated transmission of the service flow #1, the service flow #2, and the service flow #3 needs to be enabled.

In an implementation, the SEALDD-UU interface multi-modal service flow association information includes an association indication and SEALDD-UU interface addresses respectively corresponding to multiple multi-modal service flows, and the association indication explicitly indicates that there is an association among the multiple multi-modal service flows. The SEALDD-UU interface address may include a multi-modal service flow address on the SEALDD client side corresponding to a multi-modal service flow, or include a multi-modal service flow address on the SEALDD server side allocated by the SEALDD server to the SEALDD client, or include a multi-modal service flow address on the SEALDD client side and a multi-modal service flow address on the SEALDD server side allocated by the SEALDD server to the SEALDD client. The multi-modal service flow address on the SEALDD server side allocated by the SEALDD server to the SEALDD client may include an IP address, or include an IP address and a port number. For example, the connection request message in step 405 includes a multi-modal service flow address #1 on the SEALDD client side corresponding to the service flow #1, a multi-modal service flow address #2 on the SEALDD client side corresponding to the service flow #2, and a multi-modal service flow address #3 on the SEALDD client side corresponding to the service flow #3. In this case, the multi-modal service flow address on the SEALDD server side allocated by the SEALDD server to the SEALDD client includes a multi-modal service flow address #1 on the SEALDD server side corresponding to the service flow #1, a multi-modal service flow address #2 on the SEALDD server side corresponding to the service flow #2, and a multi-modal service flow address #3 on the SEALDD server side corresponding to the service flow #3. Therefore, the SEALDD-UU interface multi-modal service flow association information may be <SEALDD-UU interface address #1, SEALDD-UU interface address #2, SEALDD-UU interface address #3, association indication>, where the SEALDD-UU interface address #1 includes the multi-modal service flow address #1 on the SEALDD client side and/or the multi-modal service flow address #1 on the SEALDD server side, the SEALDD-UU interface address #2 includes the multi-modal service flow address #2 on the SEALDD client side and/or the multi-modal service flow address #2 on the SEALDD server side, and the SEALDD-UU interface address #3 includes the multi-modal service flow address #3 on the SEALDD client side and/or the multi-modal service flow address #3 on the SEALDD server side.

In another implementation, the SEALDD-UU interface multi-modal service flow association information includes SEALDD-UU interface addresses respectively corresponding to multiple multi-modal service flows, and a same association identifier corresponding to each SEALDD-UU interface address. Because each SEALDD-UU interface address corresponds to a same association identifier, it is implicitly indicated that there is an association among the multiple multi-modal service flows. For the meaning of the SEALDD-UU interface address, refer to the foregoing descriptions. For example, the SEALDD-UU interface multi-modal service flow association information includes <SEALDD-UU interface address #1, association identifier #1>, <SEALDD-UU interface address #2, association identifier #1>, and <SEALDD-UU interface address #3, association identifier #1>. Because the SEALDD-UU interface address #1, the SEALDD-UU interface address #2, and the SEALDD-UU interface address #3 correspond to the same association identifier #1, there is an association among the SEALDD-UU interface address #1, the SEALDD-UU interface address #2, and the SEALDD-UU interface address #3, and there is an association among the service flow #1, the service flow #2, and the service flow #3.

For a same service flow, a multi-modal service flow address on the SEALDD server side that corresponds to the service flow and that is allocated by the SEALDD server to the SEALDD client may be the same as or different from a multi-modal service flow address on the SEALDD server side that corresponds to the service flow and that is allocated by the SEALDD server to the VAL server.

It should be noted that the SEALDD-UU interface address may be represented by the multi-modal service flow address on the SEALDD client side and/or the multi-modal service flow address on the SEALDD server side allocated by the SEALDD server to the SEALDD client, or may be represented by the SEALDD flow identifier. For example, the SEALDD-UU interface address #1 corresponding to the service flow #1 is a SEALDD flow identifier #1, the SEALDD-UU interface address #2 corresponding to the service flow #2 is a SEALDD flow identifier #2, and the SEALDD-UU interface address #3 corresponding to the service flow #3 is a SEALDD flow identifier #3.

Step 407: The SEALDD server sends a connection response message to the SEALDD client. Correspondingly, the SEALDD client receives the connection response message.

The connection response message includes the SEALDD-UU interface multi-modal service flow association information and a reception time feedback indication. The reception time feedback indication indicates to record and feed back a reception time of a data packet of a multi-modal service flow.

Step 408a: The SEALDD server enables transmission delay measurement on the data packet of the SEALDD-UU multi-modal service flow.

Specifically, when a SEALDD-UU multi-modal service flow from the VAL server arrives at the SEALDD server, the SEALDD server identifies a SEALDD-S multi-modal service flow based on the SEALDD-S interface multi-modal service flow association information, maps a SEALDD-S interface multi-modal service flow to a SEALDD-UU interface for transmission, and enables transmission delay measurement on the data packet of the SEALDD-UU multi-modal service flow.

For example, enabling transmission delay measurement on the data packet of the SEALDD-UU multi-modal service flow by the SEALDD server may be: The SEALDD server includes a sending timestamp in the data packet of the SEALDD-UU multi-modal service flow, where the sending timestamp is a time at which the SEALDD server sends the data packet to the SEALDD client.

The SEALDD server maintains a mapping relationship between a SEALDD-S interface multi-modal service flow address and a SEALDD-UU interface multi-modal service flow address that correspond to a same service flow. Therefore, the SEALDD server may map, based on the mapping relationship, a SEALDD-S interface multi-modal service flow to a SEALDD-UU interface for transmission. For example, if there is a mapping relationship between the SEALDD-S interface address #1 and the SEALDD-UU interface address #1, the SEALDD server transmits the service flow #1 from the SEALDD-S interface address #1 to the SEALDD client via the SEALDD-UU interface address #1. Specifically, the data packet of the service flow #1 carries the SEALDD-S interface address #1, and the SEALDD-S interface address #1 may be used as the destination address and/or the source address of the data packet. Then, after receiving the data packet, the SEALDD server adds the SEALDD-UU interface address #1 to the data packet, and sends the data packet to the SEALDD client. The SEALDD-UU interface address #1 may be used as the destination address and/or the source address of the data packet.

The SEALDD server further identifies associated data packets in multiple multi-modal service flows, and maintains an association among the associated data packets of the multi-modal service flow. For example, the SEALDD server may determine the associated data packets in the multiple multi-modal service flows by identifying related information in the data packets. For example, if a transmission protocol corresponding to a multi-modal service flow is an RTP protocol, the SEALDD server may determine a generation time of a data packet based on timestamp information (Timestamp) carried in an RTP protocol header of the data packet. If generation times of data packets from different multi-modal service flows are the same, it is determined that these data packets are associated data packets. For example, it is assumed that the service flow #1 corresponds to the SEALDD-UU interface address #1, and data packets of the service flow #1 are <data packet #1-1, data packet #1-2, data packet #1-3, ...>; the service flow #2 corresponds to the SEALDD-UU interface address #2, and data packets of the service flow #2 are <data packet #2-1, data packet #2-2, data packet #2-3, ...>; and the service flow #3 corresponds to the SEALDD-UU interface address #3, and data packets of the service flow #3 are <data packet #3-1, data packet #3-2, data packet #3-3, ...>. If the service flow #1, the service flow #2, and the service flow #3 are associated service flows, and the data packet #1-1, the data packet #2-1, and the data packet #3-1 are associated data packets, the SEALDD server maintains an association among the data packet #1-1, the data packet #2-1, and the data packet #3-1, for example, records a mapping relationship between sequence numbers of these data packets.

When associated data packets are transmitted to the SEALDD client, the synchronization delay requirement between multi-modal service flows needs to be met. Otherwise, user experience is affected.

Step 408b: The SEALDD client sends feedback information to the SEALDD server, where the feedback information includes a sequence number and a reception timestamp of the data packet. Correspondingly, the SEALDD server receives the feedback information.

Specifically, the SEALDD client identifies a multi-modal service flow from the SEALDD server based on the SEALDD-UU interface multi-modal service flow association information, and sends feedback information to the SEALDD server based on the reception time feedback indication. The feedback information includes a sequence number and a reception timestamp of a data packet. Optionally, the feedback information further includes a sending timestamp of the data packet.

The sequence number of the data packet indicates a sequence number of the data packet in the multi-modal service flow.

The reception timestamp indicates a time at which the SEALDD client receives the data packet of the multi-modal service flow, and is generated by the SEALDD client when the SEALDD client receives the data packet of the multi-modal service flow.

In an implementation, sending the feedback information to the SEALDD server by the SEALDD client may be: After receiving a data packet of an uplink service flow from the VAL client, the SEALDD client includes the feedback information in the data packet.

In another implementation, sending the feedback information to the SEALDD server by the SEALDD client may be: The SEALDD client constructs a data packet, and sends the data packet to the SEALDD server, where the data packet carries the feedback information. The data packet is dedicated to sending of the feedback information, and is not used to transmit uplink data from the VAL client. Therefore, the data packet may also be referred to as an uplink null data packet.

It should be noted that the SEALDD client may send feedback information to the SEALDD server for each received data packet of a SEALDD-UU interface multi-modal service flow, or may periodically send feedback information to the SEALDD server according to a feedback periodicity. Alternatively, for a data packet received by the SEALDD client, if the data packet carries a sending timestamp, the SEALDD client sends feedback information for the data packet to the SEALDD server. The sending timestamp in the data packet is added by the SEALDD server to the data packet before the SEALDD server sends the data packet to the SEALDD client, and the sending timestamp indicates a time at which the SEALDD server sends the data packet to the SEALDD client.

Step 409a: The SEALDD server determines transmission delay measurement values of associated data packets of multi-modal service flows.

For each data packet in the associated data packets of the multi-modal service flows, the SEALDD server determines a transmission delay measurement value of the data packet based on the reception timestamp of the data packet and the sending timestamp of the data packet. The transmission delay measurement value is a delay of transmitting the data packet from the SEALDD server to the SEALDD client, that is, the transmission delay measurement value is equal to the reception timestamp minus the sending timestamp.

For example, if the data packet #1-1 of the service flow #1, the data packet #2-1 of the service flow #2, and the data packet #3-1 of the service flow #3 are associated data packets, when sending the data packets to the SEALDD client, the SEALDD server adds a data packet sequence number #1-1 and a sending timestamp T1-1 to the data packet #1-1, adds a data packet sequence number #2-1 and a sending timestamp T2-1 to the data packet #2-1, and adds a data packet sequence number #3-1 and a sending timestamp T3-1 to the data packet #3-1. Correspondingly, the SEALDD server receives feedback information 1 corresponding to the data packet #1-1, where the feedback information 1 includes the data packet sequence number #1-1 and a reception timestamp T1-2, receives feedback information 2 corresponding to the data packet #2-1, where the feedback information 2 includes the data packet sequence number #2-1 and a reception timestamp T2-2, and receives feedback information 3 corresponding to the data packet #3-1, where the feedback information 3 includes the data packet sequence number #3-1 and a reception timestamp T3-2, therefore, the SEALDD server determines that the transmission delay measurement value corresponding to the data packet 1-1 is T1-2 minus T1-1, the transmission delay measurement value corresponding to the data packet 2-1 is T2-2 minus T2-1, and the transmission delay measurement value corresponding to the data packet 3-1 is T3-2 minus T3-1.

Step 409b: The SEALDD server determines, based on the synchronization delay requirement between multi-modal service flows, the transmission delay measurement values of the associated data packets of the multi-modal service flows, and the multi-modal service flow transmission requirement, a QoS requirement of a service flow that needs to be adjusted.

For example, the synchronization delay requirement between multi-modal service flows indicates that the service flow #1 may arrive at the VAL client no more than a synchronization delay threshold #1 later than the service flow #2. If a difference between a time at which the data packet of the service flow #1 arrives at the VAL client and a time at which the data packet of the service flow #2 arrives at the VAL client is greater than the synchronization delay threshold #1, the SEALDD server determines that the service flow that needs to be adjusted is the service flow #1, and further determines the QoS requirement of the service flow #1, so that the QoS requirement of the service flow #1 meets the transmission requirement of the service flow #1, and the difference between the time at which the data packet of the service flow #1 arrives at the VAL client and the time at which the data packet of the service flow #2 arrives at the VAL client is less than or equal to the synchronization delay threshold #1 after the transmission delay of the service flow #1 is adjusted based on the QoS requirement of the service flow #1.

For example, it is assumed that the synchronization delay requirement between multi-modal service flows indicates that the service flow #1 may arrive at the VAL client no more than 10 ms later than the service flow #2, that is, the difference between the time at which the data packet of the service flow #1 arrives at the VAL client and the time at which the data packet of the service flow #2 arrives at the VAL client is less than 10 ms, and the transmission requirement of the service flow #1 is that the transmission delay does not exceed 100 ms. It is assumed that the transmission delay measurement value of the data packet #1-1 of the service flow #1 received by the SEALDD server is 105 ms, and the transmission delay measurement value of the data packet 2-1 of the service flow #2 is 92 ms, and it is assumed that the difference between the time at which the data packet #1-1 arrives at the VAL client and the time at which the data packet 2-1 arrives at the VAL client being greater than 10 ms indicates that the synchronization delay relationship is not satisfied. It is assumed that the SEALDD server determines that the QoS requirement of the service flow #1 needs to be adjusted, and the SEALDD server determines that the transmission delay corresponding to the QoS requirement of the service flow #1 that needs to be adjusted is 92 ms to 100 ms, that is, the transmission delay of the data packet of the service flow #1 needs to be adjusted to any value between 92 ms and 100 ms.

Step 410: The SEALDD server sends a request message to a core network element. Correspondingly, the core network element receives the request message.

The request message is used to request to update a QoS parameter, and the request message includes description information (flow description information) of the service flow that needs to be adjusted and the QoS requirement of the service flow that needs to be adjusted. The description information of the service flow that needs to be adjusted may include a VAL server identifier and/or a VAL service identifier, or include a SEALDD-UU interface address corresponding to the service flow that needs to be adjusted, or include a SEALDD-S interface address corresponding to the service flow that needs to be adjusted.

If the description information, carried in the request message, of the service flow that needs to be adjusted is the SEALDD-S interface address of the multi-modal service flow, the SEALDD server may determine the SEALDD-S interface address of the multi-modal service flow by using the following method: The SEALDD server determines a SEALDD-UU interface address of a multi-modal service flow whose QoS requirement needs to be adjusted between the SEALDD server and the SEALDD client, and then the SEALDD server determines, based on a mapping relationship between SEALDD-S interface multi-modal service flow association information and SEALDD-U interface multi-modal service flow association information, a SEALDD-S interface address corresponding to the SEALDD-UU interface address of the multi-modal service flow.

For example, the core network element may be an NEF network element or a PCF network element in a 5G network. The SEALDD server may serve as an AF network element, and send the request message to the NEF network element through an N33 interface, or send the request message to the PCF network element through an N5 interface. If the NEF receives the request message, the NEF may send the request message to the PCF network element.

After receiving the request message, the PCF network element may perform QoS adjustment on the service flow based on the QoS requirement of the service flow that needs to be adjusted, so that transmission of the service flow meets the QoS requirement, and transmission of multi-modal service flows meets the synchronization delay requirement between multi-modal service flows.

In the foregoing solution, the SEALDD server maintains the SEALDD-S interface multi-modal service flow association information and the SEALDD-UU interface multi-modal service flow association information, and enables transmission delay measurement on the multi-modal service flow. The SEALDD server determines the QoS requirement of the service flow that needs to be adjusted, and requests the core network element to perform QoS adjustment on a specified service flow, so that the synchronization delay requirement is met between multi-modal service flows. The transmission delay in the solution refers to a delay of transmitting a data packet from the SEALDD server to the SEALDD client. Therefore, the transmission delay not only includes a transmission delay of the data packet in a network (that is, a delay from a UPF network element to UE), but also includes a transmission delay outside the network (that is, an N6 transmission delay from the SEALDD server to the UPF network element). Therefore, a transmission delay between multi-modal service flows can be more accurately reflected, helping accurately implement transmission synchronization between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

FIG. 5 is a schematic flowchart of a communication method according to an embodiment of this application. The method includes the following steps.

Step 501 to step 507 are the same as step 401 to step 407 in the embodiment in FIG. 4.

That is, step 501 to step 507 correspond identically to step 401 to step 407.

Step 508a to step 508b are the same as step 408a to step 408b in the embodiment in FIG. 4.

That is, step 508a to step 508b correspond identically to step 408a to step 408b.

Step 509a is the same as step 409a in the embodiment in FIG. 4.

Step 509b: The SEALDD server determines, based on the synchronization delay requirement between multi-modal service flows, the transmission delay measurement values of the associated data packets of the multi-modal service flows, and the multi-modal service flow transmission requirement, a packet sending time advance of a service flow that needs to be adjusted.

For example, the synchronization delay requirement between multi-modal service flows indicates that the service flow #1 may arrive at the VAL client no more than a synchronization delay threshold #1 later than the service flow #2. If a difference between a time at which the data packet of the service flow #1 arrives at the VAL client and a time at which the data packet of the service flow #2 arrives at the VAL client is greater than the synchronization delay threshold #1, the SEALDD server determines that the service flow that needs to be adjusted is the service flow #1, and further determines the packet sending time advance of the service flow #1. The data packet of the service flow #1 is sent in advance, so that the difference between the time at which the data packet of the service flow #1 arrives at the VAL client and the time at which the data packet of the service flow #2 arrives at the VAL client is less than or equal to the synchronization delay threshold #1.

For example, it is assumed that the synchronization delay requirement between multi-modal service flows indicates that the service flow #1 may arrive at the VAL client no more than 10 ms later than the service flow #2, that is, the difference between the time at which the data packet of the service flow #1 arrives at the VAL client and the time at which the data packet of the service flow #2 arrives at the VAL client is less than 10 ms, and the transmission requirement of the service flow #1 is that the transmission delay does not exceed 100 ms. It is assumed that the transmission delay measurement value of the data packet #1-1 of the service flow #1 received by the SEALDD server is 105 ms, and the transmission delay measurement value of the data packet 2-1 of the service flow #2 is 92 ms, and it is assumed that the difference between the time at which the data packet #1-1 arrives at the VAL client and the time at which the data packet 2-1 arrives at the VAL client being greater than 10 ms indicates that the synchronization delay relationship is not satisfied. It is assumed that the SEALDD server determines that the packet sending time of the service flow #1 needs to be adjusted, and the SEALDD server determines that the packet sending time of the service flow #1 that needs to be adjusted may be advanced by 5 ms to 13 ms, that is, the packet sending time of the data packet of the service flow #1 needs to be advanced by any value between 5 ms and 13 ms.

Step 510: The SEALDD server sends a first message to the VAL server. Correspondingly, the VAL server receives the first message.

For example, the first message may be a notification message, a request message, or a message of another type. This is not limited in this application.

The first message is used to notify the VAL server to adjust the packet sending time of the service flow, and the first message includes description information of the service flow that needs to be adjusted and the packet sending time advance of the service flow. For example, for the foregoing example, the first message includes identification information of the service flow #1 and the packet sending time advance of the service flow #1, where the packet sending time advance is 5 ms to 13 ms, or any value between 5 ms and 13 ms.

In another implementation, in step 509b, after determining the service flow that needs to be adjusted, the SEALDD server does not need to determine the packet sending time advance of the service flow that needs to be adjusted, but includes, in the first message sent to the VAL server, the description information of the multi-modal service flow and the transmission delay measurement value of the multi-modal service flow. Then, the VAL server determines, based on the transmission delay measurement value of the multi-modal service flow, the packet sending time advance of the service flow that needs to be adjusted, and sends packets of the service flow in advance based on the packet sending time advance. For example, for the foregoing example, the first message includes identification information of the service flow #1, identification information of the service flow #2, a transmission delay measurement value #1 (that is, 105 ms) of the service flow #1, and a transmission delay measurement value #2 (that is, 92 ms) of the service flow #2. Then, the VAL server determines that the service flow that needs to be adjusted is the service flow #1, and determines that the packet sending time advance of the service flow #1 is any value between 5 ms and 13 ms.

In another implementation, in step 509b, after determining the service flow that needs to be adjusted, the SEALDD server does not need to determine the packet sending time advance of the service flow that needs to be adjusted, but includes, in the first message sent to the VAL server, the description information of the multi-modal service flow and a difference between transmission delay measurement values of different multi-modal service flows. Then, the VAL server determines, based on the difference between transmission delay measurement values of multi-modal service flows, the packet sending time advance of the service flow that needs to be adjusted, and sends packets of the service flow in advance based on the packet sending time advance. For example, for the foregoing example, the first message includes identification information of the service flow #1, identification information of the service flow #2, and a difference between the transmission delay measurement value of the service flow #1 and the transmission delay measurement value of the service flow #2 (that is, 13 ms). Then, the VAL server determines that the service flow that needs to be adjusted is the service flow #1, and determines that the packet sending time advance of the service flow #1 is 13 ms or a value slightly less than 13 ms.

The description information of the service flow may include a VAL server identifier and/or a VAL service identifier, or include a SEALDD-UU interface address corresponding to the service flow, or include a SEALDD-S interface address corresponding to the service flow. If the description information, carried in the first message in step 510, of the service flow that needs to be adjusted is the SEALDD-S interface address of the multi-modal service flow, the SEALDD server may determine the SEALDD-S interface address of the multi-modal service flow by using the following method: The SEALDD server determines a SEALDD-UU interface address of a multi-modal service flow whose packet sending time needs to be adjusted between the SEALDD server and the SEALDD client, and then the SEALDD server determines, based on a mapping relationship between SEALDD-S interface multi-modal service flow association information and SEALDD-U interface multi-modal service flow association information, a SEALDD-S interface address corresponding to the SEALDD-UU interface address of the multi-modal service flow.

It should be noted that step 510 is an optional step, that is, the VAL server may not need to adjust the packet sending time of the service flow. Instead, the SEALDD server adjusts the packet sending time of the service flow. For example, if the SEALDD server has stored data of a related multi-modal service flow in advance, the SEALDD server may adjust the packet sending time of the multi-modal service flow based on the packet sending time advance of the service flow that needs to be adjusted determined in step 509.

In the foregoing solution, the SEALDD server maintains the SEALDD-S interface multi-modal service flow association information and the SEALDD-UU interface multi-modal service flow association information, and enables transmission delay measurement on the multi-modal service flow. The SEALDD server determines the packet sending time advance of the service flow that needs to be adjusted, and the SEALDD server adjusts the packet sending time of the service flow based on the packet sending time advance, or notifies the VAL server to adjust the packet sending time of the service flow, so that the synchronization delay requirement is met between multi-modal service flows. The transmission delay in the solution refers to a delay of transmitting a data packet from the SEALDD server to the SEALDD client. Therefore, the transmission delay not only includes a transmission delay of the data packet in a network (that is, a delay from a UPF network element to UE), but also includes a transmission delay outside the network (that is, an N6 transmission delay from the SEALDD server to the UPF network element). Therefore, a transmission delay between multi-modal service flows can be more accurately reflected, helping accurately implement transmission synchronization between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

FIG. 6 is a schematic flowchart of a communication method according to an embodiment of this application. The method includes the following steps.

Step 601 to step 607 are the same as step 401 to step 407 in the embodiment in FIG. 4.

That is, step 601 to step 607 correspond identically to step 401 to step 407.

Step 608a to step 608b are the same as step 408a to step 408b in the embodiment in FIG. 4.

That is, step 608a to step 608b correspond identically to step 408a to step 408b.

Step 609a is the same as step 409a in the embodiment in FIG. 4.

Step 609b: The SEALDD server determines, based on the synchronization delay requirement between multi-modal service flows, the transmission delay measurement values of the associated data packets of the multi-modal service flows, and the multi-modal service flow transmission requirement, a buffer time amount of a service flow that needs to be adjusted.

For example, the synchronization delay requirement between multi-modal service flows indicates that the service flow #1 may arrive at the VAL client no more than a synchronization delay threshold #1 later than the service flow #2. If a difference between a time at which the data packet of the service flow #1 arrives at the VAL client and a time at which the data packet of the service flow #2 arrives at the VAL client is greater than the synchronization delay threshold #1, the SEALDD server determines that the service flow that needs to be adjusted is the service flow #2, and further determines the buffer time amount of the service flow #2, so that the difference between the time at which the data packet of the service flow #1 arrives at the VAL client and the time at which the data packet of the service flow #2 arrives at the VAL client is less than or equal to the synchronization delay threshold #1.

For example, it is assumed that the synchronization delay requirement between multi-modal service flows indicates that the service flow #1 may arrive at the VAL client no more than 10 ms later than the service flow #2, that is, the difference between the time at which the data packet of the service flow #1 arrives at the VAL client and the time at which the data packet of the service flow #2 arrives at the VAL client is less than 10 ms, and the transmission requirement of the service flow #1 is that the transmission delay does not exceed 100 ms. It is assumed that the transmission delay measurement value of the data packet #1-1 of the service flow #1 received by the SEALDD server is 98 ms, and the transmission delay measurement value of the data packet 2-1 of the service flow #2 is 85 ms, and it is assumed that the difference between the time at which the data packet #1-1 arrives at the VAL client and the time at which the data packet 2-1 arrives at the VAL client being greater than 10 ms indicates that the synchronization delay relationship is not satisfied. It is assumed that the SEALDD server determines that the data packet of the service flow #2 needs to be buffered, and determines that the buffer time amount of the service flow #2 is any value between 3 ms and 13 ms.

Step 610: The SEALDD server sends a second message to the SEALDD client. Correspondingly, the SEALDD client receives the second message.

For example, the second message may be a notification message, a request message, or a message of another type. This is not limited in this application.

The second message is used to notify the SEALDD client to buffer a data packet of a service flow, and the second message includes description information of the service flow that needs to be adjusted and the buffer time amount of the service flow. For example, for the foregoing example, the second message includes identification information of the service flow #2 and the buffer time amount of the service flow #2, where the buffer time amount is 3 ms to 13 ms, or any value between 3 ms and 13 ms. The SEALDD client identifies, based on the description information of the service flow that needs to be adjusted, the service flow that needs to be adjusted, and buffers the data packet of the service flow based on the buffer time amount notified by the SEALDD server.

It should be noted that step 610 is an optional step, that is, the SEALDD client may not need to buffer the data packet of the service flow. Instead, the SEALDD server buffers the data packet of the service flow. For example, the SEALDD server determines the buffer time amount of the data packet of the service flow that needs to be adjusted, and buffer the data packet based on the buffer time amount of the service flow.

In the foregoing solution, the SEALDD server maintains the SEALDD-S interface multi-modal service flow association information and the SEALDD-UU interface multi-modal service flow association information, and enables transmission delay measurement on the multi-modal service flow. The SEALDD server determines the buffer time amount of the service flow that needs to be adjusted, and the SEALDD server or the SEALDD client buffers the data packet of the service flow based on the buffer time amount, so that the synchronization delay requirement is met between multi-modal service flows. The transmission delay in the solution refers to a delay of transmitting a data packet from the SEALDD server to the SEALDD client. Therefore, the transmission delay not only includes a transmission delay of the data packet in a network (that is, a delay from a UPF network element to UE), but also includes a transmission delay outside the network (that is, an N6 transmission delay from the SEALDD server to the UPF network element). Therefore, a transmission delay between multi-modal service flows can be more accurately reflected, helping accurately implement transmission synchronization between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

FIG. 7 is a schematic flowchart of a communication method according to an embodiment of this application. The method includes the following steps.

Step 701 to step 706 are the same as step 401 to step 406 in the embodiment in FIG. 4.

That is, step 701 to step 706 correspond identically to step 401 to step 406.

Step 707: The SEALDD server sends a connection response message to the SEALDD client. Correspondingly, the SEALDD client receives the connection response message.

The connection response message includes SEALDD-UU interface multi-modal service flow association information, information for identifying associated data packets across SEALDD-UU interface multi-modal service flows, and a reception time feedback indication.

The SEALDD-UU interface multi-modal service flow association information is used to identify a multi-modal service flow.

The information for identifying associated data packets across SEALDD-UU interface multi-modal service flows is used to identify associated data packets of multi-modal service flows. For example, the information for identifying associated data packets across SEALDD-UU interface multi-modal service flows may be timestamp information carried in an RTP protocol header of a data packet of the multi-modal service flow. The SEALDD client determines a generation time of the data packet based on the timestamp information. If generation times of data packets from different multi-modal service flows are the same, it is determined that these data packets are associated data packets. For example, it is assumed that the service flow #1 corresponds to the SEALDD-UU interface address #1, and data packets of the service flow #1 are <data packet #1-1, data packet #1-2, data packet #1-3, ...>; the service flow #2 corresponds to the SEALDD-UU interface address #2, and data packets of the service flow #2 are <data packet #2-1, data packet #2-2, data packet #2-3, ...>; and the service flow #3 corresponds to the SEALDD-UU interface address #3, and data packets of the service flow #3 are <data packet #3-1, data packet #3-2, data packet #3-3, ...>. The SEALDD client identifies, based on the SEALDD-UU interface multi-modal service flow association information, that the service flow #1, the service flow #2, and the service flow #3 are associated service flows, and determines, based on the information for identifying associated data packets across SEALDD-UU interface multi-modal service flows, that the data packet #1-1, the data packet #2-1, and the data packet #3-1 are associated data packets. For another example, the information for identifying associated data packets across SEALDD-UU interface multi-modal service flows may be indication information added to the data packet. For example, the indication information may be a sequence number. If data packets of multi-modal service flows include same indication information, it is determined that these data packets are associated data packets.

The reception time feedback indication indicates to record and feed back reception times of associated data packets of multi-modal service flows.

Step 708: The SEALDD client records reception times of associated data packets of multi-modal service flows.

When downlink data arrives at the SEALDD client, the SEALDD client identifies a multi-modal service flow from the SEALDD server based on the SEALDD-UU interface multi-modal service flow association information, determines associated data packets of multi-modal service flows based on the information for identifying associated data packets across SEALDD-UU interface multi-modal service flows, and records reception times of the associated data packets of the multi-modal service flows.

For example, according to the foregoing example, the data packet #1-1, the data packet #2-1, and the data packet #3-1 are associated data packets, and corresponding reception timestamps are respectively T1-1, T2-1, and T3-1.

Step 709: The SEALDD client sends feedback information to the SEALDD server. Correspondingly, the SEALDD server receives the feedback information.

The feedback information includes the SEALDD-UU interface address of the multi-modal service flow and the reception times of the associated data packets of the multi-modal service flows.

Step 710: The SEALDD server determines, based on the synchronization delay requirement between multi-modal service flows, the reception times of the associated data packets of the multi-modal service flows, and the multi-modal service flow transmission requirement, a QoS requirement of a service flow that needs to be adjusted.

For example, the synchronization delay requirement between multi-modal service flows indicates that the service flow #1 may arrive at the VAL client no more than a synchronization delay threshold #1 later than the service flow #2. If a difference between a time at which the data packet of the service flow #1 arrives at the VAL client and a time at which the data packet of the service flow #2 arrives at the VAL client is greater than the synchronization delay threshold #1, the SEALDD server determines that the service flow that needs to be adjusted is the service flow #1, and further determines the QoS requirement of the service flow #1, so that the QoS requirement of the service flow #1 meets the transmission requirement of the service flow #1, and the difference between the time at which the data packet of the service flow #1 arrives at the VAL client and the time at which the data packet of the service flow #2 arrives at the VAL client is less than or equal to the synchronization delay threshold #1 after the transmission delay of the service flow #1 is adjusted based on the QoS requirement of the service flow #1.

For example, it is assumed that the synchronization delay requirement between multi-modal service flows indicates that the service flow #1 may arrive at the VAL client no more than 10 ms later than the service flow #2, that is, the difference between the time at which the data packet of the service flow #1 arrives at the VAL client and the time at which the data packet of the service flow #2 arrives at the VAL client is less than 10 ms, and the transmission requirement of the service flow #1 is that the transmission delay does not exceed 100 ms. It is assumed that the reception time of the data packet #1-1 of the service flow #1 received by the SEALDD server is T1-1, and the reception time of the data packet 2-1 of the service flow #2 is T2-1, and it is assumed that the difference between the time at which the data packet #1-1 arrives at the VAL client and the time at which the data packet 2-1 arrives at the VAL client being greater than 10 ms indicates that the synchronization delay relationship is not satisfied. It is assumed that the SEALDD server determines that the QoS requirement of the service flow #1 needs to be adjusted, for example, determines that the adjusted transmission delay of the QoS requirement of the service flow #1 is 92 ms to 100 ms, that is, the transmission delay of the data packet of the service flow #1 needs to be adjusted to any value between 92 ms and 100 ms.

Step 711: The SEALDD server sends a request message to a core network element. Correspondingly, the core network element receives the request message.

The request message is used to request to update a QoS parameter, and the request message includes description information of the service flow that needs to be adjusted and the QoS requirement of the service flow that needs to be adjusted. The description information of the service flow that needs to be adjusted may include a VAL server identifier and/or a VAL service identifier, or include a SEALDD-UU interface address corresponding to the service flow that needs to be adjusted, or include a SEALDD-S interface address corresponding to the service flow that needs to be adjusted.

If the description information, carried in the request message, of the service flow that needs to be adjusted is the SEALDD-S interface address of the multi-modal service flow, the SEALDD server may determine the SEALDD-S interface address of the multi-modal service flow by using the following method: The SEALDD server determines a SEALDD-UU interface address of a multi-modal service flow whose QoS requirement needs to be adjusted between the SEALDD server and the SEALDD client, and then the SEALDD server determines, based on a mapping relationship between SEALDD-S interface multi-modal service flow association information and SEALDD-U interface multi-modal service flow association information, a SEALDD-S interface address corresponding to the SEALDD-UU interface address of the multi-modal service flow.

For example, the core network element may be an NEF network element or a PCF network element in a 5G network. The SEALDD server may serve as an AF network element, and send the request message to the NEF network element through an N33 interface, or send the request message to the PCF network element through an N5 interface. If the NEF receives the request message, the NEF may send the request message to the PCF network element.

After receiving the request message, the PCF network element may perform QoS adjustment on the service flow based on the QoS requirement of the service flow that needs to be adjusted, so that transmission of the service flow meets the QoS requirement, and transmission of multi-modal service flows meets the synchronization delay requirement between multi-modal service flows.

In the foregoing solution, the SEALDD server maintains the SEALDD-S interface multi-modal service flow association information and the SEALDD-UU interface multi-modal service flow association information, and notifies the SEALDD client to record and feed back the reception times of the associated data packets, so that the SEALDD server determines, based on the reception times of the associated data packets, the QoS requirement of the service flow that needs to be adjusted, and requests the core network element to perform QoS adjustment on a specified service flow, so that the synchronization delay requirement is met between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

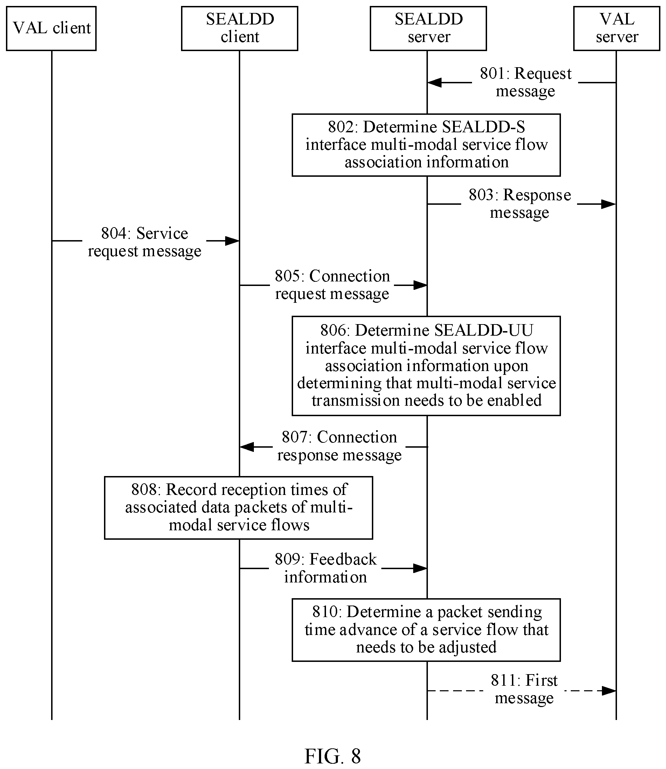

FIG. 8 is a schematic flowchart of a communication method according to an embodiment of this application. The method includes the following steps.

Step 801 to step 809 are the same as step 701 to step 709 in the embodiment in FIG. 7.

That is, step 801 to step 809 correspond identically to step 701 to step 709.

Step 810: The SEALDD server determines, based on the synchronization delay requirement between multi-modal service flows, the reception times of the associated data packets of the multi-modal service flows, and the multi-modal service flow transmission requirement, a packet sending time advance of a service flow that needs to be adjusted.

For example, the synchronization delay requirement between multi-modal service flows indicates that the service flow #1 may arrive at the VAL client no more than a synchronization delay threshold #1 later than the service flow #2. If a difference between a time at which the data packet of the service flow #1 arrives at the VAL client and a time at which the data packet of the service flow #2 arrives at the VAL client is greater than the synchronization delay threshold #1, the SEALDD server determines that the service flow that needs to be adjusted is the service flow #1, and further determines the packet sending time advance of the service flow #1. The data packet of the service flow #1 is sent in advance, so that the difference between the time at which the data packet of the service flow #1 arrives at the VAL client and the time at which the data packet of the service flow #2 arrives at the VAL client is less than or equal to the synchronization delay threshold #1.

For example, it is assumed that the synchronization delay requirement between multi-modal service flows indicates that the service flow #1 may arrive at the VAL client no more than 10 ms later than the service flow #2, that is, the difference between the time at which the data packet of the service flow #1 arrives at the VAL client and the time at which the data packet of the service flow #2 arrives at the VAL client is less than 10 ms, and the transmission requirement of the service flow #1 is that the transmission delay does not exceed 100 ms. It is assumed that the reception time, fed back by the SEALDD client to the SEALDD server, of the data packet #1-1 of the service flow #1 received by the SEALDD client is T1-1, and the reception time of the data packet 2-1 of the service flow #2 is T2-2, and it is assumed that the difference between the time at which the data packet #1-1 arrives at the VAL client and the time at which the data packet 2-1 arrives at the VAL client being greater than 10 ms indicates that the synchronization delay relationship is not satisfied. It is assumed that the SEALDD server determines that the packet sending time of the service flow #1 needs to be adjusted, for example, the SEALDD server determines that the packet sending time of the service flow #1 that needs to be adjusted may be advanced by 5 ms to 13 ms, that is, the packet sending time of the data packet of the service flow #1 needs to be advanced by any value between 5 ms and 13 ms.

Step 811: The SEALDD server sends a first message to the VAL server. Correspondingly, the VAL server receives the first message.

For example, the first message may be a notification message, a request message, or a message of another type. This is not limited in this application.

The first message is used to notify the VAL server to adjust the packet sending time of the service flow, and the first message includes description information of the service flow that needs to be adjusted and the packet sending time advance of the service flow. For example, for the foregoing example, the first message includes identification information of the service flow #1 and the packet sending time advance of the service flow #1, where the packet sending time advance is 5 ms to 13 ms, or any value between 5 ms and 13 ms.

In another implementation, in step 810, after determining the service flow that needs to be adjusted, the SEALDD server does not need to determine the packet sending time advance of the service flow that needs to be adjusted, but includes, in the first message sent to the VAL server, the description information of the multi-modal service flow and the reception time of the data packet of the multi-modal service flow. Then, the VAL server determines, based on the reception time of the data packet of the multi-modal service flow, the packet sending time advance of the service flow that needs to be adjusted, and sends packets of the service flow in advance based on the packet sending time advance. For example, for the foregoing example, the first message includes identification information of the service flow #1, identification information of the service flow #2, the reception time T1-1 of the data packet 1-1 of the service flow #1, and the reception time T2-1 of the data packet 2-1 of the service flow #2. Then, the VAL server determines that the service flow that needs to be adjusted is the service flow #1, and determines the packet sending time advance of the service flow #1, for example, determines that the packet sending time advance of the service flow #1 is any value between 5 ms and 13 ms.

In another implementation, in step 810, after determining the service flow that needs to be adjusted, the SEALDD server does not need to determine the packet sending time advance of the service flow that needs to be adjusted, but includes, in the first message sent to the VAL server, the description information of the multi-modal service flow and a difference between reception times of associated data packets of different multi-modal service flows. Then, the VAL server determines, based on the difference between reception times of associated data packets of multi-modal service flows, the packet sending time advance of the service flow that needs to be adjusted, and sends packets of the service flow in advance based on the packet sending time advance. For example, for the foregoing example, the first message includes identification information of the service flow #1, identification information of the service flow #2, and a difference between reception times of associated data packets of the service flow #1 and the service flow #2 (that is, T1-1 minus T2-1). Then, the VAL server determines that the service flow that needs to be adjusted is the service flow #1, and determines the packet sending time advance of the service flow #1, for example, determines that the packet sending time advance of the service flow #1 is any value between 5 ms and 13 ms.

The description information of the service flow may include a VAL server identifier and/or a VAL service identifier, or include a SEALDD-UU interface address corresponding to the service flow, or include a SEALDD-S interface address corresponding to the service flow. If the description information, carried in the first message in step 811, of the service flow that needs to be adjusted is the SEALDD-S interface address of the multi-modal service flow, the SEALDD server may determine the SEALDD-S interface address of the multi-modal service flow by using the following method: The SEALDD server determines a SEALDD-UU interface address of a multi-modal service flow whose packet sending time needs to be adjusted between the SEALDD server and the SEALDD client, and then the SEALDD server determines, based on a mapping relationship between SEALDD-S interface multi-modal service flow association information and SEALDD-U interface multi-modal service flow association information, a SEALDD-S interface address corresponding to the SEALDD-UU interface address of the multi-modal service flow.

It should be noted that step 811 is an optional step, that is, the VAL server may not need to adjust the packet sending time of the service flow. Instead, the SEALDD server adjusts the packet sending time of the service flow. For example, if the SEALDD server has stored data of a related multi-modal service flow in advance, the SEALDD server may adjust the packet sending time of the multi-modal service flow based on the packet sending time advance of the service flow that needs to be adjusted determined in step 810.

In the foregoing solution, the SEALDD server maintains the SEALDD-S interface multi-modal service flow association information and the SEALDD-UU interface multi-modal service flow association information, and notifies the SEALDD client to feed back the reception times of the associated data packets of the multi-modal service flows, so that the SEALDD server determines, based on the reception times of the associated data packets of the multi-modal service flows, the packet sending time advance of the service flow that needs to be adjusted, and the SEALDD server adjusts the packet sending time of the service flow based on the packet sending time advance, or notifies the VAL server to adjust the packet sending time of the service flow, so that the synchronization delay requirement is met between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

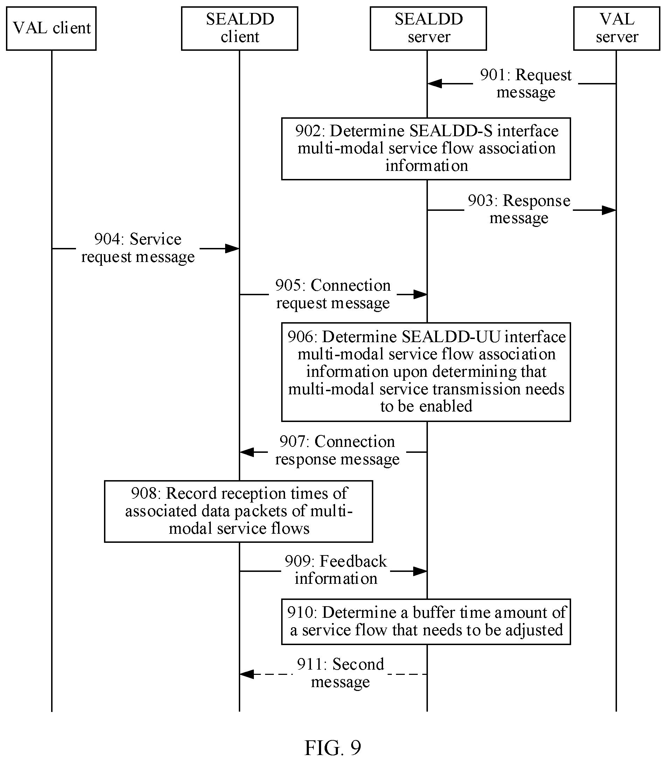

FIG. 9 is a schematic flowchart of a communication method according to an embodiment of this application. The method includes the following steps.

Step 901 to step 909 are the same as step 701 to step 709 in the embodiment in FIG. 7.

That is, step 901 to step 909 correspond identically to step 701 to step 709.

Step 910: The SEALDD server determines, based on the synchronization delay requirement between multi-modal service flows, the reception times of the associated data packets of the multi-modal service flows, and the multi-modal service flow transmission requirement, a buffer time amount of a service flow that needs to be adjusted.

For example, the synchronization delay requirement between multi-modal service flows indicates that the service flow #1 may arrive at the VAL client no more than a synchronization delay threshold #1 later than the service flow #2. If a difference between a time at which the data packet of the service flow #1 arrives at the VAL client and a time at which the data packet of the service flow #2 arrives at the VAL client is greater than the synchronization delay threshold #1, the SEALDD server determines that the service flow that needs to be adjusted is the service flow #2, and further determines the buffer time amount of the service flow #2, so that the difference between the time at which the data packet of the service flow #1 arrives at the VAL client and the time at which the data packet of the service flow #2 arrives at the VAL client is less than or equal to the synchronization delay threshold #1.

For example, it is assumed that the synchronization delay requirement between multi-modal service flows indicates that the service flow #1 may arrive at the VAL client no more than 10 ms later than the service flow #2, that is, the difference between the time at which the data packet of the service flow #1 arrives at the VAL client and the time at which the data packet of the service flow #2 arrives at the VAL client is less than 10 ms, and the transmission requirement of the service flow #1 is that the transmission delay does not exceed 100 ms. It is assumed that the reception time, fed back by the SEALDD client to the SEALDD server, of the data packet #1-1 of the service flow #1 received by the SEALDD client is T1-1, and the reception time of the data packet 2-1 of the service flow #2 is T2-1, and it is assumed that the difference between the time at which the data packet #1-1 arrives at the VAL client and the time at which the data packet 2-1 arrives at the VAL client being greater than 10 ms indicates that the synchronization delay relationship is not satisfied. It is assumed that the SEALDD server determines that the data packet of the service flow #2 needs to be buffered, and determines that the buffer time amount of the service flow #2 is any value between 3 ms and 13 ms.

Step 911: The SEALDD server sends a second message to the SEALDD client. Correspondingly, the SEALDD client receives the second message.

For example, the second message may be a notification message, a request message, or a message of another type. This is not limited in this application.

The second message is used to notify the SEALDD client to buffer a data packet of a service flow, and the second message includes description information of the service flow that needs to be adjusted and the buffer time amount of the service flow. For example, for the foregoing example, the second message includes identification information of the service flow #2 and the buffer time amount of the service flow #2, where the buffer time amount is 3 ms to 13 ms, or any value between 3 ms and 13 ms. The SEALDD client identifies, based on the description information of the service flow that needs to be adjusted, the service flow that needs to be adjusted, and buffers the data packet of the service flow based on the buffer time amount notified by the SEALDD server.

It should be noted that step 910 is an optional step, that is, the SEALDD client may not need to buffer the data packet of the service flow. Instead, the SEALDD server buffers the data packet of the service flow. For example, the SEALDD server determines the buffer time amount of the data packet of the service flow that needs to be adjusted, and buffer the data packet based on the buffer time amount of the service flow.

In the foregoing solution, the SEALDD server maintains the SEALDD-S interface multi-modal service flow association information and the SEALDD-UU interface multi-modal service flow association information, and notifies the SEALDD client to feed back the reception times of the associated data packets of the multi-modal service flows, so that the SEALDD server determines, based on the reception times of the associated data packets of the multi-modal service flows, the buffer time amount of the service flow that needs to be adjusted, and the SEALDD server or the SEALDD client buffers the data packet of the service flow based on the buffer time amount, so that the synchronization delay requirement is met between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

FIG. 10 is a schematic flowchart of a communication method according to an embodiment of this application. The method includes the following steps.

Step 1001 to step 1003 are the same as step 701 to step 703 in the embodiment in FIG. 7.

That is, step 1001 to step 1003 correspond identically to step 701 to step 703.

Step 1004: The VAL client sends a service request message to the SEALDD client. Correspondingly, the SEALDD client receives the service request message.

The service request message includes a VAL server identifier and a VAL service identifier. There may be two or more VAL service identifiers.

Optionally, the service request message further includes a synchronization delay requirement between multi-modal service flows. For the meaning of the synchronization delay requirement between multi-modal service flows, refer to the descriptions in step 1001. For example, the synchronization delay requirement between multi-modal service flows may be carried in an application client profile (application client profile), that is, the service request message includes the application client profile, and the application client profile includes the synchronization delay requirement between multi-modal service flows.

The VAL server identifier uniquely identifies a VAL server.

The VAL service identifier indicates a multi-modal service flow, or the VAL server identifier and the VAL service identifier jointly indicate a multi-modal service flow. For specific descriptions, refer to step 1001.

Step 1005 to step 1006 are the same as step 705 to step 706 in the embodiment in FIG. 7.

That is, step 1005 to step 1006 correspond identically to step 705 to step 706.

Step 1007: The SEALDD server sends a connection response message to the SEALDD client. Correspondingly, the SEALDD client receives the connection response message.

The connection response message includes SEALDD-UU interface multi-modal service flow association information, information for identifying associated data packets across SEALDD-UU interface multi-modal service flows, a reception time recording indication, a multi-modal service flow QoS adjustment indication, and a multi-modal service flow transmission requirement. Optionally, the connection response message further includes a synchronization delay requirement between multi-modal service flows.

For meanings of the SEALDD-UU interface multi-modal service flow association information, the information for identifying associated data packets across SEALDD-UU interface multi-modal service flows, the multi-modal service flow transmission requirement, and the synchronization delay requirement between multi-modal service flows, refer to related descriptions in the foregoing embodiment.

The reception time recording indication indicates to record reception times of associated data packets of multi-modal service flows.

The multi-modal service flow QoS adjustment indication indicates the SEALDD client to determine a QoS requirement of a multi-modal service flow that needs to be adjusted.

Step 1008a: The SEALDD client records reception times of associated data packets of multi-modal service flows.

When downlink data arrives at the SEALDD client, the SEALDD client identifies a multi-modal service flow from the SEALDD server based on the SEALDD-UU interface multi-modal service flow association information, determines associated data packets of multi-modal service flows based on the information for identifying associated data packets across SEALDD-UU interface multi-modal service flows, and records reception times of the associated data packets of the multi-modal service flows.

For example, according to the foregoing example, the data packet #1-1, the data packet #2-1, and the data packet #3-1 are associated data packets, and corresponding reception timestamps are respectively T1-1, T2-1, and T3-1.

Step 1008b: The SEALDD client determines, based on the synchronization delay requirement between multi-modal service flows, the reception times of the associated data packets of the multi-modal service flows, and the multi-modal service flow transmission requirement, a QoS requirement of a service flow that needs to be adjusted.

For a specific implementation of determining the QoS requirement of the service flow that needs to be adjusted, refer to the descriptions of step 710 in the embodiment in FIG. 7.

Step 1009: The SEALDD client sends feedback information to the SEALDD server. Correspondingly, the SEALDD server receives the feedback information.

The feedback information includes the SEALDD-UU interface address of the service flow that needs to be adjusted and the QoS requirement of the service flow that needs to be adjusted.

Step 1010: The SEALDD server sends a request message to a core network element. Correspondingly, the core network element receives the request message.

The request message is used to request to update a QoS parameter, and the request message includes description information of the service flow that needs to be adjusted and the QoS requirement of the service flow that needs to be adjusted. The description information of the service flow that needs to be adjusted may include a VAL server identifier and/or a VAL service identifier, or include a SEALDD-UU interface address corresponding to the service flow that needs to be adjusted, or include a SEALDD-S interface address corresponding to the service flow that needs to be adjusted.

If the description information, carried in the request message, of the service flow that needs to be adjusted is the SEALDD-S interface address of the multi-modal service flow, the SEALDD server may determine the SEALDD-S interface address of the multi-modal service flow by using the following method: The SEALDD server determines a SEALDD-UU interface address of a multi-modal service flow whose QoS requirement needs to be adjusted between the SEALDD server and the SEALDD client, and then the SEALDD server determines, based on a mapping relationship between SEALDD-S interface multi-modal service flow association information and SEALDD-U interface multi-modal service flow association information, a SEALDD-S interface address corresponding to the SEALDD-UU interface address of the multi-modal service flow.

For example, the core network element may be an NEF network element or a PCF network element in a 5G network. The SEALDD server may serve as an AF network element, and send the request message to the NEF network element through an N33 interface, or send the request message to the PCF network element through an N5 interface. If the NEF receives the request message, the NEF may send the request message to the PCF network element.

After receiving the request message, the PCF network element may perform QoS adjustment on the service flow based on the QoS requirement of the service flow that needs to be adjusted, so that transmission of the service flow meets the QoS requirement, and transmission of multi-modal service flows meets the synchronization delay requirement between multi-modal service flows.

In the foregoing solution, the SEALDD server maintains the SEALDD-S interface multi-modal service flow association information and the SEALDD-UU interface multi-modal service flow association information, and indicates the SEALDD client to record the reception times of the associated data packets and indicates the SEALDD client to determine the QoS requirement of the multi-modal service flow that needs to be adjusted. Then, the SEALDD client determines, based on the reception times of the associated data packets, the QoS requirement of the service flow that needs to be adjusted, and sends the QoS requirement of the service flow that needs to be adjusted to the SEALDD server. The SEALDD server requests the core network element to perform QoS adjustment on a specified service flow, so that the synchronization delay requirement is met between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

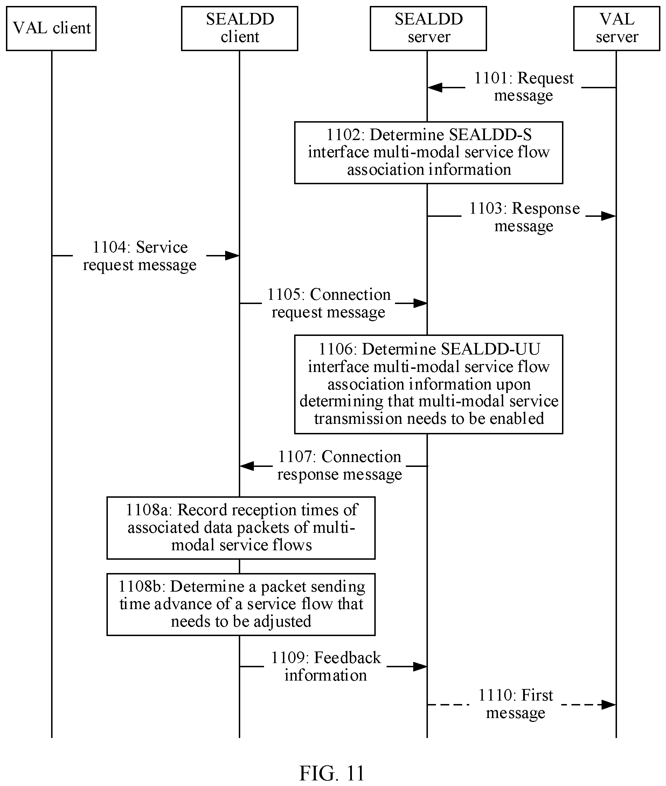

FIG. 11 is a schematic flowchart of a communication method according to an embodiment of this application. The method includes the following steps.

Step 1101 to step 1106 are the same as step 1001 to step 1006 in the embodiment in FIG. 10.

That is, step 1101 to step 1106 correspond identically to step 1001 to step 1006.

Step 1107: The SEALDD server sends a connection response message to the SEALDD client. Correspondingly, the SEALDD client receives the connection response message.

The connection response message includes SEALDD-UU interface multi-modal service flow association information, information for identifying associated data packets across SEALDD-UU interface multi-modal service flows, a reception time recording indication, a multi-modal service flow packet sending time adjustment indication, and a multi-modal service flow transmission requirement. Optionally, the connection response message further includes a synchronization delay requirement between multi-modal service flows.

For meanings of the SEALDD-UU interface multi-modal service flow association information, the information for identifying associated data packets across SEALDD-UU interface multi-modal service flows, the multi-modal service flow transmission requirement, the reception time recording indication, and the synchronization delay requirement between multi-modal service flows, refer to related descriptions in the foregoing embodiment.

The multi-modal service flow packet sending time adjustment indication indicates the SEALDD client to determine a packet sending time advance of a multi-modal service flow that needs to be adjusted.

Step 1108a: The SEALDD client records reception times of associated data packets of multi-modal service flows.

When downlink data arrives at the SEALDD client, the SEALDD client identifies a multi-modal service flow from the SEALDD server based on the SEALDD-UU interface multi-modal service flow association information, determines associated data packets of multi-modal service flows based on the information for identifying associated data packets across SEALDD-UU interface multi-modal service flows, and records reception times of the associated data packets of the multi-modal service flows.

For example, according to the foregoing example, the data packet #1-1, the data packet #2-1, and the data packet #3-1 are associated data packets, and corresponding reception timestamps are respectively T1-1, T2-1, and T3-1.

Step 1108b: The SEALDD client determines, based on the synchronization delay requirement between multi-modal service flows, the reception times of the associated data packets of the multi-modal service flows, and the multi-modal service flow transmission requirement, a packet sending time advance of a service flow that needs to be adjusted.

For a specific implementation of determining the packet sending time advance of the service flow that needs to be adjusted, refer to the descriptions of step 810 in the embodiment in FIG. 8.

Step 1109: The SEALDD client sends feedback information to the SEALDD server. Correspondingly, the SEALDD server receives the feedback information.

The feedback information includes the SEALDD-UU interface address of the service flow that needs to be adjusted and the packet sending time advance of the service flow that needs to be adjusted.

Step 1110: The SEALDD server sends a first message to the VAL server. Correspondingly, the VAL server receives the first message.

For example, the first message may be a notification message, a request message, or a message of another type. This is not limited in this application.

The first message is used to notify the VAL server to adjust the packet sending time of the service flow, and the first message includes description information of the service flow that needs to be adjusted and the packet sending time advance of the service flow. For example, the first message includes identification information of the service flow #1 and the packet sending time advance of the service flow #1, where the packet sending time advance is 5 ms to 13 ms, or any value between 5 ms and 13 ms.

In another implementation, the multi-modal service flow packet sending time adjustment indication in step 1107 indicates the SEALDD client to determine a difference between reception times of multi-modal service flows. Correspondingly, the packet sending time advance of the service flow that needs to be adjusted in the first message in step 1109 is replaced with the difference between reception times of multi-modal service flows, and the packet sending time advance of the service flow in the first message in step 1110 is replaced with the difference between reception times of multi-modal service flows. Then the VAL server determines, based on the difference between reception times of associated data packets of multi-modal service flows, the packet sending time advance of the service flow that needs to be adjusted, and sends packets of the service flow in advance based on the packet sending time advance.

The description information of the service flow may include a VAL server identifier and/or a VAL service identifier, or include a SEALDD-UU interface address corresponding to the service flow, or include a SEALDD-S interface address corresponding to the service flow. If the description information, carried in the first message in step 1110, of the service flow that needs to be adjusted is the SEALDD-S interface address of the multi-modal service flow, the SEALDD server may determine the SEALDD-S interface address of the multi-modal service flow by using the following method: The SEALDD server determines a SEALDD-UU interface address of a multi-modal service flow whose packet sending time needs to be adjusted between the SEALDD server and the SEALDD client, and then the SEALDD server determines, based on a mapping relationship between SEALDD-S interface multi-modal service flow association information and SEALDD-U interface multi-modal service flow association information, a SEALDD-S interface address corresponding to the SEALDD-UU interface address of the multi-modal service flow.

It should be noted that step 1110 is an optional step, that is, the VAL server may not need to adjust the packet sending time of the service flow. Instead, the SEALDD server adjusts the packet sending time of the service flow. For example, if the SEALDD server has stored data of a related multi-modal service flow in advance, the SEALDD server may adjust the packet sending time of the multi-modal service flow based on the packet sending time advance of the service flow that needs to be adjusted.

In the foregoing solution, the SEALDD server maintains the SEALDD-S interface multi-modal service flow association information and the SEALDD-UU interface multi-modal service flow association information, and indicates the SEALDD client to record the reception times of the associated data packets and indicates the SEALDD client to determine the packet sending time advance of the multi-modal service flow that needs to be adjusted. Then, the SEALDD client determines, based on the reception times of the associated data packets, the packet sending time advance of the service flow that needs to be adjusted, and sends the packet sending time advance of the service flow that needs to be adjusted to the SEALDD server. The SEALDD server requests the VAL server to perform packet sending time adjustment on a specified service flow, so that the synchronization delay requirement is met between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

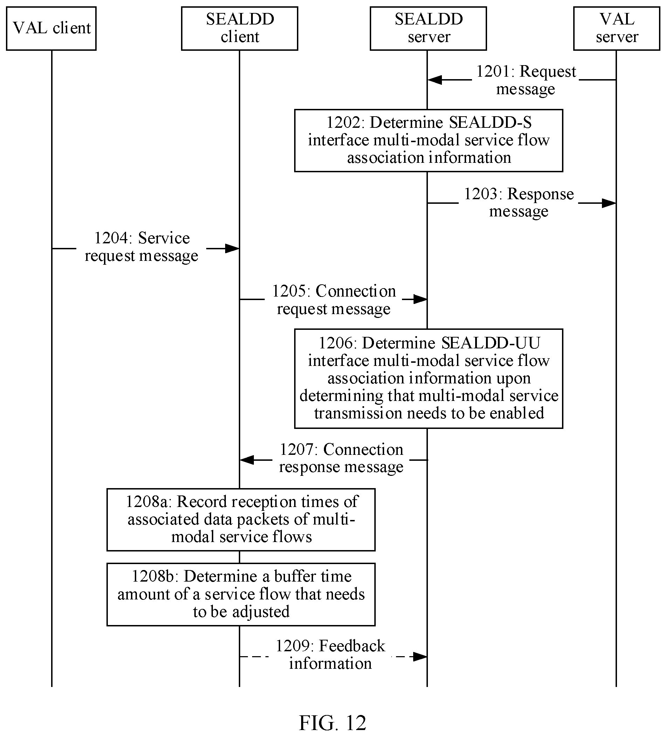

FIG. 12 is a schematic flowchart of a communication method according to an embodiment of this application. The method includes the following steps.

Step 1201 to step 1206 are the same as step 1001 to step 1006 in the embodiment in FIG. 10.

That is, step 1201 to step 1206 correspond identically to step 1001 to step 1006.

Step 1207: The SEALDD server sends a connection response message to the SEALDD client. Correspondingly, the SEALDD client receives the connection response message.

The connection response message includes SEALDD-UU interface multi-modal service flow association information, information for identifying associated data packets across SEALDD-UU interface multi-modal service flows, a reception time recording indication, a multi-modal service flow buffer time adjustment indication, and a multi-modal service flow transmission requirement. Optionally, the connection response message further includes a synchronization delay requirement between multi-modal service flows.

For meanings of the SEALDD-UU interface multi-modal service flow association information, the information for identifying associated data packets across SEALDD-UU interface multi-modal service flows, the multi-modal service flow transmission requirement, the reception time recording indication, and the synchronization delay requirement between multi-modal service flows, refer to related descriptions in the foregoing embodiment.

The multi-modal service flow buffer time adjustment indication indicates the SEALDD client to determine a buffer time amount of a multi-modal service flow that needs to be adjusted.

Step 1208a: The SEALDD client records reception times of associated data packets of multi-modal service flows.

When downlink data arrives at the SEALDD client, the SEALDD client identifies a multi-modal service flow from the SEALDD server based on the SEALDD-UU interface multi-modal service flow association information, determines associated data packets of multi-modal service flows based on the information for identifying associated data packets across SEALDD-UU interface multi-modal service flows, and records reception times of the associated data packets of the multi-modal service flows.

For example, according to the foregoing example, the data packet #1-1, the data packet #2-1, and the data packet #3-1 are associated data packets, and corresponding reception timestamps are respectively T1-1, T2-1, and T3-1.

Step 1208b: The SEALDD client determines, based on the synchronization delay requirement between multi-modal service flows, the reception times of the associated data packets of the multi-modal service flows, and the multi-modal service flow transmission requirement, a buffer time amount of a service flow that needs to be adjusted.

For a specific implementation of determining the buffer time amount of the service flow that needs to be adjusted, refer to the descriptions of step 910 in the embodiment in FIG. 9.

Step 1209: The SEALDD client sends feedback information to the SEALDD server. Correspondingly, the SEALDD server receives the feedback information.

The feedback information is used to notify the SEALDD server to buffer the data packet of the service flow, and the feedback information includes the SEALDD-UU interface address of the service flow that needs to be adjusted and the buffer time amount of the service flow that needs to be adjusted. For example, the feedback information includes identification information of the service flow #2 and the buffer time amount of the service flow #2, where the buffer time amount is 3 ms to 13 ms, or any value between 3 ms and 13 ms. The SEALDD server identifies, based on the SEALDD-UU interface address of the service flow that needs to be adjusted, the service flow that needs to be adjusted, and buffers the data packet of the service flow based on the buffer time amount notified by the SEALDD client.

It should be noted that step 1209 is an optional step, that is, the SEALDD server may not need to buffer the data packet of the service flow. Instead, the SEALDD client buffers the data packet of the service flow. For example, the SEALDD client determines a buffer time amount of a data packet of a service flow that needs to be adjusted, and buffer the data packet based on the buffer time amount of the service flow.

In the foregoing solution, the SEALDD server maintains the SEALDD-S interface multi-modal service flow association information and the SEALDD-UU interface multi-modal service flow association information, and indicates the SEALDD client to record the reception times of the associated data packets and indicates the SEALDD client to determine the buffer time amount of the multi-modal service flow that needs to be adjusted. Then, the SEALDD client determines, based on the reception times of the associated data packets, the buffer time amount of the service flow that needs to be adjusted, and sends the buffer time amount of the service flow that needs to be adjusted to the SEALDD server. The SEALDD server buffers a corresponding service flow based on the buffer time amount, or the SEALDD client buffers a corresponding service flow, so that the synchronization delay requirement is met between multi-modal service flows. In addition, in this solution, an application layer can also be aware of the transmission delay of the service flow. This helps an application side accurately adjust transmission of the service flow based on the transmission delay, further improving transmission synchronization between multi-modal service flows.

It may be understood that, to implement functions in the foregoing embodiments, the communication device (for example, the transmission client or the transmission server) includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

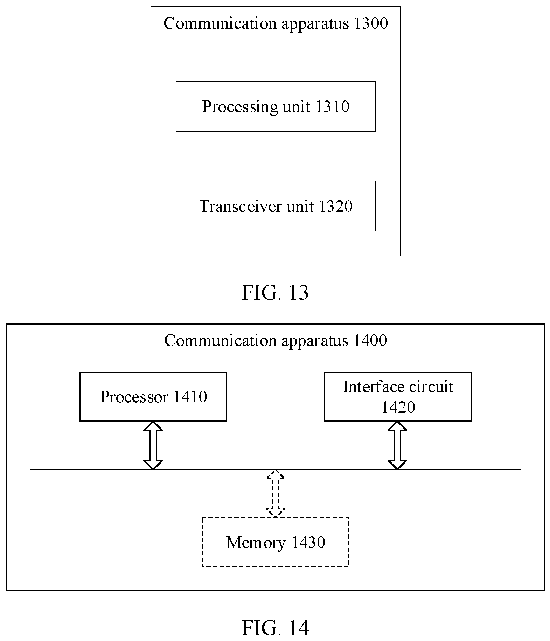

FIG. 13 and FIG. 14 are diagrams of structures of communication apparatuses according to embodiments of this application. The communication apparatuses may be configured to implement functions of the communication devices (for example, the transmission client or the transmission server) in the foregoing method embodiments, and therefore can also implement beneficial effects of the foregoing method embodiments. In embodiments of this application, the communication apparatus may be a communication device, or may be a module (for example, a chip) used in a communication device.

A communication apparatus 1300 shown in FIG. 13 includes a processing unit 1310 and a transceiver unit 1320. The communication apparatus 1300 is configured to implement functions of the communication device in the foregoing method embodiments.

When the communication apparatus 1300 is configured to implement functions of the communication device in the method embodiments in FIG. 3(a) and FIG. 4 to FIG. 6, the processing unit 1310 is configured to determine a first transmission delay of a first service flow and a second transmission delay of a second service flow, where the first transmission delay is a delay of transmitting a first data packet of the first service flow from a transmission server to a transmission client, the second transmission delay is a delay of transmitting a second data packet of the second service flow from a transmission server to a transmission client, and the first service flow and the second service flow are associated data flows; and determine, based on the first transmission delay, the second transmission delay, and a synchronization delay requirement, a QoS requirement of the first service flow to be sent to a core network element and/or a QoS requirement of the second service flow to be sent to a core network element; or determine packet sending time information of the first service flow and/or packet sending time information of the second service flow, where the synchronization delay requirement indicates a synchronization delay relationship between the first service flow and the second service flow.

In a possible implementation, the communication device is the transmission server. The processing unit 1310 is further configured to record a first sending time of the first data packet and a second sending time of the second data packet, where the first sending time is a time at which the transmission server sends the first data packet to the transmission client, and the second sending time is a time at which the transmission server sends the second data packet to the transmission client. The transceiver unit 1320 is configured to send the first data packet and the second data packet to the transmission client; receive, from the transmission client, a first reception time of the first data packet and a second reception time of the second data packet, where the first reception time is a time at which the transmission client receives the first data packet, and the second reception time is a time at which the transmission client receives the second data packet. The processing unit 1310 is further configured to determine the first transmission delay based on the first sending time and the first reception time, and determine the second transmission delay based on the second sending time and the second reception time.

In a possible implementation, the processing unit 1310 is further configured to determine first association information and second association information, where the first association information indicates an association among multiple service flows between the transmission server and an application server, the multiple service flows between the transmission server and the application server include the first service flow and the second service flow, the second association information indicates an association among multiple service flows between the transmission server and the transmission client, and the multiple service flows between the transmission server and the transmission client include the first service flow and the second service flow; and establish a mapping relationship between the first association information and the second association information.

In a possible implementation, the transceiver unit 1320 is further configured to send the second association information and/or a reception time feedback indication to the transmission client, where the reception time feedback indication indicates to record and feed back a reception time of a data packet of the first service flow and a reception time of a data packet of the second service flow.

In a possible implementation, the transceiver unit 1320 is further configured to send a request message to the core network element, where the request message includes the QoS requirement of the first service flow and/or the QoS requirement of the second service flow, and the request message is used to request to perform QoS guarantee on the first service flow based on the QoS requirement of the first service flow, and/or perform QoS guarantee on the second service flow based on the QoS requirement of the second service flow.

In a possible implementation, the transceiver unit 1320 is further configured to send a first message to an application server, where the first message includes the packet sending time information of the first service flow and/or the packet sending time information of the second service flow, and the first message is used to notify the application server to adjust the packet sending time of the data packet of the first service flow based on the packet sending time information of the first service flow, and/or adjust the packet sending time of the data packet of the second service flow based on the packet sending time information of the second service flow.

In a possible implementation, the processing unit 1310 is further configured to adjust the packet sending time of the data packet of the first service flow based on the packet sending time information of the first service flow; and/or adjust the packet sending time of the data packet of the second service flow based on the packet sending time information of the second service flow.

In a possible implementation, the transceiver unit 1320 is further configured to send a second message to the transmission client, where the second message includes a buffer time amount of the first service flow and/or a buffer time amount of the second service flow, and the second message is used to notify the transmission client to buffer the data packet of the first service flow based on the buffer time amount of the first service flow, and/or buffer the data packet of the second service flow based on the buffer time amount of the second service flow.

In a possible implementation, the processing unit 1310 is further configured to buffer the data packet of the first service flow based on the buffer time amount of the first service flow; and/or buffer the data packet of the second service flow based on the buffer time amount of the second service flow.

In a possible implementation, the communication device is the transmission client. The transceiver unit 1320 is further configured to receive the first data packet and the second data packet from the transmission server. The processing unit 1310 is further configured to obtain, from the first data packet, a first sending time of the first data packet and obtain, from the second data packet, a second sending time of the second data packet, where the first sending time is a time at which the transmission server sends the first data packet to the transmission client, and the second sending time is a time at which the transmission server sends the second data packet to the transmission client; record a first reception time of the first data packet and a second reception time of the second data packet, where the first reception time is a time at which the transmission client receives the first data packet, and the second reception time is a time at which the transmission client receives the second data packet; and determine the first transmission delay based on the first sending time and the first reception time, and determine the second transmission delay based on the second sending time and the second reception time.

In a possible implementation, the transceiver unit 1320 is further configured to receive a reception time recording indication from the transmission server, where the reception time recording indication indicates to record a reception time of a data packet of the first service flow and a reception time of a data packet of the second service flow.

In a possible implementation, the transceiver unit 1320 is further configured to receive second association information from the transmission server, where the second association information indicates an association among multiple service flows between the transmission server and the transmission client, and the multiple service flows between the transmission server and the transmission client include the first service flow and the second service flow.

In a possible implementation, the transceiver unit 1320 is further configured to send the QoS requirement of the first service flow and/or the QoS requirement of the second service flow to the transmission server.

In a possible implementation, the transceiver unit 1320 is further configured to send the packet sending time information of the first service flow and/or the packet sending time information of the second service flow to the transmission server.

In a possible implementation, the transceiver unit 1320 is further configured to send a buffer time amount of the first service flow and/or a buffer time amount of the second service flow to the transmission server.

In a possible implementation, the processing unit 1310 is further configured to buffer the data packet of the first service flow based on the buffer time amount of the first service flow; and/or buffer the data packet of the second service flow based on the buffer time amount of the second service flow.

When the communication apparatus 1300 is configured to implement functions of the communication device in the method embodiments in FIG. 3(b) and FIG. 7 to FIG. 12, the processing unit 1310 is configured to determine a first reception time of a first service flow and a second reception time of a second service flow, where the first reception time is a time at which a transmission client receives a first data packet of the first service flow from a transmission server, the second reception time is a time at which the transmission client receives a second data packet of the second service flow from the transmission server, and the first service flow and the second service flow are associated data flows; and determine, based on the first reception time, the second reception time, and a synchronization delay requirement, a QoS requirement of the first service flow to be sent to a core network element and/or a QoS requirement of the second service flow to be sent to a core network element; or determine packet sending time information of the first service flow and/or packet sending time information of the second service flow, where the synchronization delay requirement indicates a synchronization delay relationship between the first service flow and the second service flow.

In a possible implementation, the communication device is the transmission server. The transceiver unit 1320 is further configured to send the first data packet and the second data packet to the transmission client; and receive, from the transmission client, the first reception time of the first data packet and the second reception time of the second data packet.

In a possible implementation, the processing unit 1310 is further configured to determine first association information and second association information, where the first association information indicates an association among multiple service flows between the transmission server and an application server, the multiple service flows between the transmission server and the application server include the first service flow and the second service flow, the second association information indicates an association among multiple service flows between the transmission server and the transmission client, and the multiple service flows between the transmission server and the transmission client include the first service flow and the second service flow; and establish a mapping relationship between the first association information and the second association information.

In a possible implementation, the transceiver unit 1320 is further configured to send the second association information and/or a reception time feedback indication to the transmission client, where the reception time feedback indication indicates to record and feed back a reception time of a data packet of the first service flow and a reception time of a data packet of the second service flow.

In a possible implementation, the transceiver unit 1320 is further configured to send a request message to the core network element, where the request message includes the QoS requirement of the first service flow and/or the QoS requirement of the second service flow, and the request message is used to request to perform QoS guarantee on the first service flow based on the QoS requirement of the first service flow, and/or perform QoS guarantee on the second service flow based on the QoS requirement of the second service flow.

In a possible implementation, the transceiver unit 1320 is further configured to send a first message to an application server, where the first message includes the packet sending time information of the first service flow and/or the packet sending time information of the second service flow, and the first message is used to notify the application server to adjust the packet sending time of the data packet of the first service flow based on the packet sending time information of the first service flow, and/or adjust the packet sending time of the data packet of the second service flow based on the packet sending time information of the second service flow.

In a possible implementation, the processing unit 1310 is further configured to adjust the packet sending time of the data packet of the first service flow based on the packet sending time information of the first service flow; and/or adjust the packet sending time of the data packet of the second service flow based on the packet sending time information of the second service flow.

In a possible implementation, the transceiver unit 1320 is further configured to send a second message to the transmission client, where the second message includes a buffer time amount of the first service flow and/or a buffer time amount of the second service flow, and the second message is used to notify the transmission client to buffer the data packet of the first service flow based on the buffer time amount of the first service flow, and/or buffer the data packet of the second service flow based on the buffer time amount of the second service flow.

In a possible implementation, the processing unit 1310 is further configured to buffer the data packet of the first service flow based on the buffer time amount of the first service flow; and/or buffer the data packet of the second service flow based on the buffer time amount of the second service flow.

In a possible implementation, the communication device is the transmission client. The transceiver unit 1320 is further configured to receive the first data packet and the second data packet from the transmission server; and record the first reception time of the first data packet and the second reception time of the second data packet.

In a possible implementation, the transceiver unit 1320 is further configured to receive a reception time recording indication from the transmission server, where the reception time recording indication indicates to record a reception time of a data packet of the first service flow and a reception time of a data packet of the second service flow.

In a possible implementation, the transceiver unit 1320 is further configured to receive second association information from the transmission server, where the second association information indicates an association among multiple service flows between the transmission server and the transmission client, and the multiple service flows between the transmission server and the transmission client include the first service flow and the second service flow.

In a possible implementation, the transceiver unit 1320 is further configured to send the QoS requirement of the first service flow and/or the QoS requirement of the second service flow to the transmission server.

In a possible implementation, the transceiver unit 1320 is further configured to send the packet sending time information of the first service flow and/or the packet sending time information of the second service flow to the transmission server.

In a possible implementation, the transceiver unit 1320 is further configured to send a buffer time amount of the first service flow and/or a buffer time amount of the second service flow to the transmission server.

In a possible implementation, the processing unit 1310 is further configured to buffer the data packet of the first service flow based on the buffer time amount of the first service flow; and/or buffer the data packet of the second service flow based on the buffer time amount of the second service flow.

For more detailed descriptions of the processing unit 1310 and the transceiver unit 1320, directly refer to related descriptions in the foregoing method embodiments. Details are not described herein again.

A communication apparatus 1400 shown in FIG. 14 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to store instructions executed by the processor 1410, store input data required by the processor 1410 to run instructions, or store data generated after the processor 1410 runs instructions.

When the communication apparatus 1400 is configured to implement the foregoing method embodiments, the processor 1410 is configured to implement functions of the foregoing processing unit 1310, and the interface circuit 1420 is configured to implement functions of the foregoing transceiver unit 1320.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, an access network device, a terminal device, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "multiple" means two or more. The term "and/or" describes an association among associated objects, and represents that three relationships may exist. For example, A and/or B may represent the following cases: Only A exists, both A and B exist, and only B exists, where A and B may be singular or plural. In the text descriptions of this application, a character "/" generally represents an "or" relationship between associated objects. In a formula in this application, the character "/" represents a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a communication device or a module in a communication device, wherein the method comprises:
determining a first transmission delay of a first service flow and a second transmission delay of a second service flow, wherein the first transmission delay is a delay of transmitting a first data packet of the first service flow from a transmission server to a transmission client, the second transmission delay is a delay of transmitting a second data packet of the second service flow from a transmission server to a transmission client, and the first service flow and the second service flow are associated data flows; and
determining, based on the first transmission delay, the second transmission delay, and a synchronization delay requirement, a QoS requirement of the first service flow to be sent to a core network element and/or a QoS requirement of the second service flow to be sent to a core network element; or determining packet sending time information of the first service flow and/or packet sending time information of the second service flow, wherein the synchronization delay requirement indicates a synchronization delay relationship between the first service flow and the second service flow.

2. The method according to claim 1, wherein the communication device is the transmission server; and
the method further comprises:
recording a first sending time of the first data packet and a second sending time of the second data packet, wherein the first sending time is a time at which the transmission server sends the first data packet to the transmission client, and the second sending time is a time at which the transmission server sends the second data packet to the transmission client;
sending the first data packet and the second data packet to the transmission client;
receiving, from the transmission client, a first reception time of the first data packet and a second reception time of the second data packet, wherein the first reception time is a time at which the transmission client receives the first data packet, and the second reception time is a time at which the transmission client receives the second data packet; and
determining the first transmission delay based on the first sending time and the first reception time, and determining the second transmission delay based on the second sending time and the second reception time.

3. The method according to claim 2, wherein the method further comprises:
determining first association information and second association information, wherein the first association information indicates an association among multiple service flows between the transmission server and an application server, the multiple service flows between the transmission server and the application server comprise the first service flow and the second service flow, the second association information indicates an association among multiple service flows between the transmission server and the transmission client, and the multiple service flows between the transmission server and the transmission client comprise the first service flow and the second service flow; and
establishing a mapping relationship between the first association information and the second association information.

4. The method according to claim 3, wherein the method further comprises:
sending the second association information and/or a reception time feedback indication to the transmission client, wherein the reception time feedback indication indicates to record and feed back a reception time of a data packet of the first service flow and a reception time of a data packet of the second service flow.

5. The method according to claim 3 or 4, wherein the first association information comprises a first interface address corresponding to the first service flow, a first interface address corresponding to the second service flow, and a first association indication, and the first association indication indicates that there is an association between the first service flow and the second service flow; or
the first association information comprises a correspondence between a first interface address corresponding to the first service flow and a first association identifier, and comprises a correspondence between a first interface address corresponding to the second service flow and the first association identifier, wherein
the first interface address corresponding to the first service flow comprises an address of the first service flow on an application server side and/or an address of the first service flow on a transmission server side; and the first interface address corresponding to the second service flow comprises an address of the second service flow on an application server side and/or an address of the second service flow on a transmission server side.

6. The method according to any one of claims 3 to 5, wherein the second association information comprises a second interface address corresponding to the first service flow, a second interface address corresponding to the second service flow, and a second association indication, and the second association indication indicates that there is an association between the first service flow and the second service flow; or
the second association information comprises a correspondence between a second interface address corresponding to the first service flow and a second association identifier, and comprises a correspondence between a second interface address corresponding to the second service flow and the second association identifier, wherein
the second interface address corresponding to the first service flow comprises an address of the first service flow on a transmission client side and/or an address of the first service flow on a transmission server side; and the second interface address corresponding to the second service flow comprises an address of the second service flow on a transmission client and/or an address of the second service flow on a transmission server side.

7. The method according to any one of claims 1 to 6, wherein the method further comprises:
sending a request message to the core network element, wherein the request message comprises the QoS requirement of the first service flow and/or the QoS requirement of the second service flow, and the request message is used to request to perform QoS guarantee on the first service flow based on the QoS requirement of the first service flow, and/or perform QoS guarantee on the second service flow based on the QoS requirement of the second service flow.

8. The method according to claim 7, wherein
when the request message comprises the QoS requirement of the first service flow, the request message further comprises description information of the first service flow; or
when the request message comprises the QoS requirement of the second service flow, the request message further comprises description information of the second service flow; or
when the request message comprises the QoS requirement of the first service flow and the QoS requirement of the second service flow, the request message further comprises description information of the first service flow and description information of the second service flow, wherein
the description information of the first service flow is a second interface address corresponding to the first service flow, and the second interface address corresponding to the first service flow comprises an address of the first service flow on a transmission client side and/or an address of the first service flow on a transmission server side; and
the description information of the second service flow is a second interface address corresponding to the second service flow, and the second interface address corresponding to the second service flow comprises an address of the second service flow on a transmission client and/or an address of the second service flow on a transmission server side.

9. The method according to any one of claims 1 to 6, wherein the packet sending time information of the first service flow indicates a manner of adjusting a packet sending time of a data packet of the first service flow, and the packet sending time information of the second service flow indicates a manner of adjusting a packet sending time of a data packet of the second service flow.

10. The method according to claim 9, wherein the method further comprises:
sending a first message to an application server, wherein the first message comprises the packet sending time information of the first service flow and/or the packet sending time information of the second service flow, and the first message is used to notify the application server to adjust the packet sending time of the data packet of the first service flow based on the packet sending time information of the first service flow, and/or adjust the packet sending time of the data packet of the second service flow based on the packet sending time information of the second service flow.

11. The method according to claim 10, wherein
when the first message comprises the packet sending time information of the first service flow, the request message further comprises description information of the first service flow; or
when the first message comprises the packet sending time information of the second service flow, the request message further comprises description information of the second service flow; or
when the first message comprises the packet sending time information of the first service flow and the packet sending time information of the second service flow, the request message further comprises description information of the first service flow and description information of the second service flow, wherein
the description information of the first service flow is a first interface address corresponding to the first service flow, and the first interface address corresponding to the first service flow comprises an address of the first service flow on a transmission server side and/or an address of the first service flow on an application server side; and
a first interface address corresponding to the second service flow comprises an address of the second service flow at a transmission server and/or an address of the second service flow on an application server side, and the description information of the second service flow is the first interface address corresponding to the second service flow.

12. The method according to claim 9, wherein the method further comprises:
adjusting the packet sending time of the data packet of the first service flow based on the packet sending time information of the first service flow; and/or
adjusting the packet sending time of the data packet of the second service flow based on the packet sending time information of the second service flow.

13. The method according to any one of claims 1 to 6, wherein
the packet sending time information of the first service flow comprises a buffer time amount of the first service flow, and the buffer time amount of the first service flow indicates a buffer time of a data packet of the first service flow; and
the packet sending time information of the second service flow comprises a buffer time amount of the second service flow, and the buffer time amount of the second service flow indicates a buffer time of a data packet of the second service flow.

14. The method according to claim 13, wherein the method further comprises:
sending a second message to the transmission client, wherein the second message comprises the buffer time amount of the first service flow and/or the buffer time amount of the second service flow, and the second message is used to notify the transmission client to buffer the data packet of the first service flow based on the buffer time amount of the first service flow, and/or buffer the data packet of the second service flow based on the buffer time amount of the second service flow.

15. The method according to claim 14, wherein
when the second message comprises the buffer time amount of the first service flow, the request message further comprises description information of the first service flow; or
when the second message comprises the buffer time amount of the second service flow, the request message further comprises description information of the second service flow; or
when the second message comprises the buffer time amount of the first service flow and the buffer time amount of the second service flow, the request message further comprises description information of the first service flow and description information of the second service flow, wherein
the description information of the first service flow is a second interface address corresponding to the first service flow, or a first flow identifier corresponding to the first service flow between the transmission server and the transmission client, and the second interface address corresponding to the first service flow comprises an address of the first service flow on a transmission client side and/or an address of the first service flow on a transmission server side; and
the description information of the second service flow is a second interface address corresponding to the second service flow, or a second flow identifier corresponding to the second service flow between the transmission server and the transmission client; and the second interface address corresponding to the second service flow comprises an address of the second service flow on a transmission client and/or an address of the second service flow on a transmission server side.

16. The method according to claim 13, wherein the method further comprises:
buffering the data packet of the first service flow based on the buffer time amount of the first service flow; and/or
buffering the data packet of the second service flow based on the buffer time amount of the second service flow.

17. The method according to claim 1, wherein the communication device is the transmission client; and
the method further comprises:
receiving the first data packet and the second data packet from the transmission server;
obtaining, from the first data packet, a first sending time of the first data packet and obtaining, from the second data packet, a second sending time of the second data packet, wherein the first sending time is a time at which the transmission server sends the first data packet to the transmission client, and the second sending time is a time at which the transmission server sends the second data packet to the transmission client;
recording a first reception time of the first data packet and a second reception time of the second data packet, wherein the first reception time is a time at which the transmission client receives the first data packet, and the second reception time is a time at which the transmission client receives the second data packet; and
determining the first transmission delay based on the first sending time and the first reception time, and determining the second transmission delay based on the second sending time and the second reception time.

18. The method according to claim 17, wherein the method further comprises:
receiving second association information from the transmission server, wherein the second association information indicates an association among multiple service flows between the transmission server and the transmission client, and the multiple service flows between the transmission server and the transmission client comprise the first service flow and the second service flow.

19. The method according to claim 18, wherein
the second association information comprises a second interface address corresponding to the first service flow, a second interface address corresponding to the second service flow, and a second association indication, and the second association indication indicates that there is an association between the first service flow and the second service flow; or
the second association information comprises a correspondence between a second interface address corresponding to the first service flow and a second association identifier, and comprises a correspondence between a second interface address corresponding to the second service flow and the second association identifier, wherein
the second interface address corresponding to the first service flow comprises an address of the first service flow on a transmission client side and/or an address of the first service flow on a transmission server side; and the second interface address corresponding to the second service flow comprises an address of the second service flow on a transmission client and/or an address of the second service flow on a transmission server side.

20. The method according to claim 18 or 19, wherein the method further comprises:
receiving a reception time recording indication from the transmission server, wherein the reception time recording indication indicates to record a reception time of a data packet of the first service flow and a reception time of a data packet of the second service flow.

21. The method according to any one of claims 16 to 20, wherein the method further comprises:
sending the QoS requirement of the first service flow and/or the QoS requirement of the second service flow to the transmission server.

22. The method according to any one of claims 16 to 20, wherein the packet sending time information of the first service flow indicates a manner of adjusting a packet sending time of a data packet of the first service flow, and the packet sending time information of the second service flow indicates a manner of adjusting a packet sending time of a data packet of the second service flow.

23. The method according to claim 22, wherein the method further comprises:
sending the packet sending time information of the first service flow and/or the packet sending time information of the second service flow to the transmission server.

24. The method according to any one of claims 16 to 20, wherein
the packet sending time information of the first service flow comprises a buffer time amount of the first service flow, and the buffer time amount of the first service flow indicates a buffer time of a data packet of the first service flow; and
the packet sending time information of the second service flow comprises a buffer time amount of the second service flow, and the buffer time amount of the second service flow indicates a buffer time of a data packet of the second service flow.

25. The method according to claim 24, wherein the method further comprises:
sending the buffer time amount of the first service flow and/or the buffer time amount of the second service flow to the transmission server.

26. The method according to claim 24, wherein the method further comprises:
buffering the data packet of the first service flow based on the buffer time amount of the first service flow; and/or
buffering the data packet of the second service flow based on the buffer time amount of the second service flow.

27. A communication apparatus, comprising a processor and an interface circuit, wherein the processor is configured to communicate with another apparatus via the interface circuit, and perform the method according to any one of claims 1 to 26.

28. A computer program product, wherein the computer program product comprises instructions; and when the instructions are run on a processor, the processor is caused to perform the method according to any one of claims 1 to 26.

29. A computer-readable storage medium, wherein the storage medium stores a computer program or instructions; and when the computer program or the instructions are executed by a communication apparatus, the method according to any one of claims 1 to 26 is implemented.
